(19) Europäisches Patentamt
European Patent Office
Office européen des brevets

(11) **EP 4 043 318 B1**

(12) **EUROPEAN PATENT SPECIFICATION**

(45) Date of publication and mention
of the grant of the patent:
**30.04.2025 Bulletin 2025/18**

(21) Application number: **20874341.9**

(22) Date of filing: **29.05.2020**

(51) International Patent Classification (IPC):
**B62D 5/04** *(2006.01)* **H02P 29/024** *(2016.01)*

(52) Cooperative Patent Classification (CPC):
**B62D 5/0487; B62D 5/046; H02H 7/122;
H02P 29/024; H02P 29/0243;** H02P 6/08

(86) International application number:
**PCT/CN2020/093381**

(87) International publication number:
**WO 2021/068526 (15.04.2021 Gazette 2021/15)**

(54) **CONTROLLER CIRCUIT OF ELECTRIC POWER STEERING SYSTEM, AND SAMPLING AND CONTROL METHOD THEREFOR**

STEUERSCHALTUNG EINER ELEKTRISCHEN SERVOLENKUNG UND VERFAHREN ZUR ABTASTUNG UND STEUERUNG DAFÜR

CIRCUIT DE CONTRÔLEUR DE SYSTÈME DE DIRECTION ASSISTÉE ÉLECTRIQUE, ET PROCÉDÉ D'ÉCHANTILLONNAGE ET DE COMMANDE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2019 CN 201910963183
11.10.2019 CN 201921696089 U**

(43) Date of publication of application:
**17.08.2022 Bulletin 2022/33**

(73) Proprietor: **Bosch Huayu Steering Systems Co., Ltd.
Shanghai 201821 (CN)**

(72) Inventors:
• **GONG, Delin**
  **Shanghai 201821 (CN)**
• **CHA, Yiwei**
  **Shanghai 201821 (CN)**
• **WU, Xiaqing**
  **Shanghai 201821 (CN)**
• **JING, Caiyun**
  **Shanghai 201821 (CN)**
• **ZHANG, Tonglei**
  **Shanghai 201821 (CN)**

(74) Representative: **Walaski, Jan Filip
Venner Shipley LLP
200 Aldersgate
London EC1A 4HD (GB)**

(56) References cited:
**EP-A1- 2 731 257         WO-A1-2019/106348
CN-A- 101 052 372      CN-A- 104 506 091
CN-A- 105 629 122      CN-A- 107 707 159
JP-A- 2008 273 391      JP-A- 2012 218 693
US-A1- 2016 164 447**

**Description**

**Technical field**

The present invention relates to the control technical field of an electric power steering system, in particular to a controller circuit of an electric power steering system, and a sampling and control method thereof.

**Background technology**

The electric power steering system has the advantages of small size, light weight, simple structure, high efficiency, energy saving and environmental protection, and flexible control methods and so on, which has become an indispensable part of automobiles. The controller circuit design and its control method of the electric power steering system are the core of the electric power steering system, the suppliers of the electric power steering system or controller at home and abroad have their own controller circuit design and control method, and the core functions mainly realized are the control of the booster motor and the functional safety design of the steering system.
As the electric power steering system controller has relatively high requirements for safety performance, before the controller works normally, the three-phase bridge power-on fault must be diagnosed, specifically the switch of each field-effect transistor in the three-phase bridge module, after ensuring that each switch is normal, the controller can start the three-phase bridge driving chip to carry out PWM (Pulse width modulation) control on the three-phase bridge, so that the motor can generate a boosted power. However, the existing electric power steering system controller circuit is not accurate enough for the diagnosis of the field-effect transistor of the three-phase bridge module. At the same time, when the motor boosted power needs to be cut off, it is easy to impact or even damage the phase separation switch field effect transistor on the controller. In addition, when three-phase current sampling is performed in the current motor control, the sampling precision is relatively poor when the current value flowing through the motor changes in a larger range.
The control circuit of the existing booster motor cannot quickly and simply control the switch and the boosted power input of the motor in real time, and the protection and diagnosis mechanism for the controller is not comprehensive enough, therefore, it is very necessary to design a controller circuit of an electric power steering system, and a sampling and control method thereof, in which a variety of measures are used to improve the functional safety level of the electric power steering system; the control performance of the booster motor is more stable; and the protection and diagnosis mechanism for the controller is more comprehensive, which makes the controller safer and more reliable, and not easily damaged. CN 105 629 122 A discloses a circuit and diagnostic method for static diagnosis of a three-phase full-bridge inverter. EP 2 731 257 A1 discloses a motor control device.

**Summary of the invention**

The technical problem to be solved by the present invention is to overcome the defect that the diagnosis of the field-effect transistor of the three-phase bridge module in the electric power steering system controller circuit in the prior art is not accurate enough, and to provide a controller circuit of an electric power steering system, and a sampling and control method thereof which can easily and conveniently perform the three-phase bridge power-on fault diagnosis.
According to the invention, there is provided a controller circuit according to claim 1, a sampling method according to claim 4, a controller circuit of an electric power steering system according to claim 6, and a control method according to claim 10. Preferred features are set out in the dependent claims.
The first aspect of the present invention provides a controller circuit of an electric power steering system, including a three-phase electric motor, a micro-controller, a three-phase bridge module, and a three-phase electric motor phase voltage state feedback circuit;

the micro-controller includes at least three analog-to-digital conversion voltage collection ends;
the three-phase electric motor includes a U-phase end, a V-phase end and a W-phase end;
the three-phase bridge module includes a U-phase upper-bridge field-effect transistor, a U-phase lower-bridge field-effect transistor, a V-phase upper-bridge field-effect transistor, a V-phase lower-bridge field-effect transistor, a W-phase upper-bridge field-effect transistor, and a W-phase lower-bridge field-effect transistor;
the three-phase electric motor phase voltage state feedback circuit includes three voltage dividing circuits, each of the voltage dividing circuits includes an original voltage end, a voltage dividing output end, and a ground end, and the three original voltage ends are one by one correspondingly connected with the U-phase end, the V-phase end and the W-phase end;
the three voltage dividing output ends are electrically connected with the three analog-to-digital conversion voltage collection ends in a one-to-one correspondence;
the voltage dividing circuit is used to divide the phase voltage of the three-phase electric motor to be within the voltage range supported by the analog-to-digital conversion voltage collection end;

the U-phase end is electrically connected with the source electrode of the U-phase upper-bridge field-effect transistor, the drain electrode of the U-phase lower-bridge field-effect transistor, and the original voltage end of the corresponding voltage dividing circuit;

the V-phase end is electrically connected with the source electrode of the V-phase upper-bridge field-effect transistor, the drain electrode of the V-phase lower-bridge field-effect transistor, and the original voltage end of the corresponding voltage dividing circuit;

the W-phase end is electrically connected with the source electrode of the W-phase upper-bridge field-effect transistor, the drain electrode of the W-phase lower-bridge field-effect transistor, and the original voltage end of the corresponding voltage dividing circuit;

the three-phase electric motor phase voltage state feedback circuit further includes three pull-up circuits, and the three pull-up circuits are one by one correspondingly used for the pull-up of the U-phase end, the V-phase end, and the W-phase end;

the micro-controller is used to perform power-on fault diagnosis for the U-phase upper-bridge field-effect transistor and/or the U-phase lower-bridge field-effect transistor, by controlling the on or off of the U-phase upper-bridge field-effect transistor and the U-phase lower-bridge field-effect transistor respectively, and based on the voltage collected by the corresponding analog-to-digital conversion voltage collection end; the micro-controller is also used to perform power-on fault diagnosis for the V-phase upper-bridge field-effect transistor and/or the V-phase lower-bridge field-effect transistor, by controlling the on or off of the V-phase upper-bridge field-effect transistor and the V-phase lower-bridge field-effect transistor respectively, and based on the voltage collected by the corresponding analog-to-digital conversion voltage collection end; the micro-controller is also used to perform power-on fault diagnosis for the W-phase upper-bridge field-effect transistor and/or the W-phase lower-bridge field-effect transistor, by controlling the tuning on or off of the W-phase upper-bridge field-effect transistor and the W-phase lower-bridge field-effect transistor respectively, and based on the voltage collected by the corresponding analog-to-digital conversion voltage collection end.

In the present solution, in parallel of the three-phase electric motor phase voltage state feedback circuit feeding back the real phase voltage of the three-phase electric motor in real time for assisting motor control, the three-phase electric motor phase voltage state feedback circuit realizes power-on fault diagnosis for the field-effect transistors in the three-phase bridge module through three pull-up circuits, which improves the diagnosis coverage rate of the field-effect transistor.

Preferably, the voltage at the voltage dividing output end corresponding to the U-phase end is a U-phase feedback voltage;

the micro-controller is used to control both the U-phase upper-bridge field-effect transistor and the U-phase lower-bridge field-effect transistor to turn off, then obtain the U-phase feedback voltage and use it as a first U-phase feedback voltage, when the first U-phase feedback voltage is equal to a U-phase first default value, determine that the U-phase upper-bridge field-effect transistor has a short circuit fault, and when the first U-phase feedback voltage is equal to 0, determine that the U-phase lower-bridge field-effect transistor has a short circuit fault, when the first U-phase feedback voltage is not equal to the U-phase first default value and not equal to 0 and not equal to a U-phase second default value, determine that the U-phase upper-bridge field-effect transistor and the U-phase Phase-down bridge field-effect transistor are in an unexpected status;

when the first U-phase feedback voltage is equal to the U-phase second default value, the micro-controller is also used to control the U-phase upper-bridge field-effect transistor to turn on, and at the same time, control the U-phase lower-bridge field-effect transistor to turn off, then obtain the U-phase feedback voltage and use it as a second U-phase feedback voltage, and when the second U-phase feedback voltage is not equal to the U-phase first default value, determine that the U-phase upper-bridge field-effect transistor has a broken circuit fault;

when the second U-phase feedback voltage is equal to the U-phase first default value, the micro-controller is also used to control the U-phase upper-bridge field-effect transistor to turn off, and at the same time, control the U-phase lower-bridge field-effect transistor to turn on, then obtain the U-phase feedback voltage and use it as a third U-phase feedback voltage, and when the third U-phase feedback voltage is equal to 0, determine that both the U-phase upper-bridge field-effect transistor and the U-phase lower-bridge field-effect transistor work normally, when the third U-phase feedback voltage is not equal to 0, determine that the U-phase lower-bridge field-effect transistor has a broken circuit fault;

the voltage at the voltage dividing output end corresponding to the V-phase end is a V-phase feedback voltage;

the micro-controller is used to control both the V-phase upper-bridge field-effect transistor and the V-phase lower-bridge field-effect transistor to turn off, then obtain the V-phase feedback voltage and use it as a first V-phase feedback voltage, when the first V-phase feedback voltage is equal to a V-phase first default value, determine that the V-phase upper-bridge field-effect transistor has a short circuit fault, and when the first V-phase feedback voltage is equal to 0, determine that the V-phase lower-bridge field-effect transistor has a short circuit fault, when the first V-phase feedback voltage is not equal to the V-phase first default value and not equal to 0 and not equal to a V-phase second default value, determine that the V-phase upper-bridge field-effect transistor and the V-phase lower-bridge field-effect transistor are in an unexpected status;

when the first V-phase feedback voltage is equal to the V-phase second default value, the micro-controller is also used to control the V-phase upper-bridge field-effect transistor to turn on, and at the same time, control the V-phase lower-bridge field-effect transistor to turn off, then obtain the V-phase feedback voltage and use it as a second V-phase feedback voltage, and when the second V-phase feedback voltage is not equal to the V-phase first default value, determine that the V-phase upper-bridge field-effect transistor has a broken circuit fault;

when the second V-phase feedback voltage is equal to the V-phase first default value, the micro-controller is also used to control the V-phase upper-bridge field-effect transistor to turn off, and at the same time, control the V-phase lower-bridge field-effect transistor to turn on, then obtain the V-phase feedback voltage and use it as a third V-phase feedback voltage, and when the third V-phase feedback voltage is equal to 0, determine that both the V-phase upper-bridge field-effect transistor and the V-phase lower-bridge field-effect transistor work normally, when the third V-phase feedback voltage is not equal to 0, determine that the V-phase lower-bridge field-effect transistor has a broken circuit fault;

the voltage at the voltage dividing output end corresponding to the W-phase end is a W-phase feedback voltage; the micro-controller is used to control both the W-phase upper-bridge field-effect transistor and the W-phase lower-bridge field-effect transistor to turn off, then obtain the W-phase feedback voltage and use it as a first W-phase feedback voltage, when the first W-phase feedback voltage is equal to a W-phase first default value, determine that the W-phase upper-bridge field-effect transistor has a short circuit fault, and when the first W-phase feedback voltage is equal to 0, determine that the W-phase lower-bridge field-effect transistor has a short circuit fault, when the first W-phase feedback voltage is not equal to the W-phase first default value and not equal to 0 and not equal to a W-phase second default value, determine that the W-phase upper-bridge field-effect transistor and the W-phase lower-bridge field-effect transistor are in an unexpected status;

when the first W-phase feedback voltage is equal to the W-phase second default value, the micro-controller is also used to control the W-phase upper-bridge field-effect transistor to turn on, and at the same time, control the W-phase lower-bridge field-effect transistor to turn off, then obtain the W-phase feedback voltage and use it as a second W-phase feedback voltage, and when the second W-phase feedback voltage is not equal to the W-phase first default value, determine that the W-phase upper-bridge field-effect transistor has a broken circuit fault;

when the second W-phase feedback voltage is equal to the W-phase first default value, the micro-controller is also used to control the W-phase upper-bridge field-effect transistor to turn off, and at the same time, control the W-phase lower-bridge field-effect transistor to turn on, then obtain the W-phase feedback voltage and use it as a third W-phase feedback voltage, and when the third W-phase feedback voltage is equal to 0, determine that both the W-phase upper-bridge field-effect transistor and the W-phase lower-bridge field-effect transistor work normally, when the third W-phase feedback voltage is not equal to 0, determine that the W-phase lower-bridge field-effect transistor has a broken circuit fault.

The present solution further defines the specific way that the micro-controller performs power-on fault diagnosis on the field-effect transistor in the three-phase bridge module, which realizes the accurate diagnosis for each field-effect transistor in the three-phase bridge module.

Preferably, the pull-up circuit corresponding to the U-phase end includes a first resistor, the voltage dividing circuit corresponding to the U-phase end includes a second resistor and a third resistor, and one end of the first resistor is electrically connected with the vehicle power supply, and both of the other end of the first resistor and one end of the second resistor are electrically connected with the original voltage end of the voltage dividing circuit corresponding to the U-phase end, and both of the other end of the second resistor and one end of the third resistor are electrically connected with the voltage dividing output end of the voltage dividing circuit corresponding to the U-phase end, and the other end of the third resistor is grounded;

the pull-up circuit corresponding to the V-phase end includes a fourth resistor, and the voltage dividing circuit corresponding to the V-phase end includes a fifth resistor and a sixth resistor, and one end of the fourth resistor is electrically connected with the vehicle power supply, and both of the other end of the fourth resistor and one end of the fifth resistor are electrically connected with the original voltage end of the voltage dividing circuit corresponding to the V-phase end, and both of the other end of the fifth resistor and one end of the sixth resistor are electrically connected with the voltage dividing output end of the voltage dividing circuit corresponding to the V-phase end, and the other end of the sixth resistor is grounded;

the pull-up circuit corresponding to the W-phase end includes a seventh resistor, the voltage dividing circuit corresponding to the W-phase end includes a eighth resistor and a ninth resistor, and one end of the seventh resistor is electrically connected with the vehicle power supply, and both of the other end of the seventh resistor and one end of the eighth resistor are electrically connected with the original voltage end of the voltage dividing circuit corresponding to the W-phase end, and both of the other end of the eighth resistor and one end of the ninth resistor are electrically connected with the voltage dividing output end of the voltage dividing circuit corresponding to the W-phase end, and the other end of the ninth resistor is grounded.

Preferably, the controller circuit further includes a three-phase separation module, the three-phase separation module is connected in series between the three-phase electric motor and the three-phase bridge module, and the three-phase separation module is used to cut off the connection between the three-phase electric motor and the three-phase bridge module when the steering system controller fails.

Preferably, the three-phase separation module includes a U-phase separation field-effect transistor, a V-phase separation field-effect transistor, and a W-phase separation field-effect transistor; the controller circuit also includes a motor freewheeling circuit; the motor freewheeling circuit includes a U-phase diode, a V-phase diode, and a W-phase diode; and the anode of the U-phase diode, the anode of the V-phase diode, and the anode of the W-phase diode are all grounded;

the grid electrode of the U-phase separation field-effect transistor is electrically connected with the cathode of the U-phase diode, the source electrode of the U-phase separation field-effect transistor is electrically connected with the U-phase end, and the drain electrode of the U-phase separation field-effect transistor is electrically connected with the source electrode of the U-phase upper-bridge field-effect transistor;
the grid electrode of the V-phase separation field-effect transistor is electrically connected with the cathode of the V-phase diode, the source electrode of the V-phase separation field-effect transistor is electrically connected with the V-phase end, and the drain electrode of the V-phase separation field-effect transistor is electrically connected with the source electrode of the V-phase upper-bridge field-effect transistor;
the grid electrode of the W-phase separation field-effect transistor is electrically connected with the cathode of the W-phase diode, the source electrode of the W-phase separation field-effect transistor is electrically connected with the W-phase end, and the drain electrode of the W-phase separation field-effect transistor is electrically connected with the source electrode of the W-phase upper-bridge field-effect transistor.

In the present solution, when the electric power steering system controller needs to cut off the motor boosted power, that is, turn off each phase separation field-effect transistor in the three-phase separation module, as the energy in the three-phase electric motor cannot disappear immediately, it is easy to damage the related components in the circuit. In the present solution, the diodes of the three phases in the motor freewheeling circuit are set at the drive end of the corresponding phase separation field-effect transistor transistor to provide the drive current for each phase separation field-effect transistor to turn on, and turn on the phase separation field-effect transistor when the negative voltage of the three-phase electric motor is generated, to form a freewheeling channel, which provides a way to release the energy of the three-phase electric motor and avoid damaging the related components in the circuit.

The second aspect of the present invention provides a sampling method for the three-phase phase current of the controller circuit of an electric power steering system,

the controller circuit includes a three-phase electric motor, a micro-controller, a three-phase bridge module, a three-phase phase current sampling circuit module, and a three-phase bridge driving chip;
the micro-controller is used to generate a PWM control signal and transmit it to the three-phase bridge driving chip;
the three-phase bridge driving chip is used to control the on or off of each field-effect transistor in the three-phase bridge module according to the PWM control signal;
the sampling method includes the following steps:

the three-phase phase current sampling circuit module collects the phase voltage signals of the lower-bridge arms of at least two phases in the three-phase bridge module, and transmits the phase voltage signals to the three-phase bridge driving chip;
a differential operational amplifier inside the three-phase bridge driving chip amplifies the phase voltage signal to obtain the amplified phase voltage signal and transmit it to the micro-controller;
the analog-to-digital converter in the micro-controller converts the amplified phase voltage signal into a digital voltage;
the micro-controller performs phase current sampling calculation based on the digital voltage to obtain the actual value of the phase current, and the micro-controller uses the actual value of the phase current as a feedback signal of the motor current control;

wherein, the micro-controller sets the gain value and the bias voltage value of the differential operational amplifier in the current cycle according to the actual value of the phase current in the previous cycle of the current cycle and/or the duty ratio of the PWM control signal in the previous cycle of the current cycle, to control the sampling precision of the phase current of the three-phase electric motor.

The present solution achieves a phase current sampling method that can keep the three-phase current sampling at a higher precision under various currents with different magnitudes, and solves the problem that in the existing motor control, the fixed gains and the bias voltage are used in all the three-phase current sampling, high-precision sampling can only be achieved within a certain current interval when the current value flowing through the motor changes within a relatively large range, and the accuracy is poor when sampling outside this interval.

In the present solution, based on the characteristic that the motor current does not dramatically change but slowly changes, the gain value and the bias voltage value of the differential operational amplifier in the current cycle is set according to the actual value of the phase current of the previous cycle of the current cycle and/or the duty ratio of the PWM control signal of the previous cycle of the current cycle, to make the gain value and bias voltage value match the current range of the current measured, thereby control the phase current of the three-phase electric motor to maintain a high sampling accuracy, and then the motor control performance of power steering system is improved.

Preferably, the sampling method is implemented based on the controller circuit of the electric power steering system aforementioned in the first aspect.

Preferably, the three-phase phase current sampling circuit module includes a current sampling resistor for collecting the phase voltage signals of the lower-bridge arms of the two phases in the three-phase bridge module, and the collected phase voltage signals are a first phase voltage signal and a second phase voltage signal respectively, the actual value of the phase current corresponding to the first phase voltage signal is the actual value of the first phase current, and the actual value of the phase current corresponding to the second phase voltage signal is the actual value of the second phase current;

the sampling method further includes the following steps:

calculate the value of the phase current vector length Is according to the following formula,

$$I_s = \sqrt{\frac{4}{3}\left(I_{P1}{}^2 + I_{P2}{}^2 + I_{P1} \times I_{P2}\right)};$$

wherein, $I_{P1}$ represents the actual value of the first phase current and $I_{P2}$ represents the actual value of the second phase current;

the step that setting the gain value and the bias voltage value of the differential operational amplifier in the current cycle according to the actual value of the phase current in the previous cycle of the current cycle and/or the duty ratio of the PWM control signal in the previous cycle of the current cycle includes the following steps:

partition the measured current according to the phase current vector length Is of the previous cycle of the current cycle and/or the duty ratio of the PWM control signal of the previous cycle of the current cycle;
set the gain value and the bias voltage value of the differential operational amplifier of the current cycle according to the partition where the measured current is located.

In the present solution, based on the characteristic that the motor current does not dramatically change but slowly changes, perform judgment according to the phase current vector length Is of the previous cycle of the current cycle and/or the internal where the duty ratio of the PWM control signal of the previous cycle of the current cycle is located, that is, make the gain value and the bias voltage value match the range of the present measured current by setting the gain value and the bias voltage value of the corresponding differential operational amplifier according to the interval, thereby control the phase current of the three-phase electric motor to keep a relatively high sampling precision, and then improve the motor control performance of the power steering system.

Preferably, the step of setting the gain value and the bias voltage value of the differential operational amplifier of the current cycle according to the partition where the measured current is located includes:

the micro-controller sets the gain value and the bias voltage value of the differential operational amplifier in the current cycle through SPI (Serial Peripheral Interface) instructions according to the partition where the measured current is located.

In the present solution, the gain value and bias voltage value of the differential operational amplifier are modified through SPI instructions in each control cycle of the analog-to-digital converter for different regions, so as to control the sampling precision of the phase current of the three-phase electric motor.

The third aspect of the present invention provides a controller circuit of an electric power steering system, including a micro-controller, a power management chip, a power interface filter circuit module, a DC voltage stabilizer module, a three-phase bridge driving chip, a three-phase separation circuit driving chip, a CAN (Controller Area Network) transceiver, and a permanent magnet synchronous motor, one end of the battery is grounded, and the other end of the battery is connected in series with a fuse then divided into two channels, which are respectively connected with the power input port of the power management chip and the power input port of the power interface filter circuit module, and the power output port of the power interface filter circuit module is divided into two channels, which are respectively connected with the power input port of the three-phase bridge driving chip and the current input port of the DC voltage stabilizer module, and the current output of the DC voltage stabilizer module is connected to the current input port of the three-phase bridge module, the $V_{MCU}$ port of the power management chip is connected with the power input port of the micro-controller, and the SPI port of the power management chip is connected with the SPI port of the micro-controller, and the SPI port of the micro-controller is also connected with the SPI port of the three-phase bridge driving chip and the SPI port of the motor rotation angle position sensor, the CAN port of the micro-controller is connected with the CAN transceiver, the control signal output port of the power management chip and the control signal output port of the micro-controller are both connected with the signal input port of the three-phase separation circuit driving chip, the signal output port of the three-phase separation circuit driving chip is connected with the control signal receiving port of the three-phase separation module, and the power input port of the three-phase bridge module is connected with the power input port of the three-phase phase current sampling circuit module and the power input port of the three-phase bridge driving chip, the signal output port of the three-phase bridge module is connected with the signal input port of the three-phase separation module, and the signal output port of the three-phase separation module is connected with the signal input port of the permanent magnet synchronous motor, and the signal output port of the permanent magnet synchronous motor is connected with the motor rotation angle position sensor; the three-phase phase current sampling circuit module is also connected with the three-phase current signal input port of the three-phase bridge driving chip.

A three-phase electric motor phase voltage state feedback circuit is also arranged and connected with between the three-phase bridge module, the three-phase bridge driving chip and the micro-controller.

The three-phase separation module is also connected with a low-power diode, so that a motor freewheeling circuit is formed among the three-phase bridge module, the three-phase separation module, and the low-power diode.

The specific connection methods of the filter circuit in the power interface filter circuit module are as follows: the VBAT port is divided into nine channels, which are respectively connected with one end of the capacitor C1, one end of the capacitor C2, one end of the capacitor C3, one end of the capacitor C4, and one end of the capacitor C5, one end of the capacitor C6, one end of the capacitor C7, one end of the capacitor C8, and one end of the inductor L1, the other end of the capacitor C1 is divided into four channels, which are respectively connected with HGND, one end of the capacitor C14, the other end of the capacitor C2, and one end of the capacitor C15, the other end of the capacitor C14 is joined with the other end of the capacitor C15 together then grounded, the other end of the capacitor C3 is divided into eleven channels, which are respectively connected with the ground, the other end of the capacitor C4, the other end of the capacitor C5, the other end of the capacitor C6, the other end of the capacitor C7, the other end of the capacitor C8, one end of the capacitor C9, one end of the capacitor C10, one end of the capacitor C16, one end of the capacitor C17, and one end of the capacitor C18, the other end of the capacitor C9 is divided into six channels, which are respectively connected with the other end of the inductor L1, the other end of the capacitor C10, one end of the capacitor C11, one end of the capacitor C12, one end of the capacitor C13, and the VBAT1 port, the other end of capacitor C16 is connected with HGND1, the other end of the capacitor C17 is connected with HGND2, and the other end of the capacitor C18 is connected with HGND3, and the other end of the capacitor C11, the other end of the capacitor C12, and the other end of the capacitor C13 are joined together then grounded.

The HGND, HGND1, HGND2, and HGND3 are the screw holes on the metal shell.

The specific connection methods of the motor freewheeling circuit are as follows: the VBAT port is divided into three channels, which are respectively connected with the drain electrode of the field-effect transistor Q1, the drain electrode of the field-effect transistor Q2, and the drain electrode of the field-effect transistor Q3, and the source electrode of the field-effect transistor Q1 is divided into two channels, which are respectively connected with the drain electrode of the field-effect transistor Q4 and the drain electrode of the field-effect transistor Q7, the source electrode of field-effect transistor Q7 is connected with the U-phase of the three-phase electric motor, and the gate electrode of the field-effect transistor Q7 is connected with the cathode of the diode D1, the source electrode of the field-effect transistor Q2 is divided into two channels, which are respectively connected with the drain electrode of the field-effect transistor Q8 and the drain electrode of the field-effect transistor Q5, and the gate electrode of the field-effect transistor Q8 is connected with the diode D2, the source electrode of the field-effect transistor Q8 is connected with the V-phase of the three-phase electric motor, and the source electrode of the field-effect transistor Q3 is divided into two channels, which are respectively connected with the drain electrode of the field-effect transistor Q6 and the drain electrode of the field-effect transistor Q9, the gate electrode of the field-effect transistor Q9 is connected with the diode D3, the source electrode of the field-effect transistor Q9 is connected with the V-phase of the three-phase electric motor, the source electrode of the field-effect transistor Q4, the source electrode of the field-effect transistor Q5, and the source electrode of the field-effect transistor Q6 are joined together then grounded, the anode of the diode D1, the anode of the diode D2, and the anode of the diode D3 are joined together then grounded.

The specific connection methods of the three-phase electric motor phase voltage state feedback circuit are as follows: the U-phase of the three-phase electric motor is divided into four channels, which are respectively connected with the source electrode of the field-effect transistor Q1, the drain electrode of the field-effect transistor Q4, one end of the resistor R1, and one end of the resistor R2, the V-phase of the three-phase electric motor is divided into four channels, which are respectively connected with the source electrode of the field-effect transistor Q2, the drain electrode of the field-effect transistor Q5, one end of the resistor R4, and one end of the resistor R5, the W-phase of the three-phase electric motor is divided into four channels, which are respectively connected with the source electrode of the field-effect transistor Q3, the drain electrode of the field-effect transistor Q6, one end of the resistor R7, one end of the resistor R8, the drain electrode of the field-effect transistor Q1, the drain electrode of the field-effect transistor Q2, the drain electrode of the field-effect transistor Q3 are joined together then connected with VBAT, the source electrode of the field-effect transistor Q4, the source electrode of the field-effect transistor Q5, and the source electrode of the field-effect transistor Q6 are joined together then grounded, the other end of the resistor R1, the other end of the resistor R4, the other end of the resistor R7 are connected with VBAT, the other end of the resistor R2 is divided into three channels, which are respectively connected with one end of the resistor R3, one end of the capacitor C1, and the AD1 port of the micro-controller, the other end of the resistor R5 is divided into three channels, which are respectively connected with one end of the resistor R6, one end of the capacitor C2, and the AD2 port of the micro-controller, the other end of the resistor R8 is divided into three channels, which are respectively connected with one end of the resistor R9, one end of the capacitor C3, and the AD3 port of the micro-controller, the other end of the resistor R3 and the other end of the capacitor C1 are joined together then grounded, the other end of the resistor R6 and the other end of the capacitor C2 are joined together then grounded, the other end of the resistor R9 and the other end of the capacitor C3 are joined together then grounded.

The gate electrodes of the field-effect transistors Q1 to Q6 are jointed together then connected with the three-phase bridge driving chip.

The fourth aspect of the present invention provides a control method of the controller circuit in the electric power steering system, which is performed as follows:

S1. pre-set a boost curve or a boost model in the micro-controller;

S2. the micro-controller collects an automobile ignition signal, a vehicle speed signal, a steering wheel torque signal, and a steering wheel rotation angle signal;

S3'. based on the boost curve or the boost model, and according to the relevant data collected in step S2, obtain a current signal setting and a rotational speed signal setting;

S3. the three-phase phase current sampling module performs high-precision sampling for the three phase currents to obtain the actual three phase current signals of the motor, and transmit the signal to the micro-controller; the action in synchronization with this: the motor rotation angle position sensor transmits the actual rotation speed signal of the motor collected synchronously to the micro-controller;

S4. the micro-controller synchronously and respectively transmits the actual three phase current signals of the motor, the actual rotation speed signal of the motor and the corresponding current signal setting, the rotation speed signal setting to the motor current closed-loop controller and the motor rotation speed closed-loop controller inside the micro-controller, and performs a closed-loop control processing to obtain a current control signal and a rotation speed control signal;

S5. transmit the current control signal and the rotation speed control signal to the PWM modulator in the micro-controller to generate a three-phase bridge control signal;

S6. transmit the three-phase bridge control signal to the three-phase bridge driving chip, so as to drive the on/off of the six field-effect transistors in the three-phase bridge module, thereby control the motor to generate the corresponding motor boosted power.

The specific steps of the three-phase current high-precision sampling method described in the step S3 are as follows:

Step 1: obtain the magnitude of the phase current in the previous cycle and the three-phase PWM duty ratio;

Step 2: calculate the actual value $I_{PX}$ of the phase current;

Step 3: calculate the value of the phase current vector length $I_s$;

Step 4: calculate the value of the phase current sampling precision $I_{CS}$;

Step 5: partition the measured current I according to the two conditions of the three-phase PWM duty ratio or the current vector length Is;

Step 6: modify the gain value AV and the bias voltage Voos of the amplifier through the SPI instructions in each control cycle of the analog-to-digital converter for different regions, so as to control the sampling precision of the phase current of the three-phase electric motor;

X in the above steps represents U-phase, V-phase, and W-phase in the three phase current.

The specific calculation method of step 2 is as follows:

(1) determine the sampling resolution 2n of the analog-to-digital converter, respectively measure the sampling value $P_{ADCX}$ of the analog-to-digital converter corresponding to the three phases of U, V, and W, set the reference voltage value $V_{REF}$, and calculate the sampling voltage $V_{CSXO}$ of the analog-to-digital converter, $V_{CSXO} = \dfrac{\frac{P_{ADCX}}{2^{2n}} \times V_{REF}}{}$ .

(2) set the bias voltage Voos, determine the gain value AV of the amplifier, and calculate the voltage $\Delta V_{IOS}$ across the sampling resistor, $\Delta V_{IOS} = \dfrac{V_{CSXO} - V_{OOS}}{AV}$ ;

(3) calculate the sampling current $I_X$ through the sampling resistor according to the resistance value R of the sampling resistor, $I_X = \dfrac{\Delta V_{IOS}}{R}$ ;

(4) measure the zero current $I_{X0}$ of the sampling resistor and the sampling voltage $V_{X0}$ of the analog-to-digital converter under the zero current status, and calculate the phase current sampling value $I_{ps}$ according to the measured value, $I_{ps} = I_X - I_{X0}$;

(5) calculate the actual value $I_{PX}$ of the phase current according to the current bias value $I_{OFF}$ caused by the connection error in the circuit connection and the coefficient change K caused by the external environmental factors, $I_{PX} = K\, I_{ps} + I_{OFF}$.

The specific calculation method of the step 3 is: calculate the current vector length $I_s$ according to the calculated U-phase actual current value $I_{Pu}$ and the calculated W-phase actual current value $I_{PW}$,

$$I_s = \sqrt{\frac{4}{3}\left(I_{PU}^2 + I_{PW}^2 + I_{PU} \times I_{PW}\right)}$$ .

The specific calculation method of the step 4 is: firstly, calculate the sampling precision of single-phase current $I_{CX} = \dfrac{I_X \text{resolution}}{I_{ps}} = \dfrac{V_{REF}}{I_{ps}*R*AV*2^{2n}}$ , wherein, $I_{ps}$ is the phase current sampling value, and $I_X$ resolution is the $I_X$ unit value collected as the minimum unit; secondly, calculate the sampling precision $I_{CS}$ of the current vector length $I_s$, $I_{CS} = \dfrac{I_s \text{ resolution}}{I} = \dfrac{2V_{REF}}{I*R*AV*2^{2n}}$ , in this formula, I is the current range to be measured, and the resolution $I_s$ is the unit value of $I_s$ collected as the minimum unit.

The positive progressive effect of the present invention is that: compared with the prior art, the three-phase electric motor phase voltage state feedback circuit in the present invention timely feeds back the true phase voltage of the three-phase electric motor for assisting the motor control, and at the same time, achieves the accurate diagnosis for each field-effect transistor in the three-phase bridge module by the three pull-up circuits, and improves the diagnosis coverage of the field-effect transistor.

Further, in the present invention, the diodes of three phases in the motor freewheeling circuit are set at the drive end of the corresponding phase separation field-effect transistor, and when the controller of the electric power steering system needs to cut off the motor boosted power, provides a driving current for each phase separation field-effect transistor to turn on, and turns on the phase separation field-effect transistor when the negative voltage is generated in the three-phase electric motor, to form a freewheeling channel, which provides a way to release the energy of the three-phase electric motor and avoid damaging related components in the circuit.

The present solution further achieves a phase current sampling method that can keep the three-phase current sampling at a relatively high precision under various currents with different magnitudes, and solves the problem that in the existing motor control, uses a fixed gain and bias voltage in all the three phases current sampling, high-precision sampling can only be achieved within a certain current interval when the current value flowing through the motor changes in a relatively large range, and the precision is poor when sampling outside this interval.

The positive progressive effect of the present invention is: compared with the prior art, the present invention applies the latest generation motor rotation angle position sensor, which greatly improves the control performance of the motor; applies a three-phase separation circuit to make SCU (Steering Control Unit) can ensure to cut off the motor boosted power under a fault state, and the safety of the steering system is greatly improved, and the present invention can reduce the failure rate of the SCU to below 500 FIT (FIT, a failure rate unit).

## Description of the drawings

FIG. 1 is a schematic diagram of the connection of the controller circuit of the electric power steering system in the embodiment 1 of the present invention.

FIG. 2 is a schematic diagram of the connection of the controller circuit of the electric power steering system in the embodiment 2 of the present invention.

FIG. 3 is a schematic diagram of the circuit layout in the embodiment 4 of the present invention.

FIG. 4 is a schematic diagram of the connection of the power interface filter circuit in the embodiment 4 of the present invention.

FIG. 5 is a schematic diagram of the connection of the motor freewheeling circuit in the embodiment 4 of the present invention.

FIG. 6 is a schematic diagram of the operation when the U-phase current flows into the motor in the motor freewheeling circuit in the embodiment 4 of the present invention.

FIG. 7 is a schematic diagram of the operation when the U-phase current flows out of the motor in the motor freewheeling circuit in the embodiment 4 of the present invention.

FIG. 8 is a schematic diagram of the connection of the three-phase electric motor phase voltage state feedback circuit in the embodiment 4 of the present invention.

FIG. 9 is a schematic diagram of the judgment process for the power-on failure of the three-phase electric motor phase voltage state feedback circuit in the embodiment 4 of the present invention.

FIG. 10 is a schematic diagram of the control method of the controller circuit of the electric power steering system in the embodiment 4 of the present invention.

## Specific embodiments

The present invention will be further described by way of the embodiments below, but the present invention is not limited to the scope of the embodiments.

## Embodiment 1

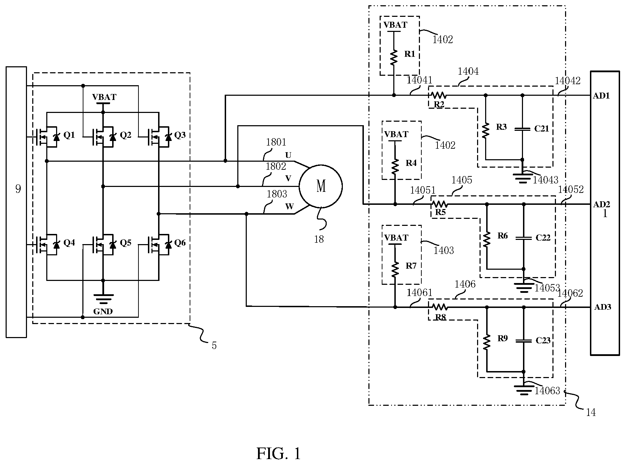

As shown in Figure 1, this embodiment provides a controller circuit of an electric power steering system, which includes a three-phase electric motor 18, a micro-controller 1, a three-phase bridge module 5, a three-phase bridge driving chip 9 and a three-phase electric motor phase voltage state feedback circuit 14. The three-phase electric motor 18 includes a U-phase end 1801, a V-phase end 1802 and a W-phase end 1803. The micro-controller 1 includes at least three analog-to-digital conversion voltage collection ends, which are U-phase analog-to-digital conversion voltage collection end AD1, V-phase analog-to-digital conversion voltage collection end AD2, and W-phase analog-to-digital conversion voltage collection end AD3 respectively. The three-phase bridge module 5 includes U-phase upper-bridge field-effect transistor Q1, U-phase lower-bridge field-effect transistor Q4, V-phase upper-bridge field-effect transistor Q2, V-phase lower-bridge field-effect transistor Q5, W-phase upper-bridge field-effect transistor Q3 and W-phase lower-bridge field-effect transistor Q6.

The three-phase electric motor phase voltage state feedback circuit 14 includes three voltage dividing circuits, namely, U-phase voltage dividing circuit 1404, V-phase voltage dividing circuit 1405, and W-phase voltage dividing circuit 1406. Each voltage dividing circuit includes an original voltage end, a voltage dividing output end, and a grounding end, the three original voltage ends are one by one correspondingly connected with the U-phase end 1801, the V-phase end 1802, and the W-phase end 1803. Specifically, the U-phase voltage dividing circuit 1404 includes a U-phase original voltage end 14041, a U-phase voltage dividing output end 14042, and a U-phase grounding end 14043; the V-phase voltage dividing circuit 1405 includes a V-phase original voltage end 14051 and a V-phase voltage dividing output end 14052 and the V-phase grounding end 14053; the W-phase voltage dividing circuit 1406 includes a W-phase original voltage end 14061, a W-phase voltage dividing output end 14062 and a W-phase grounding end 14063.

The three voltage dividing output ends are electrically connected with the three analog-to-digital conversion voltage collection ends in a one-to-one correspondence; that is, the U-phase voltage dividing output end 14042 is electrically connected with the U-phase analog-to-digital conversion voltage collection end AD1, and the V-phase voltage dividing output end 14052 is electrically connected with the V-phase analog-to-digital conversion voltage collection end AD2, and the W-phase voltage dividing output end 14062 is electrically connected with the W-phase analog-to-digital conversion voltage collection end AD3. The voltage dividing circuit is used to divide the phase voltage of the three-phase electric motor 18 to be within the voltage range supported by the analog-to-digital conversion voltage collection end.

The U-phase end 1801 is electrically connected with the source electrode of the U-phase upper-bridge field-

effect transistor Q1, the drain electrode of the U-phase lower-bridge field-effect transistor Q4, and the original voltage end of the corresponding voltage dividing circuit, that is, the U-phase original voltage end 14041.

The V-phase end 1802 is electrically connected with the source electrode of the V-phase upper-bridge field-effect transistor Q2, the drain electrode of the V-phase lower-bridge field-effect transistor Q5, and the original voltage end of the corresponding voltage dividing circuit, that is, the V-phase original voltage end 14051.

The W-phase end 1803 is electrically connected with the source electrode of the W-phase upper-bridge field-effect transistor Q3, the drain electrode of the W-phase lower-bridge field-effect transistor Q6, and the original voltage end of the corresponding voltage dividing circuit, that is, the W-phase original voltage end 14061.

The three-phase electric motor phase voltage state feedback circuit 14 further includes three pull-up circuits, that is, a U-phase pull-up circuit 1401, a V-phase pull-up circuit 1402, and a W-phase pull-up circuit 1403. The three pull-up circuits are used to pull up the U-phase end 1801, the V-phase end 1802, and the W-phase end 1803 in a one-to-one correspondence; that is, the U-phase pull-up circuit 1401 is used to pull up the U-phase end 1801, and the V-phase pull-up circuit 1402 is used to pull up the V-phase end 1802, and the W-phase pull-up circuit 1403 is used to pull up the W-phase end 1803.

The micro-controller 1 is used to perform power-on fault diagnosis for the U-phase upper-bridge field-effect transistor Q1 and/or the U-phase lower-bridge field-effect transistor Q4, by controlling the on or off of the U-phase upper-bridge field-effect transistor Q1 and the U-phase lower-bridge field-effect transistor Q4 respectively, and based on the voltage collected by the corresponding analog-to-digital conversion voltage collection end; the micro-controller 1 is also used to perform power-on fault diagnosis for the V-phase upper-bridge field-effect transistor Q2 and/or the V-phase lower-bridge field-effect transistor Q5, by controlling the on or off of the V-phase upper-bridge field-effect transistor Q2 and the V-phase lower-bridge field-effect transistor Q5 respectively, and based on the voltage collected by the corresponding analog-to-digital conversion voltage collection end; the micro-controller 1 is also used to perform power-on fault diagnosis for the W-phase upper-bridge field-effect transistor Q3 and/or the W-phase lower-bridge field-effect transistor Q6, by controlling the tuning on or off of the W-phase upper-bridge field-effect transistor Q3 and the W-phase lower-bridge field-effect transistor Q6 respectively, and based on the voltage collected by the corresponding analog-to-digital conversion voltage collection end.

In this embodiment, the pull-up circuit corresponding to the U-phase end 1801, that is, the U-phase pull-up circuit 1401, includes a first resistor R1, and the voltage dividing circuit corresponding to the U-phase end 1801, that is, the U-phase voltage dividing circuit 1404 includes a first capacitor C21, a second resistor R2 and a third resistor R3, one end of the first resistor R1 is electrically connected with the vehicle power supply VBAT, the other end of the first resistor R1 and one end of the second resistor R2 are both electrically connected with the U-phase original voltage end 14041, the other end of the second resistor R2 and one end of the third resistor R3 are both electrically connected with the U-phase voltage dividing output end 14042, and the other end of the third resistor R3 is ground connected with GND via the U-phase ground end 14043. Wherein, the vehicle power supply VBAT is the power supply provided by the battery on the vehicle where the controller circuit of the electric power steering system of this embodiment is located.

In this embodiment, the pull-up circuit corresponding to the V-phase end 1802, that is, the V-phase pull-up circuit 1402, includes a fourth resistor R4, and the voltage dividing circuit corresponding to the V-phase end 1802, that is, the V-phase voltage dividing circuit 1405 includes a second capacitor C22, a fifth resistor R5 and a sixth resistor R6, one end of the fourth resistor R4 is electrically connected with the vehicle power supply VBAT, the other end of the fourth resistor R4 and one end of the fifth resistor R5 are both electrically connected with the V-phase original voltage end 14051, the other end of the fifth resistor R5 and one end of the sixth resistor R6 are both electrically connected with the V-phase voltage dividing output end 14052, and the other end of the sixth resistor R6 is ground connected with GND via the V-phase ground end 14053.

In this embodiment, the pull-up circuit corresponding to the W-phase end 1803, that is, the W-phase pull-up circuit 1403, includes a seventh resistor R7, and the voltage dividing circuit corresponding to the W-phase end 1803, that is, the W-phase voltage dividing circuit 1406 includes a third capacitor C23, a eighth resistor R8 and a ninth resistor R9, one end of the seventh resistor R7 is electrically connected with the vehicle power supply VBAT, the other end of the seventh resistor R7 and one end of the eighth resistor R8 are both electrically connected with the W-phase original voltage end 14061, the other end of the eighth resistor R8 and one end of the ninth resistor R9 are both electrically connected with the W-phase voltage dividing output end 14062, and the other end of the ninth resistor R9 is ground connected with GND via the W-phase ground end 14063.

In this embodiment, the voltage of the U-phase voltage dividing output end 14042 corresponding to the U-phase end 1801 is the U-phase feedback voltage; the U-phase first default value is VBAT*(R3)/(R2+R3), and the U-phase second default value is VBAT*(R3)/(R1+R2+R3).

The micro-controller 1 is used to control both the U-phase upper-bridge field-effect transistor Q1 and the U-phase lower-bridge field-effect transistor Q4 to turn off, then obtain the U-phase feedback voltage and use it as a first U-phase feedback voltage, when the first U-phase feedback voltage is equal to a U-phase first default value, determine that the U-phase upper-bridge field-effect transistor Q1 has a short circuit fault, and when the first U-phase feedback voltage is equal to 0, determine that the U-phase lower-bridge field-effect transistor Q4 has a short circuit fault, when the first U-phase feedback voltage is not equal to the U-phase first default value and not equal to 0 and not equal to a U-phase second default value, determine that the U-phase upper-bridge field-effect transistor Q1 and the U-phase lower-bridge field-effect transistor Q4 are in an unexpected status;

When the first U-phase feedback voltage is equal to the U-phase second default value, the micro-controller1 is also used to control the U-phase upper-bridge field-effect transistor Q1 to turn on, and at the same time, control the U-phase lower-bridge field-effect transistor Q4 to turn off, then obtain the U-phase feedback voltage and use it as a second U-phase feedback voltage, and when the second U-phase feedback voltage is not equal to the U-phase first default value, determine that the U-phase upper-bridge field-effect transistor Q1 has a broken circuit fault.

When the second U-phase feedback voltage is equal to the U-phase first default value, the micro-controller 1 is also used to control the U-phase upper-bridge field-effect transistor Q1 to turn off, and at the same time, control the U-phase lower-bridge field-effect transistor Q4 to turn on, then obtain the U-phase feedback voltage and use it as a third U-phase feedback voltage, and when the third U-phase feedback voltage is equal to 0, determine that both the U-phase upper-bridge field-effect transistor Q1 and the U-phase lower-bridge field-effect transistor Q4 work normally, when the third U-phase feedback voltage is not equal to 0, determine that the U-phase lower-bridge field-effect transistor Q4 has a broken circuit fault.

In this embodiment, the voltage of the V-phase voltage dividing output end 14052 corresponding to the V-phase end 1802 is the V-phase feedback voltage; the V-phase first default value is VBAT*(R6)/(R5+R6), and the V-phase second default value is VBAT*(R6)/(R4+R5+R6).

The micro-controller 1 is used to control both the V-phase upper-bridge field-effect transistor Q2 and the V-phase lower-bridge field-effect transistor Q5 to turn off, then obtain the V-phase feedback voltage and use it as a first V-phase feedback voltage, when the first V-phase feedback voltage is equal to a V-phase first default value, determine that the V-phase upper-bridge field-effect transistor Q2 has a short circuit fault, and when the first V-phase feedback voltage is equal to 0, determine that the V-phase lower-bridge field-effect transistor Q5 has a short circuit fault, when the first V-phase feedback voltage is not equal to the V-phase first default value and not equal to 0 and not equal to a V-phase second default value, determine that the V-phase upper-bridge field-effect transistor Q2 and the V-phase lower-bridge field-effect transistor Q5 are in an unexpected status.

When the first V-phase feedback voltage is equal to the V-phase second default value, the micro-controller 1 is also used to control the V-phase upper-bridge field-effect transistor Q2 to turn on, and at the same time, control the V-phase lower-bridge field-effect transistor Q5 to turn off, then obtain the V-phase feedback voltage and use it as a second V-phase feedback voltage, and when the second V-phase feedback voltage is not equal to the V-phase first default value, determine that the V-phase upper-bridge field-effect transistor Q2 has a broken circuit fault.

When the second V-phase feedback voltage is equal to the V-phase first default value, the micro-controller 1 is also used to control the V-phase upper-bridge field-effect transistor Q2 to turn off, and at the same time, control the V-phase lower-bridge field-effect transistor Q5 to turn on, then obtain the V-phase feedback voltage and use it as a third V-phase feedback voltage, and when the third V-phase feedback voltage is equal to 0, determine that both the V-phase upper-bridge field-effect transistor Q2 and the V-phase lower-bridge field-effect transistor Q5 work normally, when the third V-phase feedback voltage is not equal to 0, determine that the V-phase lower-bridge field-effect transistor Q5 has a broken circuit fault.

In this embodiment, the voltage of the W-phase voltage dividing output end 14062 corresponding to the W-phase end 1803 is the W-phase feedback voltage; the W-phase first default value is VBAT*(R9)/(R8+R9), and the W-phase second default value is VBAT*(R9)/(R7+R8+R9).

The micro-controller 1 is used to control both the W-phase upper-bridge field-effect transistor Q3 and the W-phase lower-bridge field-effect transistor Q6 to turn off, then obtain the W-phase feedback voltage and use it as a first W-phase feedback voltage, when the first W-phase feedback voltage is equal to a W-phase first default value, determine that the W-phase upper-bridge field-effect transistor Q3 has a short circuit fault, and when the first W-phase feedback voltage is equal to 0, determine that the W-phase lower-bridge field-effect transistor Q6 has a short circuit fault, when the first W-phase feedback voltage is not equal to the W-phase first default value and not equal to 0 and not equal to a W-phase second default value, determine that the W-phase upper-bridge field-effect transistor Q3 and the W-phase lower-bridge field-effect transistor Q6 are in an unexpected status.

when the first W-phase feedback voltage is equal to the W-phase second default value, the micro-controller 1 is also used to control the W-phase upper-bridge field-effect transistor Q3 to turn on, and at the same time, control the W-phase lower-bridge field-effect transistor Q6 to turn off, then obtain the W-phase feedback voltage and use it as a second W-phase feedback voltage, and when the second W-phase feedback voltage is not equal to the W-phase first default value, determine that the W-phase upper-bridge field-effect transistor Q3 has a broken circuit fault.

When the second W-phase feedback voltage is equal to the W-phase first default value, the micro-controller 1 is also used to control the W-phase upper-bridge field-effect transistor Q3 to turn off, and at the same time, control the W-phase lower-bridge field-effect transistor Q6 to turn on, then obtain the W-phase feedback voltage and use it as a third W-phase feedback voltage, and when the third W-phase feedback voltage is equal to 0, determine that both the W-phase upper-bridge field-effect transistor Q3 and the W-phase lower-bridge field-effect transistor Q6 work normally, when the third W-phase feedback voltage is equal to the W-phase second default value, determine that the W-phase lower-bridge field-effect transistor Q6 has a broken circuit fault, when the third W-phase feedback voltage is not equal to 0, determine that the W-phase lower-bridge field-effect transistor Q6 has a broken circuit fault.

In this embodiment, in parallel of the three-phase electric motor phase voltage state feedback circuit feeding back the real phase voltage of the three-phase electric motor in real time for assisting motor control, the three-phase electric motor phase voltage state feedback circuit realizes the power-on fault diagnosis for the field-effect transistor in the three-phase bridge module by three pull-up circuits, which improves the diagnosis coverage rate of the field-effect transistor.

**Embodiment 2**

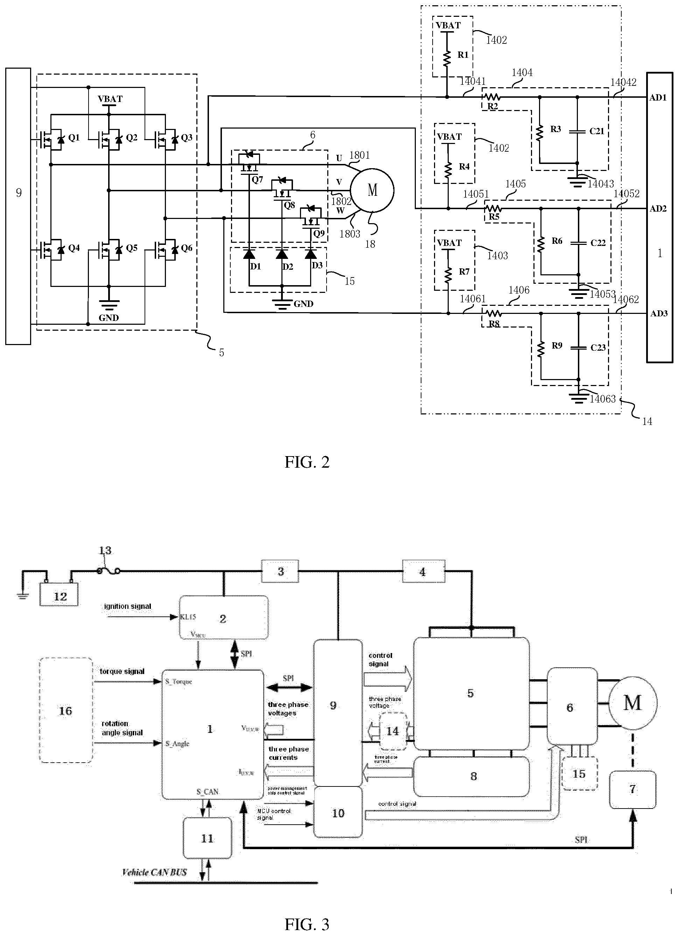

This embodiment is a further improvement on the basis of Embodiment 1, as shown in FIG. 2, the controller circuit of the electric power steering system provided in this embodiment further includes a three-phase separation module 6 and a motor freewheeling circuit 15. The three-phase separation module 6 is connected in series between the three-phase electric motor 18 and the three-phase bridge module 5, and the three-phase separation module 6 is used to cut off the connection between the three-phase electric motor 18 and the three-phase bridge module 5 when the steering system controller fails.

In this embodiment, the three-phase separation module 6 includes a U-phase separation field-effect transistor Q7, a V-phase separation field-effect transistor Q8, and a W-phase separation field-effect transistor Q9. The motor freewheeling circuit 15 includes a U-phase diode D1, a V-phase diode D2, and a W-phase diode D3; the anode of the U-phase diode D1, the anode of the V-phase diode D2 and the anode of the W-phase diode D3 are all grounded.

The grid electrode of the U-phase separation field-effect transistor Q7 is electrically connected with the cathode of the U-phase diode D1, the source electrode of the U-phase separation field-effect transistor Q7 is electrically connected with the U-phase end 1801, and the drain electrode of the U-phase separation field-effect transistor Q7 is electrically connected with the source electrode of the U-phase upper-bridge field-effect transistor Q1. The grid electrode of the V-phase separation field-effect transistor Q8 is electrically connected with the cathode of the V-phase diode D2, the source electrode of the V-phase separation field-effect transistor Q8 is electrically connected with the V-phase end 1802, and the drain electrode of the V-phase separation field-effect transistor Q8 is electrically connected with the source electrode of the V-phase upper-bridge field-effect transistor Q2. The grid electrode of the W-phase separation field-effect transistor Q9 is electrically connected with the cathode of the W-phase diode D3, the source electrode of the W-phase separation field-effect transistor Q9 is electrically connected with the W-phase end 1803, and the drain electrode of the W-phase separation field-effect transistor Q9 is electrically connected with the source electrode of the W-phase upper-bridge field-effect transistor Q3.

In this embodiment, the power of the U-phase diode D1, the V-phase diode D2, and the W-phase diode D3 is about 0.3W (watt), these three diodes are all placed on the drive end of the corresponding phase separation field-effect transistor to provide the driving current turned on by the phase separation field-effect transistor, it needs to turn on the phase separation field-effect transistor once the negative voltage of the motor is generated, to form a freewheeling channel, the driving power of the phase separation field-effect transistor is relatively low, so these three diodes can select a diode with relatively low power.

When the electric power steering system suddenly fails, break the motor boosted power by cutting off the U-phase separation field-effect transistor Q7, V-phase separation field-effect transistor Q8 and W-phase separation field-effect transistor Q9 on the three phases of the motor, that is, cut off the three phases current of the motor drive, as the motor is a big inductive load, the current on the internal coil cannot change suddenly, after the U-phase separation field-effect transistor Q7, V-phase separation field-effect transistor Q8 and W-phase separation field-effect transistor Q9 are cut off, the U-phase ends 1801, the V-phase end 1802 and the W-phase end 1803 of the motor will generate a very high reverse electromotive force at this moment, and the reverse electromotive force is a very high negative or positive voltage, which is related to the current flow direction on the phase of the motor at this moment. The working principle of the motor freewheeling circuit in this embodiment is detailedly described in the subsequent embodiment 4, then will not be repeated here. In this embodiment, the three phase diodes with extremely low power in the motor freewheeling circuit are set at the drive end of the corresponding phase separation field-effect transistor to provide the drive current for each phase separation field-effect transistor to turn on, and turn on the phase separation field-effect transistor once the negative voltage of the three-phase electric motor is generated, to form a freewheeling circuit, which provides a way to release the energy of the three-phase electric motor and avoid damaging the relevant components in the circuit.

**Embodiment 3**

This embodiment provides a sampling method for the three-phase phase current of the controller circuit of the electric power steering system. Wherein, the controller circuit includes a three-phase electric motor, a micro-controller, a three-phase bridge module, a three-phase phase current sampling circuit module, and a three-phase bridge driving chip. The micro-controller is used to generate a PWM control signal and transmit it to the three-phase bridge driving chip. The three-phase bridge driving chip is used to control the on or off of each field-effect transistor in the three-phase bridge module according to the PWM control signal.

In specific implementation, the sampling method can be implemented based on the embodiment 1 or the embodiment 2 or the controller circuit of an existing electric power steering system.

In this embodiment, the sampling method includes the following steps:

the three-phase phase current sampling circuit module collects the phase voltage signals of the lower-bridge arms of at least two phases in the three-phase bridge module, and transmits the phase voltage signals to the three-phase bridge driving chip;

a differential operational amplifier inside the three-phase bridge driving chip amplifies the phase voltage signal to obtain the amplified phase voltage signal and transmit it to the micro-controller;

the analog-to-digital converter in the micro-controller converts the amplified phase voltage signal into a digital voltage;

the micro-controller performs phase current sampling calculation based on the digital voltage to obtain the actual value of the phase current, and the micro-controller uses the actual value of the phase current as a feedback signal of the motor current control;

wherein, the micro-controller sets the gain value and the bias voltage value of the differential operational amplifier in the current cycle according to the actual value of the phase current in the previous cycle of the current cycle and/or the duty ratio of the PWM control signal in the previous cycle of the current cycle, to control the sampling precision of the phase current of the three-phase electric motor.

In this embodiment, the three-phase phase current sampling circuit module includes the current sampling resistors for collecting the phase voltage signals of the lower-bridge arms of the two phases in the three-phase bridge module, and the collected phase voltage signals are a first phase voltage signal and a second phase voltage signal respectively, the actual value of the phase current corresponding to the first phase voltage signal is the actual value of the first phase current, and the actual value of the phase current corresponding to the second phase voltage signal is the actual value of the second phase current.

In this embodiment, the sampling method further includes the following steps:

calculate the value of the phase current vector length Is according to the following formula,

$$I_s = \sqrt{\tfrac{4}{3}\left(I_{P1}{}^2 + I_{P2}{}^2 + I_{P1} \times I_{P2}\right)};$$

Wherein, $I_{P1}$ represents the actual value of the first phase current and $I_{P2}$ represents the actual value of the second phase current. The current implementation of the three-phase phase current sampling circuit module requires the current sampling resistors for the phase voltage signal of the lower-bridge arm from the three phases, compared with the existing implementation, this embodiment reduces one phase, that is, the current sampling resistors corresponding to only two of the three phases are required, the value of the current vector length Is can be calculated. The two phases can be any two of U-phase, V-phase and W-phase. This embodiment can reduce circuit complexity and hardware cost.

In this embodiment, the step of setting the gain value and the bias voltage value of the differential operational amplifier of the current cycle according to the actual value of the phase current of the previous cycle of the current cycle and/or the duty ratio of the PWM control signal of the previous cycle of the current cycle includes the following steps:

partition the measured current according to the phase current vector length Is of the previous cycle of the current cycle and/or the duty ratio of the PWM control signal of the previous cycle of the current cycle;

the micro-controller sets the gain value and the bias voltage value of the differential operational amplifier of the current cycle by the SPI command according to the partition where the measured current is located.

In this embodiment, it utilizes the principle that the current sampling precision can be controlled by changing the gain value and the bias voltage value of the amplifier according to the different measured current sampling ranges under the condition that the sampling resistance value is constant, realizes a phase current sampling method that can keep the three-phase current sampling at a relatively high precision under various currents with different magnitudes, solves the problem of using a fixed gain and bias voltage in all three phases current sampling in the existing motor control, when the current value flowing through the motor changes in a relatively large range, high-precision sampling can only be achieved in a certain current interval, when sampling outside this interval, then the precision is relatively poor. The detailed description of the above principle is described in the subsequent embodiment 4, and will not be repeated here. This embodiment is based on the characteristic that the motor current does not dramatically change but slowly changes, the gain value and the bias voltage value of the differential operational amplifier in the current cycle is set according to the actual value of the phase current of the previous cycle of the current cycle and/or the duty ratio of the PWM control signal of the previous cycle of the current cycle, to make the gain value and the bias voltage value match the range of the present measured current, thereby control the phase current of the three-phase electric motor to keep a high sampling precision, and then improves the motor control performance of the steering system.

**Embodiment 4**

Referring to Figure 3, the present invention designs a controller circuit of an electric power steering system, including a micro-controller 1, a power management chip 2, a power interface filter circuit module 3, a DC voltage stabilizer module 4, a three-phase bridge driving chip 9, a three-phase separation circuit driving chip 10, a CAN transceiver 11, and a permanent magnet synchronous motor M, one end of the battery 12 is grounded, and the other end of the battery 12 is connected in series with a fuse 13 then divides into two channels, which are respectively connected with the power input port of the power management chip 2 and the power input port of the power interface filter circuit module 3, and the power output port of the power interface filter circuit module 3 is divided into two channels, which are respectively connected with the power input port of the three-phase bridge driving chip 9 and the current input port of the DC voltage stabilizer module 4, and the current output of the DC voltage stabilizer module 4 is connected with the current input port of the three-phase bridge module 5, the $V_{MCU}$ port of the power management chip 2 is connected with the power input port of the micro-controller 1, and the SPI port of the power management chip 2 is connected with the SPI port of the micro-controller 1, and the SPI ports of the micro-controller 1 is also connected with the SPI port of the three-phase bridge driving chip 9 and the SPI port of the motor rotation angle position sensor 7, the CAN port of the micro-controller 1 is connected with the CAN transceiver 11, the control signal output port of the power management chip 2 and the control signal output port of the micro-controller 1 are both connected with the signal input port of the three-phase separation circuit driving chip 10, the signal output port of the three-phase separation circuit driving chip 10 is connected with the control signal receiving port of the three-phase separation module 6, and the power input port of the three-phase bridge module 5 is connected with the power input port of the phase-phase current sampling circuit module 8 and the power input port of the three-phase bridge driving chip 9, the signal output port of the three-phase bridge module 5 is connected with the signal input port of the three-phase separation module 6, and the signal output port of the three-phase separation module 6 is connected with the signal input port of the permanent magnet synchronous motor M, and the signal output port of the permanent magnet synchronous motor M is connected with the motor rotation angle position sensor 7; the three-phase current sampling circuit module 8 is also connected with the three-phase current signal input port of the three-phase bridge driving chip 9.

The functions of each module in the present invention are as follows:

(1) micro-controller 1 (MCU) is the computing processing core of the steering system controller, it collects the vehicle speed signal and the ignition signal of the vehicle; collects the torque signal and the steering wheel angle signal transmitted by the steering wheel torque sensor and the angle sensor 16; collects the phase current signal of the booster motor; collects the rotation angle signal of the booster motor; collects the phase voltage signal, after obtaining these sensor signals, use the built-in booster curve or booster model to generate the required power to be provided according to the torque and rotation angle input by the current driver, and then according to the internal closed-loop controller, generate a three-phase bridge control PWM waveform, and drive the booster motor to achieve the desired steering boosted power.

(2) The input signal of the power management chip 2 is the voltage and ignition signal of the battery, which generates the digital power required by each module of the steering system controller, such as the 3.3V digital power required by the micro-controller 1: Vmicro-controller, the power management chip 2 communicates with the micro-controller 1 through the SPI interface, and the micro-controller 1 can adjust the working mode of the power management chip 2 by the control instructions. A powerful diagnostic circuit is integrated in the power management chip 2, which can diagnose all faults of the power management chip 2, such as over-voltage, under-voltage and overcurrent of the output power supply, chip over-temperature, etc. the power management chip 2 generates different protection measures according to various fault conditions, and can directly turn off the three-phase separation circuit driving chip 10 according to the safety control signal of the power management chip 2, so as to cut off the boosted power of the permanent magnet synchronous motor M and make the steering system turns into a safe state.

(3) The power interface filter circuit module 3 includes a differential filter circuit, a common mode filter circuit and a high frequency filter circuit, and its main function is to absorb the power noise on the steering system controller, improve the electromagnetic compatibility performance of the steering system controller, and ensure the steering system controller can pass all electromagnetic compatibility tests.

(4) The DC voltage stabilizing module 4 is composed of three high-capacity electrolytic capacitors, and its function is to stabilize the DC voltage controlled by the three-phase bridge motor, reduce the three-phase phase current ripple controlled by the motor, provide the AC current controlled by the motor, and improve the motor control performance.

(5) The function of the three-phase bridge module 5 is to invert the DC voltage of the battery into an AC voltage so as to control the rotation of the permanent magnet synchronous motor M and achieve an electric boosted power.

(6) The three-phase separation module 6 is in series connected with the three field-effect transistors Q7, Q8, Q9 in the three phases of the permanent magnet synchronous motor M, and its function is to disconnect these three field-effect transistors when the steering system controller fails, and then cut off the motor current to achieve the purpose of cutting off the motor's boosted power, at this time, the vehicle steering becomes a mechanical steering. This greatly reduces the risk of accidents that seriously endanger the driver's safety due to the failure of the steering system controller.

(7) The function of the motor rotation angle position sensor 7 is to collect the rotation angle signal of the booster motor, which is a key signal required for motor control, a magnet is installed on the rotor shaft of the permanent magnet synchronous motor M, which rotates with the rotor, the present invention applies the latest generation of unnel reluctance angle sensor (TMR sensor) to detect the position of the magnet on the motor shaft, and then can detect the speed and rotation angle signals of the rotor, it has the advantages of low angle error and fast data refresh rate, which greatly improves the performance of motor control.

(8) The three-phase phase current sampling circuit module 8 is three current sampling resistors, which are placed on the lower-bridge of each phase of the three-phase bridge, convert the current signal into a voltage signal, and amplify by the differential operational amplifier inside the three-phase bridge driving chip 9, and then input to the analog-to-digital converter (ADC) in the micro-controller 1 to convert the analog voltage into a digital voltage, by this way, the micro-controller 1 obtains the three-phase lower-bridge arm current signal, by sampling the current flowing through the lower-bridge of each phase, the micro-controller 1 then calculates the actual three-phase phase current of the motor as a feedback signal for motor current control.

(9) The three-phase bridge driving chip 9 receives the three-phase bridge control signal input by the micro-controller 1, and then drives the three-phase bridge module 5 to act, generate the corresponding control waveform, and convert the DC battery voltage to PWM to control the booster motor.

(10) The function of the three-phase separation circuit driving chip 10 is to drive the three-phase phase separation field-effect transistor to turn on and off, when the phase separation field-effect transistor is turned on in normal operation mode, the PWM voltage generated by the three-phase bridge can be applied to the motor via the phase separation field-effect transistor, to generate the three-phase current of the motor and then generate the motor boosted power. In the case of a fault, the three-phase separation circuit drives the chip to turn off the phase separation field-effect transistor, and cut off the motor current, so as to cut off the motor boosted power.

(11) CAN transceiver 11, which sends the ignition signal and the speed signal of the whole vehicle to the steering system controller from the whole vehicle CAN bus, and meanwhile, sends the data of the steering system controller to the CAN bus.

In the invention, a three-phase electric motor phase voltage state feedback circuit 14 is also arranged and connected with between the three-phase bridge module 5, the three-phase bridge driving chip 9 and the micro-controller 1 to achieve the purpose of stabilizing the voltage.

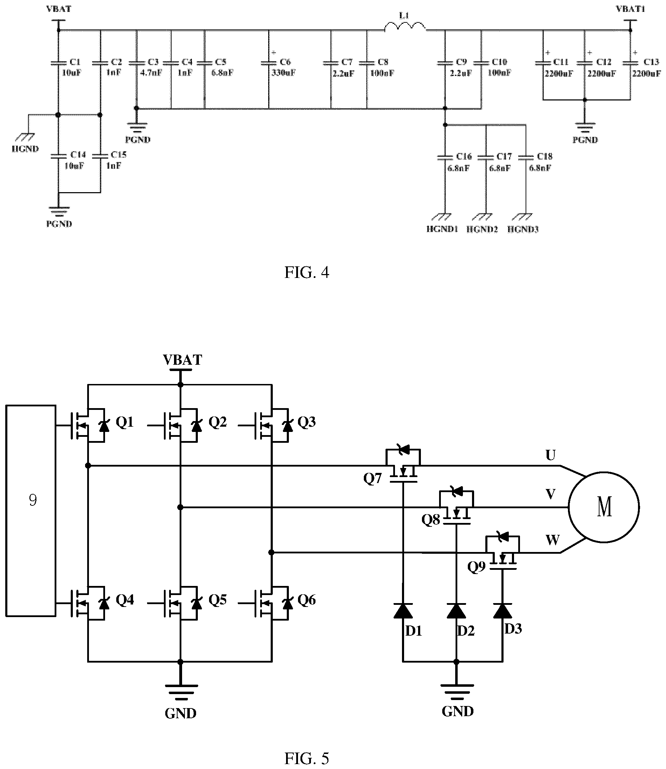

Referring to Fig. 4, the specific connections of the power interface filter circuit in the invention are as follows: the VBAT port is divided into nine channels, which are respectively connected with one end of the capacitor C1, one end of the capacitor C2, one end of the capacitor C3, one end of the capacitor C4, one end of the capacitor C5, one end of the capacitor C6, one end of the capacitor C7, one end of the capacitor C8 and one end of the inductor L1, and the other end of capacitor C1 is divided into four channels, which are respectively connected with HGND, one end of the capacitor C14, the other end of the capacitor C2 and one end of the capacitor C15, the other end of the capacitor C14 and the other end of the capacitor C15 are joined then grounded, the other end of the capacitor C3 is divided into eleven channels, which are respectively connected with the ground, the other end of the capacitor C4, the other end of the capacitor C5, the other end of the capacitor C6, the other end of the capacitor C7, the other end of the capacitor C8, one end of the capacitor C9, one end of the capacitor C10, one end of the capacitor C16, one end of the capacitor C17 and one end of capacitor C18, the other end of the capacitor C9 is divided into six channels, which are respectively connected with the other end of the inductor L1, the other end of the capacitor C10, one end of the capacitor C11, one end of the capacitor C12, one end of the capacitor C13 and VBAT1 port, the other end of the capacitor C16 is connected with HGND1, the other end of the capacitor C17 is connected with HGND2, the other end of the capacitor C18 is connected with HGND3, and the other end of the capacitor C11, the other end of the capacitor C12 and the other end of the capacitor C13 are joined then grounded.

The working principle of the power interface filter circuit is: C1 and C14 are two 10uF ceramic capacitors, which form a Y capacitor filter, the main function of the Y capacitor is to filter the common mode noise on the power line and the ground line of the steering system controller, the 10uF capacitor is mainly to provide a low-impedance channel for low-frequency noise below 1MHz, the low-frequency common-mode noise in the same direction and coexisting on both of the power line and the ground line can be introduced to the steering system controller housing via this Y capacitor and returns to the battery by the low-impedance loop of the system controller housing.

C2 and C15 are two 1nF (nanofarad) ceramic capacitors, which also form a Y capacitor filter, the 1nF capacitor is mainly aimed at the noise above 30MHz (megahertz), the high-frequency noise coexisting on both of the power line and the ground line will form a low-impedance path through C2 and C15, which will be introduced to the steering system controller housing, and return to the battery by the low-impedance loop of the steering system controller housing.

C3, C4, C5 are a set of differential mode capacitors, C3 is a 4.7nF ceramic capacitor, C4 is a 1nF ceramic capacitor, and C5 is a 6.8nF ceramic capacitor. These three capacitors are connected between the power line and and the ground line of the steering system controller, which respectively generate low-impedance channels for the interference noise of different frequency bands on the power line, and introduce to the ground line of the steering system controller and then return to the battery.

C6 is a 330uF electrolytic capacitor for DC voltage stabilization, the stable voltage on this electrolytic capacitor is mainly used to supply power for the digital part of the steering system controller, and the digital part of the steering system controller includes a switching power supply, which is used to generate various voltages required by the digital system from the battery voltage, this electrolytic capacitor stores the DC voltage required by the digital switching power supply, to reduce the ripple of the digital system power supply, and reduce low-frequency noise.

C7, C8, L1, C9, C10 constitute a pi-type filter, by designing the parameters of the pi-type filter, the noise frequency bands that you want to filter can be filtered out pertinently, so that the noise signal can be introduced into the steering system controller ground line through the pi-type filter, and then return to the battery.

C16, C17, C18 are the filter capacitors of the ground planes of the three steering system controller to the chassis, because the ground line of the steering system controller generally has a lot of noise, these three capacitors provide a low impedance loop for the noise on the ground line to the steering system controller housing, and then the noise returns to the battery through the steering system controller housing. It is very important that the ground line or the ground plane of the steering system controller form a low impedance loop to the steering system controller housing through capacitance.

C11, C12, C13 are three big electrolytic capacitors with 2200uF (microfarad), which mainly provide the input voltage for the booster motor controlling three-phase bridge, the three capacitors are corresponding to the three phases of the motor controlling three-phase bridge, namely U, V, W three phase, the DC voltage on these three capacitors is changed to a AC voltage through the three-phase bridge to drive the motor, the AC current is mainly provided by the three capacitors, the three big capacitors ensure the stability of the input voltage controlled by the booster motor and ensure the stability of the motor control.

In this circuit, HGND, HGND1, HGND2, and HGND3 are the screw holes on the metal shell, by screwing conductive screws into the controller shell in these screw holes of the controller, achieve the noise on the power line or the ground line of the steering system controller being introduced to the steering system controller housing through the capacitor. The low-impedance connection here is also very important to make sure that the noise on the controller can be introduced into the steering system controller housing through the screw hole position with low impedance, and then return to the battery.

The power filter circuit can ensure that the steering system controller is not affected and works normally in the electromagnetic interference environment of the whole vehicle, and ensure that the electromagnetic interference emitted by the steering system controller to the outside reaches the specified limit.

Referring to Fig. 5 ~ 7, in the present invention, the three-phase separation module 6 is also connected with low-power diodes D1 ~ D3, so that a motor freewheeling circuit 15 is formed between the three-phase bridge module 5, the three-phase separation module 6 and the low-power diodes D1 ~ D3, the specific connection method is as follows: the VBAT port is divided into three channels, which are respectively connected with the drain electrode of field-effect transistor Q1, the drain electrode of field-effect transistor Q2 and the drain electrode of field-effect transistor Q2, the source electrode of field-effect transistor Q1 is divided into two channels, which are respectively connected with the drain electrode of field-effect transistor Q4 and the drain electrode of field-effect transistor Q7, the source electrode of field-effect transistor Q7 is connected with the U-phase of three-phase electric motor, the gate electrode of field-effect transistor Q7 is connected with the cathode of the diode D1, and the source electrode of field-effect transistor Q2 is divided into two channels, which are respectively connected with the drain electrode of field-effect transistor Q8 and the drain electrode of field-effect transistor Q5, the gate electrode of field-effect transistor Q8 is connected with the diode D2, the source electrode of field-effect transistor Q8 is connected with V-phase of three-phase electric motor, the source electrode of field-effect transistor Q3 is divided into two channels, which are respectively connected with the drain electrode of field-effect transistor Q6 and the drain electrode of field-effect transistor Q9, the gate electrode of field-effect transistor Q9 is connected with the diode D3, the source electrode of field-effect transistor Q9 is connected with V-phase of three-phase electric motor, and the source electrode of field-effect transistor Q4, the source electrode of field-effect transistor Q5 and the source electrode of field-effect transistor Q6 are joined together then grounded, and the anode of the diode D1, the anode of the diode D2 and the anode of the diode D3 are joined together then grounded; the gates electrode of the field-effect transistor Q1 ~ Q6 are joined together then connected with the three-phase bridge driving chip 9.

The power of the diodes D1 ~ D3 in the motor freewheeling circuit is about 0.3w, and these three diodes are placed at the driving end of the corresponding phase separation field-effect transistor Q7 ~ Q9 to provide the driving current for the field-effect transistors Q7 ~ Q9 to turn on, it is necessary to turn on the phase separation field-effect transistor when the negative voltage of the motor is generated, so as to form the freewheeling path, the driving power of the field-effect transistors Q7 ~ Q9 is relatively low, therefore, the three diodes can select a diode with lower power.

When the electric power steering system suddenly fails, disconnect the motor power by cutting off the three phase separation switches Q7, Q8, Q9 on the three phases of the motor, that is, cut off the three-phase current driven by the motor, as the motor is a big inductive load, the current on the internal coil cannot change suddenly, after the phase separation field-effect transistors Q7, Q8 and Q9 are disconnected, the U, V, and W ends of the motor will generate a very high reverse electromotive force at this time, and the reverse electromotive force is a very high negative voltage or positive voltage, which is related to the current flow direction on the motor phase at this time, the following take the motor U-phase as an example to illustrate the working principle of the motor freewheeling circuit.

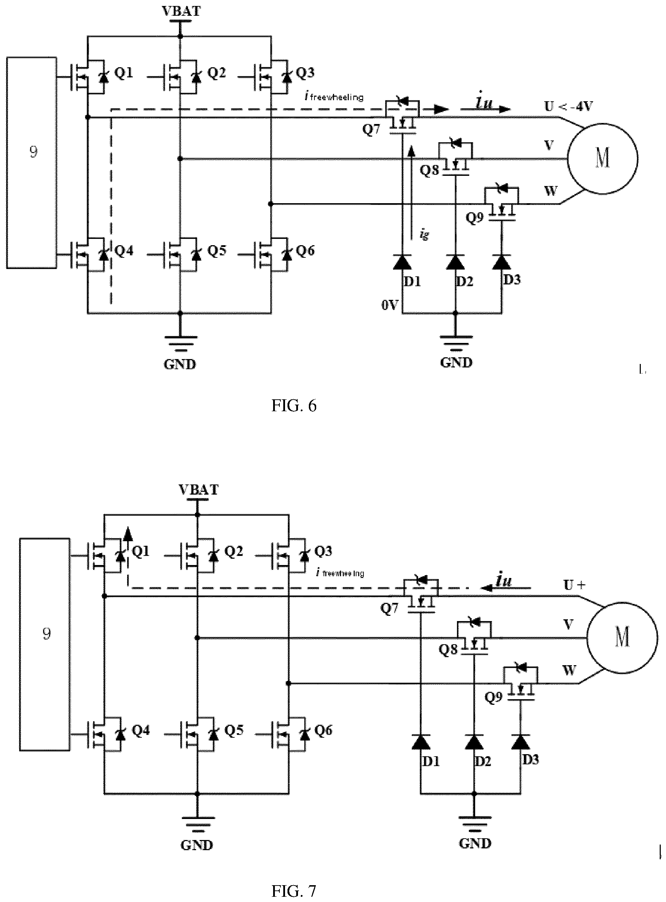

As shown in Figure 6, if when the phase separation field-effect transistor is suddenly disconnected to cut off the motor boosted power, the motor U-phase current iu is the direction flowing into the motor, then this current will induce a very high negative voltage on the U-phase of the motor, and when this negative voltage is lower than about -4V, due to the role of the diode D1, a positive voltage will be generated between the gate electrode and the source electrode of the phase separation field-effect transistor Q7, and it is greater than the conduction threshold voltage of the field-effect transistor Q7, then the phase separation field-effect transistor Q7 will be turned on at this time, and the U-phase freewheeling channel is formed, the $i_{freewheeling}$ current is drawn from the body diode of the U-phase lower-bridge field-effect transistor, and through the phase separation field-effect transistor Q7, flow into the motor until the U-phase current of this motor is consumed inside the motor, and the negative voltage generated on the U-phase is greater than -4V, and the field-effect transistor Q7 is automatically turned off, thereby avoid damaging the three-phase bridge switch and the phase separation switch by too high negative voltage. In this process, only the drive current $i_g$ turned on by the phase separation field-effect transistor Q7 flows through the diode D1, and this drive current is very small.

As shown in Figure 7, if when the phase separation field-effect transistor is suddenly disconnected to cut off the motor boosted power, the motor U-phase current iu is in the direction flowing out of the motor, then the freewheeling channel of the motor naturally exists in this application, $i_{freewheeling}$ current flows into the positive electrode of the battery from the body diode of the phase separation field-effect transistor Q7 and through the body diode of the U-phase upper-bridge field-effect transistor of the three-phase drive bridge.

The freewheeling process of V-phase and W-phase is similar to that of U-phase.

Therefore, the circuit can use a diode with extremely low power to control the switch of the field-effect transistor, so as to achieve the effect of motor freewheeling.

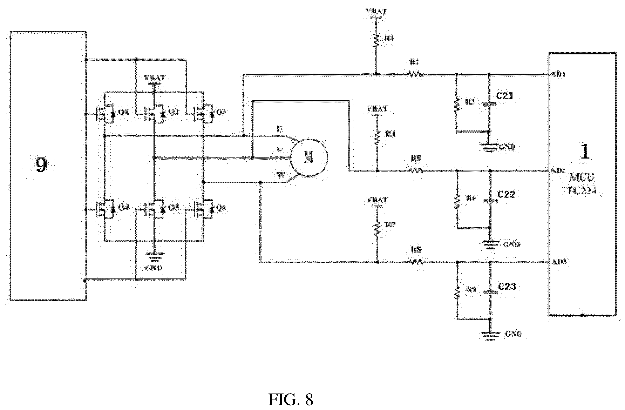

Referring to Fig. 8, the specific connection of the three-phase electric motor phase voltage state feedback circuit is as follows: the U-phase of the three-phase electric motor is divided into four channels, which are respectively connected with the source electrode of the field-effect transistor Q1, the drain electrode of the field-effect transistor Q4, one end of the resistor R1, and one end of the resistor R2, the V-phase of the three-phase electric motor is divided into four channels, which are respectively connected with the source electrode of the field-effect transistor Q2, the drain electrode of the field-effect transistor Q5, one end of the resistor R4, and one end of the resistor R5, the W-phase of the three-phase electric motor is divided into four channels, which are respectively connected with the source electrode of the field-effect transistor Q3, the drain electrode of the field-effect transistor Q6, one end of the resistor R7, and one end of the resistor R8, the drain electrode of the field-effect transistor Q1, the drain electrode of the field-effect transistor Q2, and the drain electrode of the field-effect transistor Q3 are joined together then connected with VBAT, the source electrode of the field-effect transistor Q4, the source electrode of the field-effect transistor Q5, and the source electrode of the field-effect transistor Q6 are joined together then grounded, the other end of the resistor R1, the other end of the resistor R4, the other end of the resistor R7 are connected with VBAT, the other end of the resistor R2 is divided into three channels, which are respectively connected with one end of the resistor R3, one end of the capacitor C1, and the AD1 port of the micro-controller, the other end of the resistor R5 is divided into three channels, which are respectively connected with one end of the resistor R6, one end of the capacitor C2, and the AD2 port of the micro-controller, the other end of the resistor R8 is divided into three channels, which are respectively connected with one end of the resistor R9, one end of the capacitor C3, and the AD3 port of the micro-controller, the other end of the resistor R3 and the other end of the capacitor C1 are joined together then grounded, the other end of the resistor R6 and the other end of the capacitor C2 are joined together then grounded, the other end of the resistor R9 and the other end of the capacitor C3 are joined together then grounded.

The model of the micro-controller used in the present invention can be TC234.

The three-phase electric motor phase voltage state feedback circuit of the present invention also has two functions: phase voltage measurement and three-phase bridge power-on fault diagnosis, the specific working principle is as follows:

(1) Phase voltage measurement: realize the function of phase voltage measurement by the voltage dividing circuit (R2 and R3, R5 and R6, R8 and R9) and the capacitor filter circuit (C21, C22, C23) directly connected with the three phases UVW of the motor. The function of the voltage dividing circuit (R2 and R3, R5 and R6, R8 and R9) is to divide the phase voltage of the motor (the highest voltage is approximately equal to the battery input voltage) to the voltage range that the ADC module of the micro-controller can measure (the measurement range of the ADC module analog voltage of TC234 is 0~5V). C21, C22, C23 are three filter capacitors, which are used to filter the noise of the analog voltage sent to the AD port of the micro-controller, making the AD measurement result more accurate. The phase voltage after the voltage division is directly converted into a digital value by the ADC module of the micro-controller, and this voltage is used for motor control, so as to improve the performance of the motor control.

(2) Three-phase bridge power-on fault diagnosis: because the electric power steering system controller has relatively high requirements for safety performance, before the controller works normally, the switch of each field-effect transistor of the three-phase bridge must be diagnosed to ensure that each switch is normal, and then the controller can start the three-phase bridge driving chip to perform PWM control on the three-phase bridge, so that the motor to generate boosted power. The present invention can achieve diagnosing the state of the six field-effect transistors before the three-phase bridge driving chip does not work, the specific diagnosis process is as follows:

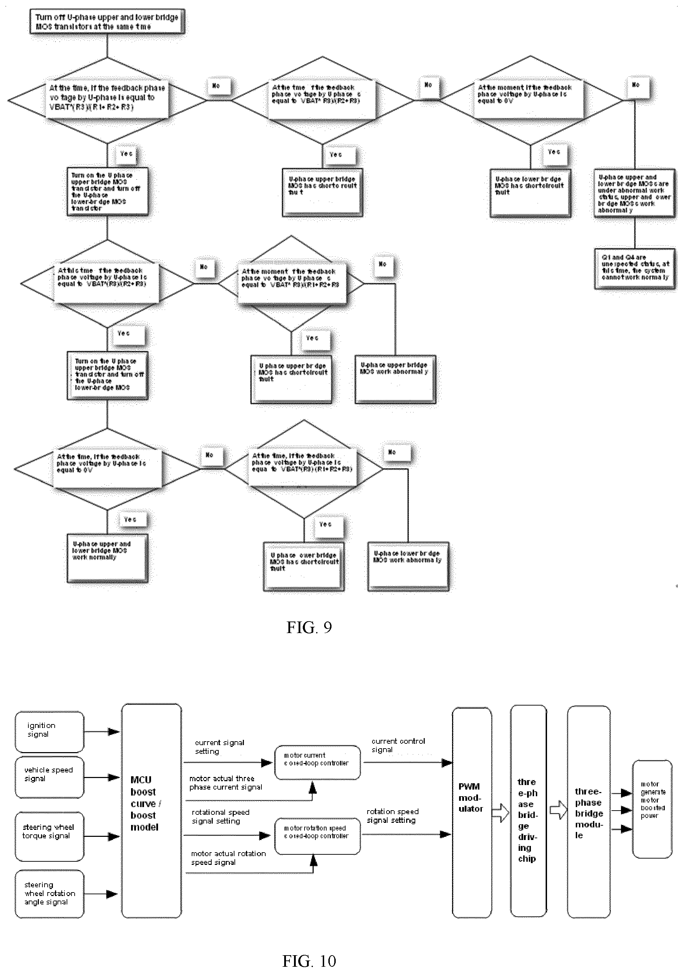

As shown in Fig. 9, take the diagnosis for the working state of U-phase upper and lower-bridge field-effect transistor Q1 and Q4 as an example:

S1. the micro-controller sends a control command to turn off the U-phase upper and lower-bridge field-effect transistor Q1 and Q4 at the same time, at this time, the U-phase feedback voltage is VBAT, which is input to the micro-controller after being divided by R1, R2 and R3 resistors, therefore, the normal value of the U-phase feedback voltage measured by the micro-controller should be VBAT * (R3) / (R1 + R2 + R3);

S2. judge the U-phase feedback voltage measured by the micro-controller, if it meets the normal value, then enter S5; otherwise, it means that the field-effect transistors Q1 and Q4 of the U-phase upper and lower-bridges will inevitably fail, whether Q1 or Q4 fails, it needs to further compare the measured phase voltages under this condition;

S3. judge whether the U-phase feedback voltage measured by the micro-controller is equal to VBAT* (R3)/(R2+R3), if yes, then the U-phase upper-bridge field-effect transistor Q1 has a short-circuit fault; if not, then enter S4 to continue the judgment;

S4. judge whether the U-phase feedback voltage measured by the micro-controller is equal to 0, if yes, the U-phase lower-bridge field-effect transistor Q4 has a short-circuit fault; if not, it means that both Q1 and Q4 may be in an unexpected status. At this time, the system cannot work normally, and the diagnosis of the U-phase field-effect transistor is terminated;

S5. the micro-controller sends a control command to turn on the U-phase upper-bridge field-effect transistor Q1 and turn off the U-phase lower-bridge field-effect transistor Q4, at this time, VBAT is directly input to the U-phase of the motor, and at this time, the U-phase feedback voltage is VBAT, which is input to AD1 of the micro-controller after being divided by R2 and R3 resistors, therefore, the normal value of U-phase feedback voltage measured by the micro-controller at this time should be VBAT*(R3)/(R2+R3);

S6. at this time, judge the U-phase feedback voltage measured by the micro-controller, and if it meets the normal value, then enter S8; otherwise, it means that the U-phase upper-bridge field-effect transistor Q1 has a fault, and the specific fault needs to be judged in the next step;

S7. judge whether the U-phase feedback voltage measured by the micro-controller is equal to VBAT*(R3)/(R1+ R2+R3), if yes, it means the U-phase upper-bridge field-effect transistor Q1 has a short-circuit fault; if not, it means that the U-phase upper-bridge field-effect transistor Q1 does not work normally;

S8. the micro-controller TC234 sends a control command to turn off the U-phase upper-bridge field-effect transistor Q1 and turn on the U-phase lower-bridge field-effect transistor Q4, at this time, the U-phase of the motor is directly connected with GND, then the normal value of the U-phase feedback voltage measured by the micro-controller should be 0V;

S9. judge whether the U-phase feedback voltage measured by the micro-controller is equal to 0, if yes, it means that the U-phase upper and lower-bridge field-effect transistors Q1 and Q4 work normally; if not, it means that the U-phase lower-bridge field-effect transistor Q4 has a fault, and the specific fault needs to be judged in the next step;

S10. judge whether the U-phase feedback voltage measured by the micro-controller is equal to VBAT*(R3)/(R1+ R2+R3), if yes, it means the U-phase upper-bridge field-effect transistor Q4 has a short-circuit fault; if not, it means that the U-phase lower-bridge field-effect transistor Q4 does not work normally.

After the above steps, the power-on fault diagnosis of the three-phase bridge can be easily and conveniently performed without additional measurement, in the specific implementation, the diagnosis process of the V-phase and W-phase field-effect transistor is same as the above-mentioned U-phase diagnosis process.

The main function of the electric power steering system is to generate an electric boosted power through the booster motor when the car driver turns the steering wheel, so as to help the driver turn the car steering gear more easily and turn the car. Referring to Fig. 10, the present invention also designs a control method of the controller circuit of the electric power steering system, which is carried out according to the following steps:

S1. pre-set the boost curve or the boost model in the micro-controller 1;

S2. the micro-controller 1 collects an automobile ignition signal, a vehicle speed signal, a steering wheel torque signal, and a steering wheel rotation angle signal;

S3'. based on the boost curve or the boost model, and according to the relevant data collected in S2, obtain a current signal setting and a rotational speed signal setting;

S3. the three-phase phase current sampling module 8 performs high-precision sampling for the three phase currents to obtain the actual three phase current signals of the motor, and transmit the signals to the micro-controller 1; the action in synchronization with this: the motor rotation angle position sensor 7 synchronously transmits the collected actual speed signal of the motor to the micro-controller 1;

S4. the micro-controller 1 synchronously transmits the actual three phase current signals of the motor, the actual rotation speed signal of the motor and the corresponding current signal setting, the rotation speed signal setting respectively to the motor current closed-loop controller and the motor rotation speed closed-loop controller inside the micro-controller 1, and performs a closed-loop control processing to obtain a current control signal and a rotation speed control signal;

S5. transmit the current control signal and the rotation speed control signal to the PWM modulator in the micro-controller 1 to generate a three-phase bridge control signal;

S6. transmit the three-phase bridge control signal to the three-phase bridge driving chip 9 to drive the on/off of the six field-effect transistors Q1 ~ Q6 in the three-phase bridge module 5, so as to control the motor to generate corresponding motor boosted power.

In addition to the above-mentioned normal booster motor control, the present invention has a very important function of fault diagnosis and fault protection, mainly including the fault diagnosis and protection mechanism integrated by the integrated chip itself, such as power management chip, micro-controller, CAN transceiver chip, three-phase bridge driving chip, the diagnosis and protection of internal signals and peripheral circuits by the three-phase phase separation circuit driving chip, and the optional three-phase phase voltage feedback circuit designed by the micro-controller 1 can also be used as the power-on diagnosis function of the three-phase bridge field-effect transistor, the micro-controller can also monitor the battery voltage signal as the diagnosis function by its own analog-to-digital conversion module (ADC). When the micro-controller 1 fails, the power management chip can turn off the three-phase separation circuit driving chip by the power management chip control signal, and then cut off the motor power; the micro-controller can turn off the three-phase separation circuit driving chip by the micro-controller control signal to cut off the boosted power; after the three-phase bridge driving chip fails, the three-phase bridge module can be cut off, and the motor boosted power can also be cut off, after the three-phase separation circuit driving chip fails, the three-phase separation module can also be cut off, so as to achieve the effect of timely cutting off the motor boosted power. With the design of the diagnosis and protection mechanism of the controller, it can be achieved that no matter which integrated chip is damaged or the other part of the controller fails, the motor boosted power can be cut off timely to avoid more serious accidents and protect the safety of drivers.

The specific steps of the high-precision phase current sampling method performed in the three-phase phase current sampling circuit module described in the control method of the present invention are as follows:

Step 1: obtain the magnitude of the current of the previous cycle and the three-phase PWM duty ratio, and use the obtained phase current value and PWM value of the previous cycle to judge the interval of the present current, based on the characteristic that the motor current does not change dramatically, but slowly changes, it makes the present current and the current of the previous cycle can be in the same interval, and set the corresponding gain value AV and the bias voltage Voos of the amplifier according to the interval;

Step 2: calculate the actual value of the phase current $I_{PX}$, wherein, X represents the U-phase, V-phase, and W-phase in the three-phase current, for example, the actual value of the U-phase current is $I_{PU}$, the actual value of the V-phase current is $I_{PV}$, and the actual value of the W-phase current is $I_{PW}$, and in the following specific calculation methods, the meaning of X is the same:

Step 1: determine the sampling resolution 2n of the analog-to-digital converter, respectively measure the sampling value $P_{ADCX}$ of the analog-to-digital converter corresponding to the three phases of U, V, and W, set the reference voltage value $V_{REF}$, and calculate the sampling voltage $V_{CSXO}$ of the analog-to-digital converter by using the formula (1-1):

$$V_{CSXO} = \frac{P_{ADCX}}{2^{2n}} \times V_{REF}$$

Step 2: according to the set bias voltage Voos and the gain value AV of the amplifier, calculate the voltage $\Delta V_{IOS}$ at both ends of the sampling resistor by using the formula (1-2):

$$\Delta V_{IOS} = \frac{V_{CSXO} - V_{OOS}}{AV}$$

Step 3: according to the resistance value R of the sampling resistor, calculate the sampling current $I_X$ passing through the sampling resistor by using formula (1-3): $I_X = \dfrac{\Delta V_{IOS}}{R}$ ;

substitute formula (1-2) into formula (1-3) to obtain formula (1-4):

$$I_X = \frac{\Delta V_{IOS}}{R} = \frac{V_{CSXO} - V_{OOS}}{AV \times R}$$

Step 4: measure the zero current $I_{X0}$ of the sampling resistor and the sampling voltage $V_{X0}$ of the analog-to-digital converter under the zero current status, and calculate the phase current sampling value $I_{ps}$ according to the measured value and combined with formula (1-5): $I_{ps} = I_X - I_{X0}$;

substitute formula (1-4) into formula (1-5) to obtain formula (1-6): $I_{ps} = I_X -$

$$I_{X0} = \frac{V_{CSXO} - V_{OOS}}{AV \times R} - \frac{V_{X0} - V_{OOS}}{AV \times R} = \frac{V_{CSXO} - V_{X0}}{AV \times R}$$

Step 5: according to the current bias value $I_{OFF}$ caused by the connection error in the circuit connection and the coefficient change K caused by the external environmental factors, calculate the actual value $I_{PX}$ of the phase current by using the formula (1-7): $I_{PX} = K\, I_{ps} + I_{OFF}$;

substitute formula (1-6) into formula (1-7) to obtain formula (1-8): $I_{PX} = K\, I_{ps} +$

$$I_{OFF} = I_{PX} = K \cdot \frac{V_{CSXO} - V_{X0}}{AV \times R} + I_{OFF}$$

Step 6: the actual value $I_{PX}$ of phase current can be calculated by combining formula (1-1) and formula (1-8).

Step 3: calculate the phase current vector length $I_s$, and the specific calculation method is: calculate the current vector length Is according to the calculated U-phase actual current value $I_{Pu}$ and W-phase actual current value $I_{PW}$, $I_s =$

$$\sqrt{\frac{4}{3}\left(I_{PU}{}^2 + I_{PW}{}^2 + I_{PU} \times I_{PW}\right)}$$

Step 4: calculate the phase current sampling accuracy $I_{CX}$, the specific calculation method is: firstly, calculate the sampling accuracy of the single-phase current $I_{CX} = \dfrac{I_x \text{resolution}}{I_{ps}} = \dfrac{V_{REF}}{I_{ps} * R * AV * 2^{2n}}$ , wherein, $I_{ps}$ is the phase current sampling value, and Ix resolution is the $I_X$ unit value collected as the minimum unit; secondly, calculate the sampling accuracy $I_{CS}$ of the current vector length $I_S$, $I_{CS} = \dfrac{I_{s \text{ resolution}}}{I} = \dfrac{2V_{REF}}{I * R * AV * 2^{2n}}$ , in this formula, I is the current range to be measured, and $I_s$ resolution is the $I_s$ unit value collected as the minimum unit;

according to the formula of $I_{CS}$, it can be seen that under the condition that the resistance of the sampling resistor is constant, changing the amplifier gain value AV according to the different measured current sampling range I can control the current sampling precision, and the phase current sampling range is $\dfrac{-V_{OOS}}{R * AV} \sim \dfrac{V_{OOS}}{R * AV}$ .

The present invention applies the latest generation of motor rotation angle position sensor, which greatly improves the motor control performance; applies a three-phase separation circuit to ensure that the SCU can cut off the motor boosted power in a fault state, greatly improves the safety of the steering system, and can make the SCU failure rate reduce to below 500FIT; designs a new phase current sampling method that can keep the three-phase current sampling at a relatively high precision under various currents, which meets the real-time collection and control for the motor current, and can cut off the circuit in time to protect the entire system.

Although the specific embodiments of the present invention have been described above, those skilled in the art should understand that this is only an example, and the protection scope of the present invention is defined by the appended claims. Those skilled in the art can make various changes or modifications to these embodiments.

Claims

1. A controller circuit of an electric power steering system, including a three-phase electric motor (18), a micro-controller (1), a three-phase bridge module (5), and a three-phase electric motor phase voltage state feedback circuit (14);

   the micro-controller (1) includes at least three analog-to-digital conversion voltage collection ends;
   the three-phase electric motor (18) includes a U-phase end (1801), a V-phase end (1802) and a W-phase end (1803);
   the three-phase bridge module (5) includes a U-phase upper-bridge field effect transistor (Q1), a U-phase lower-bridge field effect transistor (Q4), a V-phase upper-bridge field effect transistor (Q2), a V-phase lower-bridge field effect transistor (Q5), a W-phase upper-bridge field effect transistor (Q3), and a W-phase lower-bridge field effect transistor (Q6);
   the three-phase electric motor phase voltage state feedback circuit (14) includes three voltage dividing circuits (1404, 1405, 1406), each of the voltage dividing circuits (1404, 1405, 1406) includes an original voltage end, a voltage dividing output end, and a ground end, and the three original voltage ends are one by one correspondingly connected with the U-phase end (1801), the V-phase end (1802) and the W-phase end (1803);
   the three voltage dividing output ends are electrically connected with the three analog-to-digital conversion voltage collection ends in a one-to-one correspondence;
   the voltage dividing circuit (1404, 1405, 1406) is used to divide the phase voltage of the three-phase electric motor (18) to be within the voltage range supported by the analog-to-digital conversion voltage collection end;
   the U-phase end (1801) is electrically connected with the source electrode of the U-phase upper-bridge field effect transistor (Q1), the drain electrode of the U-phase lower-bridge field effect transistor (Q4), and the original voltage end of the corresponding voltage dividing circuit (1404, 1405, 1406);
   the V-phase end (1802) is electrically connected with the source electrode of the V-phase upper-bridge field effect transistor (Q2), the drain electrode of the V-phase lower-bridge field effect transistor (Q5), and the original voltage end of the corresponding voltage dividing circuit (1404, 1405, 1406);
   the W-phase end (1803) is electrically connected with the source electrode of the W-phase upper-bridge field effect transistor (Q3), the drain electrode of the W-phase lower-bridge field effect transistor (Q6), and the original voltage end of the corresponding voltage dividing circuit (1404, 1405, 1406);
   wherein the three-phase electric motor phase voltage state feedback circuit (14) further includes three pull-up circuits (1401, 1402, 1403), and the three pull-up circuits (1401, 1402, 1403) are used for the pull up of the U-phase end (1801), the V-phase end (1802), and the W-phase end (1803) in a one-to-one correspondence;
   the micro-controller (1) is used to perform power-on fault diagnosis for the U-phase upper-bridge field effect transistor (Q1) and/or the U-phase lower-bridge field effect transistor (Q4), by controlling the on or off of the U-phase upper-bridge field effect transistor(Q1) and the U-phase lower-bridge field effect transistor (Q4) respectively, and based on the voltage collected by the corresponding analog-to-digital conversion voltage collection end; the micro-controller (1) is also used to perform power-on fault diagnosis for the V-phase upper-bridge field effect transistor (Q2) and/or the V-phase lower-bridge field effect transistor (Q5), by controlling the on or off of the V-phase upper-bridge field effect transistor (Q2) and the V-phase lower-bridge field effect transistor (Q5) respectively, and based on the voltage collected by the corresponding analog-to-digital conversion voltage collection end; the micro-controller (1) is also used to perform power-on fault diagnosis for the W-phase upper-bridge field effect transistor (Q3) and/or the W-phase lower-bridge field effect transistor (Q6), by controlling the on or off of the W-phase upper-bridge field effect transistor (Q3) and the W-phase lower-bridge field effect transistor (Q6) respectively, and based on the voltage collected by the corresponding analog-to-digital conversion voltage collection end;
   the controller circuit is **characterized in that** the controller circuit further includes a three-phase separation module (6), the three-phase separation module (6) is connected in series between the three-phase electric motor (18) and the three-phase bridge module (5), and the three-phase separation module (6) is used to cut off the connection between the three-phase electric motor (18) and the three-phase bridge module (5) when the steering system controller fails;
   wherein the three-phase separation module (6) includes a U-phase separation field effect transistor (Q7), a V-phase separation field effect transistor (Q8), and a W-phase separation field effect transistor (Q9); the controller circuit also includes a motor freewheeling circuit (15); the motor freewheeling circuit (15) includes a U-phase diode (D1), a V-phase diode (D2), and a W-phase diode (D3); and the anode of the U-phase diode (D1), the anode of the V-phase diode (D2), and the anode of the W-phase diode (D3) are all grounded;
   the grid electrode of the U-phase separation field effect transistor (Q7) is electrically connected with the cathode of the U-phase diode (D1), the source electrode of the U-phase separation field effect transistor (Q7) is electrically connected with the U-phase terminal (1801), and the drain electrode of the U-phase separation field effect transistor (Q7) is electrically connected with the source electrode of the U-phase upper-bridge field effect transistor (Q1) ;

the grid electrode of the V-phase separation field effect transistor (Q8) is electrically connected with the cathode of the V-phase diode (D2), the source electrode of the V-phase separation field effect transistor (Q8) is electrically connected with the V-phase end (1802), and the drain electrode of the V-phase separation field effect transistor (Q8) is electrically connected with the source electrode of the V-phase upper-bridge field effect transistor (Q2) ;

the grid electrode of the W-phase separation field effect transistor (Q9) is electrically connected with the cathode of the W-phase diode (D3), the source electrode of the W-phase separation field effect transistor (Q9) is electrically connected with the W-phase end (1803), and the drain electrode of the W-phase separation field effect transistor (Q9) is electrically connected with the source electrode of the W-phase upper-bridge field effect transistor (Q3) .

2. The controller circuit of the electric power steering system according to claim 1, which is **characterized in that** the voltage at the voltage dividing output end corresponding to the U-phase end (1801) is a U-phase feedback voltage;

the micro-controller (1) is used to control both the U-phase upper-bridge field effect transistor (Q1) and the U-phase lower-bridge field effect transistor (Q4) to turn off, then obtain the U-phase feedback voltage and use it as a first U-phase feedback voltage, when the first U-phase feedback voltage is equal to a U-phase first default value, determine that the U-phase upper-bridge field effect transistor (Q1) has a short circuit fault, and when the first U-phase feedback voltage is equal to 0, determine that the U-phase lower-bridge field effect transistor (Q4) has a short circuit fault, when the first U-phase feedback voltage is not equal to the U-phase first default value and not equal to 0 and not equal to a U-phase second default value, determine that the U-phase upper-bridge field effect transistor (Q1) and the U-phase Phase-down bridge field effect transistor (Q4) are in an unexpected status;

when the first U-phase feedback voltage is equal to the U-phase second default value, the micro-controller (1) is also used to control the U-phase upper-bridge field effect transistor (Q1) to turn on, and at the same time, control the U-phase lower-bridge field effect transistor (Q4) to turn off, then obtain the U-phase feedback voltage and use it as a second U-phase feedback voltage, and when the second U-phase feedback voltage is not equal to the U-phase first default value, determine that the U-phase upper-bridge field effect transistor (Q1) has a broken circuit fault;

when the second U-phase feedback voltage is equal to the U-phase first default value, the micro-controller (1) is also used to control the U-phase upper-bridge field effect transistor (Q1) to turn off, and at the same time, control the U-phase lower-bridge field effect transistor (Q4) to turn on, then obtain the U-phase feedback voltage and use it as a third U-phase feedback voltage, and when the third U-phase feedback voltage is equal to 0, determine that both the U-phase upper-bridge field effect transistor (Q1) and the U-phase lower-bridge field effect transistor (Q4) work normally, when the third U-phase feedback voltage is not equal to 0, determine that the U-phase lower-bridge field effect transistor (Q4) has a broken circuit fault;

the voltage at the voltage dividing output end corresponding to the V-phase end (1802) is a V-phase feedback voltage;

the micro-controller (1) is also used to control both the V-phase upper-bridge field effect transistor (Q2) and the V-phase lower-bridge field effect transistor (Q5) to turn off, then obtain the V-phase feedback voltage and use it as a first V-phase feedback voltage, when the first V-phase feedback voltage is equal to a V-phase first default value, determine that the V-phase upper-bridge field effect transistor (Q2) has a short circuit fault, and when the first V-phase feedback voltage is equal to 0, determine that the V-phase lower-bridge field effect transistor (Q5) has a short circuit fault, when the first V-phase feedback voltage is not equal to the V-phase first default value and not equal to 0 and not equal to a V-phase second default value, determine that the V-phase upper-bridge field effect transistor (Q2) and the V-phase lower-bridge field effect transistor (Q5) are in an unexpected status;

when the first V-phase feedback voltage is equal to the V-phase second default value, the micro-controller (1) is also used to control the V-phase upper-bridge field effect transistor (Q2) to turn on, and at the same time, control the V-phase lower-bridge field effect transistor (Q5) to turn off, then obtain the V-phase feedback voltage and use it as a second V-phase feedback voltage, and when the second V-phase feedback voltage is not equal to the V-phase first default value, determine that the V-phase upper-bridge field effect transistor (Q2) has a broken circuit fault;

when the second V-phase feedback voltage is equal to the V -phase first default value, the micro-controller (1) is also used to control the V -phase upper-bridge field effect transistor (Q2) to turn off, and at the same time, control the V -phase lower-bridge field effect transistor (Q5) to turn on, then obtain the V- phase feedback voltage and use it as a third V -phase feedback voltage, and when the third V -phase feedback voltage is equal to 0, determine that both the V -phase upper-bridge field effect transistor (Q2) and the V -phase lower-bridge field effect transistor (Q5) work normally, when the third V -phase feedback voltage is not equal to 0, determine that the V -phase lower-bridge field effect transistor (Q5) has a broken circuit fault;

the voltage at the voltage dividing output end corresponding to the W-phase end (1803) is a W-phase feedback voltage;

the micro-controller (1) is also used to control both the W-phase upper-bridge field effect transistor(Q3) and the W-phase lower-bridge field effect transistor (Q6) to turn off, then obtain the W-phase feedback voltage and use it as a first W-phase feedback voltage, when the first W-phase feedback voltage is equal to a W-phase first default value, determine that the W-phase upper-bridge field effect transistor (Q3) has a short circuit fault, and when the first W-phase feedback voltage is equal to 0, determine that the W-phase lower-bridge field effect transistor (Q6) has a short circuit fault, when the first W-phase feedback voltage is not equal to the W-phase first default value and not equal to 0 and not equal to a W-phase second default value, determine that the W-phase upper-bridge field effect transistor (Q3) and the W-phase lower-bridge field effect transistor (Q6) are in an unexpected status;

when the first W-phase feedback voltage is equal to the W-phase second default value, the micro-controller (1) is also used to control the W-phase upper-bridge field effect transistor (Q3) to turn on, and at the same time, control the W-phase lower-bridge field effect transistor (Q6) to turn off, then obtain the W-phase feedback voltage and use it as a second W-phase feedback voltage, and when the second W-phase feedback voltage is not equal to the W-phase first default value, determine that the W-phase upper-bridge field effect transistor (Q3) has a broken circuit fault;

when the second W-phase feedback voltage is equal to the W-phase first default value, the micro-controller (1) is also used to control the W-phase upper-bridge field effect transistor (Q3) to turn off, and at the same time, control the W-phase lower-bridge field effect transistor (Q6) to turn on, then obtain the W-phase feedback voltage and use it as a third W-phase feedback voltage, and when the third W-phase feedback voltage is equal to 0, determine that both the W-phase upper-bridge field effect transistor (Q3) and the W-phase lower-bridge field effect transistor (Q6) work normally, when the third W-phase feedback voltage is not equal to 0, determine that the W-phase lower-bridge field effect transistor (Q6) has a broken circuit fault.

3. The controller circuit of the electric power steering system according to claim 1, which is **characterized in that** the pull-up circuit ( 1401, 1402, 1403 ) corresponding to the U-phase end (1801) includes a first resistor (R1), the voltage dividing circuit (1404, 1405, 1406) corresponding to the U-phase end (1801) includes a second resistor (R2) and a third resistor (R3) , and one end of the first resistor (R1) is electrically connected with the vehicle power supply, and both of the other end of the first resistor (R1) and one end of the second resistor (R2) are electrically connected with the original voltage end of the voltage dividing circuit (1404, 1405, 1406) corresponding to the U-phase end (1801) , and both of the other end of the second resistor (R2) and one end of the third resistor (R3) are electrically connected with the voltage dividing output end of the voltage dividing circuit (1404, 1405, 1406) corresponding to the U-phase end (1801) , and the other end of the third resistor (R13) is grounded;

the pull-up circuit(1401, 1402, 1403) corresponding to the V-phase end (1802) includes a fourth resistor (R4) , and the voltage dividing circuit corresponding to the V-phase end includes a fifth resistor (R5) and a sixth resistor (R6) , and one end of the fourth resistor (R4) is electrically connected with the vehicle power supply, and both of the other end of the fourth resistor (R4) and one end of the fifth resistor (R5) are electrically connected with the original voltage end of the voltage dividing circuit (1404, 1405, 1406) corresponding to the V-phase end (1802) , and both of the other end of the fifth resistor (R5) and one end of the sixth resistor (R6) are electrically connected with the voltage dividing output end of the voltage dividing circuit (1404, 1405, 1406) corresponding to the V-phase end (1802) , and the other end of the sixth resistor (R6) is grounded;

the pull-up circuit (1401, 1402, 1403) corresponding to the W-phase end (1803) includes a seventh resistor (R7) , the voltage dividing circuit (1404, 1405, 1406) corresponding to the W-phase end (1803) includes a eighth resistor (R8) and a ninth resistor (R9) , and one end of the seventh resistor (R7) is electrically **connected** with the vehicle power supply, and both of the other end of the seventh resistor (R7) and one end of the eighth resistor (R8) are electrically connected with the original voltage end of the voltage dividing circuit (1404, 1405, 1406) corresponding to the W-phase end (1803) , and both of the other end of the eighth resistor (R8) and one end of the ninth resistor (R9) are electrically connected with the voltage dividing output end of the voltage dividing circuit (1404, 1405, 1406) corresponding to the W-phase end (1803) , and the other end of the ninth resistor (R9) is grounded.

4. A sampling method for the three-phase phase current of the controller circuit of an electric power steering system, which is **characterized in that**,

the sampling method is realized by the controller circuit according to any one of claims 1 to 3;

the controller circuit includes a three-phase electric motor (18) , a micro-controller (1) , a three-phase bridge module (5) , a three-phase phase current sampling circuit module (8) , and a three-phase bridge driving chip (9) ;

the micro-controller (1) is used to generate a PWM control signal and transmit it to the three-phase bridge driving chip (9) ;

the three-phase bridge driving chip (9) is used to control the on or off of each field effect transistor in the three-phase bridge module (5) according to the PWM control signal;

the sampling method includes the following steps:

the three-phase phase current sampling circuit module (8) collects the phase voltage signals of the lower-bridge arms of at least two phases in the three-phase bridge module (5) , and transmits the phase voltage signals to the three-phase bridge driving chip (9) ;

a differential operational amplifier inside the three-phase bridge driving chip (9) amplifies the phase voltage signal to obtain the amplified phase voltage signal and transmit it to the micro-controller (1) ;

the analog-to-digital converter in the micro-controller (1) converts the amplified phase voltage signal into a digital voltage;

the micro-controller (1) performs phase current sampling calculation based on the digital voltage to obtain the actual value of the phase current, and the micro-controller (1) uses the actual value of the phase current as a feedback signal of the motor current control;

wherein, the micro-controller (1) sets the gain value and the bias voltage value of the differential operational amplifier in the current cycle according to the actual value of the phase current in the previous cycle of the current cycle and/or the duty ratio of the PWM control signal in the previous cycle of the current cycle, to control the sampling precision of the phase current of the three-phase electric motor (18) .

5. The sampling method for the three-phase phase current of the controller circuit of an electric power steering system according to claim 4, which is **characterized in that**,

the three-phase phase current sampling circuit module (8) includes a current sampling resistor for collecting the phase voltage signals of the lower-bridge arms of the two phases in the three-phase bridge module (5) , and the collected phase voltage signals are a first phase voltage signal and a second phase voltage signal respectively, the actual value of the phase current corresponding to the first phase voltage signal is the actual value of the first phase current, and the actual value of the phase current corresponding to the second phase voltage signal is the actual value of the second phase current;

the sampling method further includes the following steps:

calculate the value of the phase current vector length Is according to the following formula,

$$I_s = \sqrt{\frac{4}{3}\left(I_{P1}{}^2 + I_{P2}{}^2 + I_{P1} \times I_{P2}\right)};$$

wherein, $I_{P1}$ represents the actual value of the first phase current and $I_{P2}$ represents the actual value of the second phase current;

the step that setting the gain value and the bias voltage value of the differential operational amplifier in the current cycle according to the actual value of the phase current in the previous cycle of the current cycle and/or the duty ratio of the PWM control signal in the previous cycle of the current cycle includes the following steps:

partition the measured current according to the phase current vector length Is of the previous cycle of the current cycle and/or the duty ratio of the PWM control signal of the previous cycle of the current cycle;

set the gain value and the bias voltage value of the differential operational amplifier of the current cycle according to the partition where the measured current is located;

optionally, the steps of setting the gain value and the bias voltage value of the differential operational amplifier of the current cycle according to the partition where the measured current is located includes: the micro-controller (1) sets the gain value and the bias voltage value of the differential operational amplifier of the current cycle by the SPI command according to the partition where the measured current is located.

6. A controller circuit of an electric power steering system, including a micro-controller (1), a power management chip (2), a power interface filter circuit module (3), a DC voltage stabilizing module (4), a three-phase bridge driving chip (9), a three-phase separation circuit driving chip (10), a CAN transceiver (11) and a permanent magnet synchronous motor M, wherein

one end of the battery (12) is grounded, the other end of the battery (12) is connected with a fuse (13) in series then divided into two channels, which are respectively connected with the power input port of the power management chip (2) and the power input port of the power interface filter circuit module (3); the power output port of the power interface filter circuit module (3) is divided into two channels, which are respectively connected with the power input port of the three-phase bridge driving chip (9) and the current input port of the DC voltage stabilizing module (4), the current output port of the DC voltage stabilizing module (4) is connected with the current input port of the three-phase bridge module (5), and the $V_{MCU}$ port of the power management chip (2) is connected with the micro-controller (1) the SPI port of the power management chip (2) is connected with the SPI port of the micro-controller (1), the SPI port of the micro-controller (1) is also connected with the SPI port of the three-phase bridge driving chip (9) and the SPI port of the motor corner position sensor (7), the CAN port of the micro-controller (1) is connected with the CAN transceiver (11), and the control signal output port of the power management chip (2) and the control signal output port of the micro-controller (1) are both connected with the signal input port of the three-phase separation circuit driving chip (10), the signal output port of the three-phase separation circuit driving chip (10) is connected with the control signal receiving port of the three-phase separation module (6), and the power input port of the three-phase bridge module (5) is connected with the power input port the three-phase current sampling circuit module (8) and the power input port of the three-phase bridge driving chip (9), the signal output port of the three-phase bridge module (5) is connected with the signal input port of the three-phase separation module (6), the signal output port of the three-phase separation module (6) is connected with the signal input port of the permanent magnet synchronous motor M, and the signal output port of the permanent magnet synchronous motor M is connected with the motor corner position sensor (7) ; the three-phase phase current sampling circuit module (8) is also connected with the three-phase current signal input port of the three-phase bridge driving chip (9);

the controller circuit is **characterized in that** the three-phase separation module (6) is also connected with low-power diodes D1 ~ D3, so that a motor freewheeling circuit (15) is formed between the three-phase bridge module (5), the three-phase separation module (6) and the low-power diodes D1 ~ D3;

wherein the motor freewheeling circuit (15) is connected as follows: the current input port of the three-phase bridge module (5) is divided into three channels, which are respectively connected with the drain electrode of the field effect transistor Q1, the drain electrode of the field effect transistor Q2, and the drain electrode of the field effect transistor Q3, and the source electrode of the field effect transistor Q1 is divided into two channels, which are respectively connected with the drain electrode of the field effect transistor Q4 and the drain electrode of the field effect transistor Q7, the source electrode of field effect transistor Q7 is connected with the U-phase of the three-phase electric motor, and the gate electrode of the field effect transistor Q7 is connected with the cathode of the diode D1, the source electrode of the field effect transistor Q2 is divided into two channels, which are respectively connected with the drain electrode of the field effect transistor Q8 and the drain electrode of the field effect transistor Q5, and the gate electrode of the field effect transistor Q8 is connected with the diode D2, the source electrode of the field effect transistor Q8 is connected with the V-phase of the three-phase electric motor, and the source electrode of the field effect transistor Q3 is divided into two channels, which are respectively connected with the drain electrode of the field effect transistor Q6 and the drain electrode of the field effect transistor Q9, the gate electrode of the field effect transistor Q9 is connected with the diode D3, the source electrode of the field effect transistor Q9 is connected with the V-phase of the three-phase electric motor, the source electrode of the field effect transistor Q4, the source electrode of the field effect transistor Q5, and the source electrode of the field effect transistor Q6 are joined together then grounded, the anode of the diode D1, the anode of the diode D2, and the anode of the diode D3 are joined together then grounded;

the gate electrodes of the field effect transistors Q1 to Q6 are jointed together then connected with the three-phase bridge driving chip (9).

7. The controller circuit of an electric power steering system according to claim 6, which is **characterized in that** a three-phase electric motor phase voltage state feedback circuit (14) is also arranged and connected with between the three-phase bridge module (5), the three-phase bridge driving chip (9) and the micro-controller (1).

8. The controller circuit of an electric power steering system according to claim 6, which is **characterized in that** the specific connection methods of the filter circuit in the power interface filter circuit module are as follows: the VBAT port is divided into nine channels, which are respectively connected with one end of the capacitor C1, one end of the capacitor C2, one end of the capacitor C3, one end of the capacitor C4, and one end of the capacitor C5, one end of the capacitor C6, one end of the capacitor C7, one end of the capacitor C8, one end of the inductor L1, the other end of the capacitor C1 is divided into four channels, which are respectively connected with HGND, one end of the capacitor C14, the other end of the capacitor C2, and one end of the capacitor C15, the other end of the capacitor C14 is joined with the other end of the capacitor C15 together then grounded, the other end of the capacitor C3 is divided into eleven channels, which are respectively connected with the ground, the other end of the capacitor C4, the other end of the capacitor C5, and the other end of the capacitor C6, the other end of the capacitor C7, the other end of the capacitor C8, one end of the capacitor C9, one end of the capacitor C10, one end of the capacitor C16, one end of the capacitor C17, and one end of the capacitor C18, the other end of the capacitor C9 is divided into six channels, which are respectively connected with the other end of the inductor L1, the other end of the capacitor C10, one end of the capacitor C11, one end of capacitor the C12, one end of the capacitor C13, and the VBAT1 port, the other end of the capacitor C16 is connected with HGND1, the other end of the capacitor C17 is connected with HGND2, and the other end of the capacitor C18 is connected with HGND3, and the other end of the capacitor C11, the other end of the capacitor C12, and the other end of the capacitor C13 are joined together then grounded;

alternatively, the HGND, HGND1, HGND2, and HGND3 are the screw holes on the metal shell.

9. The controller circuit of an electric power steering system according to claim 7, which is **characterized in that** the specific connection methods of the three-phase electric motor phase voltage state feedback circuit (14) are as follows: the U-phase of the three-phase electric motor is connected with the source electrode of the field effect transistor Q1, the drain electrode of the field effect transistor Q4, one end of the resistor R1, one end of the resistor R2, the V-phase of the three-phase electric motor is divided into four channels, which are respectively connected with the source electrode of the field effect transistor Q2, the drain electrode of the field effect transistor Q5, one end of the resistor R4, and one end of the resistor R5, the W-phase of the three-phase electric motor is divided into four channels, which are respectively connected with the source electrode of the field effect transistor Q3, the drain electrode of the field effect transistor Q6, one end of the resistor R7, one end of the resistor R8, the drain electrode of the field effect transistor Q1, the drain electrode of the field effect transistor Q2, the drain electrode of the field effect transistor Q3 are joined together then connected with VBAT, the source electrode of the field effect transistor Q4, the source electrode of the field effect transistor Q5, and the source electrode of the field effect transistor Q6 are joined together then grounded, the other end of the resistor R1, the other end of the resistor R4, the other end of the resistor R7 are connected with VBAT, the other end of the resistor R2 is divided into three channels, which are respectively connected with one end of the resistor R3, one end of the capacitor C21, and the AD1 port of MCU, the other end of the resistor R5 is divided into three channels, which are respectively connected with one end of the resistor R6, one end of the capacitor C22, and the AD2 port of MCU, the other end of the resistor R8 is divided into three channels, which are respectively connected with one end of the resistor R9, one end of the capacitor C23, and the AD3 port of MCU, the other end of the resistor R3 and the other end of the capacitor C21 are joined together then grounded, the other end of the resistor R6 and the other end of the capacitor C22 are joined together then grounded, the other end of the resistor R9 and the other end of the capacitor C23 are joined together then grounded;

the gate electrodes of the field effect transistors Q1 to Q6 are jointed together then connected with the three-phase bridge driving chip (9);
optionally, the three-phase electric motor phase voltage state feedback circuit (14) can perform the power-on fault diagnose of the three-phase bridge.

10. The control method of the controller circuit of an electric power steering system according to claim 6, which is **characterized in that** it is carried out according to the following steps:

S1. pre-set a boost curve or a boost model in the micro-controller (1);
S2. the micro-controller (1) collects an automobile ignition signal, a vehicle speed signal, a steering wheel torque signal, and a steering wheel rotation angle signal;
S3'. based on the boost curve or the boost model, and according to the relevant data collected in S2, obtain a current signal setting and a rotational speed signal setting;
S3. the three-phase phase current sampling module (8) performs high-precision sampling for the three phase currents to obtain the actual three phase current signals of the motor, and transmit the signal to the micro-controller (1); the action in synchronization with this: the motor rotation angle position sensor (7) transmits the actual rotation speed signal of the motor synchronously collected to the micro-controller (1);
S4. the micro-controller (1) synchronously transmits the actual three phase current signals of the motor, the actual rotation speed signal of the motor and the corresponding current signal setting, the rotation speed signal setting respectively to the motor current closed-loop controller and the motor rotation speed closed-loop controller inside the micro-controller (1), and performs a closed-loop control processing to obtain a current control signal and a rotation speed control signal;
S5. transmit the current control signal and the rotation speed control signal to the PWM modulator in the micro-controller (1) to generate a three-phase bridge control signal;

S6. transmit the three-phase bridge control signal to the three-phase bridge driving chip (9) to drive the on/off of the six field effect transistors Q1 ~ Q6 in the three-phase bridge module (5), so as to control the motor to generate corresponding motor boosted power;

optionally, the specific steps of the three-phase current high-precision sampling method described in step S3 are as follows:

Step 1: obtain the magnitude of the phase current in the previous cycle and the three-phase PWM duty ratio;

Step 2: calculate the actual value $I_{PX}$ of the phase current;

Step 3: calculate the value of the phase current vector length $I_S$;

Step 4: calculate the value of the phase current sampling precision $I_{CS}$;

Step 5: partition the measured current I according to the two conditions of the three-phase PWM duty ratio or the current vector length Is;

Step 6: modify the gain value AV and the bias voltage $V_{OOS}$ of the amplifier through the SPI instructions in each control cycle of the analog-to-digital converter for different regions, so as to control the sampling precision of the phase current of the three-phase electric motor;

X in the above steps represents U-phase, V-phase, and W-phase in the three phase current;

optionally, the specific calculation method of step 2 is as follows:

(1) determine the sampling resolution 2n of the analog-to-digital converter, respectively measure the sampling value $P_{ADCX}$ of the analog-to-digital converter corresponding to the three phases of U, V, and W, set the reference voltage value $V_{REF}$, and calculate the sampling voltage $V_{CSXO}$ of the analog-to-digital converter, $V_{CSXO} = \frac{P_{ADCX}}{2^{2n}} \times V_{REF}$;

(2) set the bias voltage $V_{OOS}$, determine the gain value AV of the amplifier, and calculate the voltage $\Delta V_{IOS}$ across the sampling resistor, $\Delta V_{IOS} = \frac{V_{CSXO} - V_{OOS}}{AV}$;

(3) calculate the sampling current IX through the sampling resistor according to the resistance value R of the sampling resistor, $I_X = \frac{\Delta V_{IOS}}{R}$;

(4) measure the zero current $I_{X0}$ of the sampling resistor and the sampling voltage $V_{X0}$ of the analog-to-digital converter under the zero current status, and calculate the phase current sampling value $I_{ps}$ according to the measured value, $I_{ps} = I_X - I_{X0}$;

(5) calculate the actual value $I_{PX}$ of the phase current according to the current bias value $I_{OFF}$ caused by the connection error in the circuit connection and the coefficient change K caused by the external environmental factors, $I_{PX} = K\, I_{ps} + I_{OFF}$.

11. The control method of the controller circuit of the electric power steering system according to claim 10, which is **characterized in that** the calculation method in step 3 is to calculate the current vector length Is,

$$I_s = \sqrt{\frac{4}{3}\left(I_{PU}{}^2 + I_{PW}{}^2 + I_{PU} \times I_{PW}\right)}$$

according to the calculated U-phase actual current value IPu and W-phase actual current value IPW.

12. The control method of the controller circuit of the electric power steering system according to claim 10, which is **characterized in that** the specific calculation method of step 4 is: firstly, calculate the sampling precision of the single-phase current $I_{CX} = \frac{I_X \text{resolution}}{I_{ps}} = \frac{V_{REF}}{I_{ps} * R * AV * 2^{2n}}$, wherein Ips is the phase current sampling value, and IX resolution is the IX unit value collected in the minimum unit; secondly, calculate the sampling precision ICS of the current vector length IS, $I_{CS} = \frac{I_s \text{resolution}}{I} = \frac{2V_{REF}}{I * R * AV * 2^{2n}}$, wherein I is the measured current range and Is resolution is the Is unit value collected in the minimum unit.

**Patentansprüche**

1. Steuerschaltung einer elektrischen Servolenkung, beinhaltend einen Dreiphasenelektromotor (18), eine Mikrosteuerung (1), ein Dreiphasenbrückenmodul (5) und eine Dreiphasenelektromotorphasenspannungszustandsrückkopplungsschaltung (14);

wobei die Mikrosteuerung (1) zumindest drei Analog-Digital-Wandlungsspannungssammlungsenden beinhaltet;

der Dreiphasenelektromotor (18) ein U-Phasenende (1801), ein V-Phasenende (1802) und ein W-Phasenende (1803) beinhaltet;

das Dreiphasenbrückenmodul (5) einen U-Phasen-Oberbrücken-Feldeffekttransistor (Q1), einen U-Phasen-Unterbrücken-Feldeffekttransistor (Q4), einen V-Phasen-Oberbrücken-Feldeffekttransistor (Q2), einen V-Phasen-Unterbrücken-Feldeffekttransistor (Q5), einen W-Phasen-Oberbrücken-Feldeffekttransistor (Q3) und einen W-Phasen-Unterbrücken-Feldeffekttransistor (Q6) beinhaltet;

die Dreiphasenelektromotorphasenspannungszustandsrückkopplungsschaltung (14) drei Spannungsteilungsschaltungen (1404, 1405, 1406) beinhaltet, jede der Spannungsteilungsschaltungen (1404, 1405, 1406) ein ursprüngliches Spannungsende, ein Spannungsteilungsausgangsende und ein Erdungsende beinhaltet und die drei ursprünglichen Spannungsenden eine nach der anderen entsprechend mit dem U-Phasenende (1801), dem V-Phasenende (1802) und dem W-Phasenende (1803) verbunden sind;

die drei Spannungsteilungsausgangsenden elektrisch mit den drei Analog-Digital-Wandlungsspannungssammlungsenden in einer Eins-zu-Eins-Entsprechung verbunden sind;

die Spannungsteilungsschaltung (1404, 1405, 1406) verwendet wird, um die Phasenspannung des Dreiphasenelektromotors (18) zu teilen, um innerhalb des Spannungsbereichs zu sein, der durch das Analog-Digital-Wandlungsspannungssammlungsende unterstützt wird;

das U-Phasenende (1801) elektrisch mit der Source-Elektrode des U-Phasen-Oberbrücken-Feldeffekttransistors (Q1), der Drain-Elektrode des U-Phasen-Unterbrücken-Feldeffekttransistors (Q4) und dem ursprünglichen Spannungsende der entsprechenden Spannungsteilungsschaltung (1404, 1405, 1406) verbunden ist;

das V-Phasenende (1802) elektrisch mit der Source-Elektrode des V-Phasen-Oberbrücken-Feldeffekttransistors (Q2), der Drain-Elektrode des V-Phasen-Unterbrücken-Feldeffekttransistors (Q5) und dem ursprünglichen Spannungsende der entsprechenden Spannungsteilungsschaltung (1404, 1405, 1406) verbunden ist;

das W-Phasenende (1803) elektrisch mit der Source-Elektrode des W-Phasen-Oberbrücken-Feldeffekttransistors (Q3), der Drain-Elektrode des W-Phasen-Unterbrücken-Feldeffekttransistors (Q6) und dem ursprünglichen Spannungsende der entsprechenden Spannungsteilungsschaltung (1404, 1405, 1406) verbunden ist;

wobei die Dreiphasenelektromotorphasenspannungszustandsrückkopplungsschaltung (14) ferner drei Hochziehschaltungen (1401, 1402, 1403) beinhaltet und die drei Hochziehschaltungen (1401, 1402, 1403) zum Hochziehen des U-Phasenendes (1801), des V-Phasenendes (1802) und des W-Phasenendes (1803) in einer Eins-zu-Eins-Entsprechung verwendet werden;

die Mikrosteuerung (1) verwendet wird, um Einschaltfehlerdiagnose für den U-Phasen-Oberbrücken-Feldeffekttransistor (Q1) und/oder den U-Phasen-Unterbrücken-Feldeffekttransistor (Q4) durchzuführen, indem das Ein- oder Ausschalten jeweils des U-Phasen-Oberbrücken-Feldeffekttransistors (Q1) und des U-Phasen-Unterbrücken-Feldeffekttransistors (Q4) gesteuert wird, und basierend auf der Spannung, die durch das entsprechende Analog-Digital-Umwandlungsspannungssammlungsende gesammelt wird; die Mikrosteuerung (1) auch verwendet wird, um Einschaltfehlerdiagnose für den V-Phasen-Oberbrücken-Feldeffekttransistor (Q2) und/oder oder den V-Phasen-Unterbrücken-Feldeffekttransistor (Q5) durchzuführen, indem das Ein- oder Ausschalten jeweils des V-Phasen-Oberbrücken-Feldeffekttransistors (Q2) und des V-Phasen-Unterbrücken-Feldeffekttransistors (Q5) gesteuert wird, und basierend auf der Spannung, die durch das entsprechende Analog-Digital-Umwandlungsspannungssammlungsende gesammelt wird; die Mikrosteuerung (1) auch verwendet wird, um Einschaltfehlerdiagnose für den W-Phasen-Oberbrücken-Feldeffekttransistor (Q3) und/oder den W-Phasen-Unterbrücken-Feldeffekttransistor (Q6) durchzuführen, indem das Ein- oder Ausschalten jeweils des W-Phasen-Oberbrücken-Feldeffekttransistors (Q3) und des W-Phasen-Unterbrücken-Feldeffekttransistors (Q6) gesteuert wird, und basierend auf der Spannung, die durch das entsprechende Analog-Digital-Umwandlungsspannungssammlungsende gesammelt wird;

die Steuerschaltung **dadurch gekennzeichnet ist, dass** die Steuerschaltung ferner ein Dreiphasentrennmodul (6) beinhaltet, das Dreiphasentrennmodul (6) in Reihe zwischen dem Dreiphasenelektromotor (18) und dem Dreiphasenbrückenmodul (5) verbunden ist und das Dreiphasentrennmodul (6) verwendet wird, um die Verbindung zwischen dem Dreiphasenelektromotor (18) und dem Dreiphasenbrückenmodul (5) zu unterbrechen, wenn die Lenkungssteuerung ausfällt;

wobei das Dreiphasentrennmodul (6) einen U-Phasen-Trennfeldeffekttransistor (Q7), einen V-Phasen-Trennfeldeffekttransistor (Q8) und einen W-Phasen-Trennfeldeffekttransistor (Q9) beinhaltet; die Steuerschaltung auch eine Motorfreilaufschaltung (15) beinhaltet; die Motorfreilaufschaltung (15) eine U-Phasen-Diode (D1), eine V-Phasen-Diode (D2) und eine W-Phasen-Diode (D3) beinhaltet; und die Anode der U-Phasen-Diode (D1), die Anode der V-Phasen-Diode (D2) und die Anode der W-Phasen-Diode (D3) alle geerdet sind;

die Gitterelektrode des U-Phasen-Trennfeldeffekttransistors (Q7) elektrisch mit der Kathode der U-Phasen-Diode (D1) verbunden ist, die Source-Elektrode des U-Phasen-Trennfeldeffekttransistors (Q7) elektrisch mit dem U-Phasen-Anschluss (1801) verbunden ist und die Drain-Elektrode des U-Phasen-Trennfeldeffekttransistors (Q7) elektrisch mit der Source-Elektrode des U-Phasen-Oberbrücken-Feldeffekttransistors (Q1) verbunden ist;

die Gitterelektrode des V-Phasen-Trennfeldeffekttransistors (Q8) elektrisch mit der Kathode der V-Phasen-Diode (D2) verbunden ist, die Source-Elektrode des V-Phasen-Trennfeldeffekttransistors (Q8) elektrisch mit dem V-Phasenende (1802) verbunden ist und die Drain-Elektrode des V-Phasen-Trennfeldeffekttransistors (Q8) elektrisch mit der Source-Elektrode des V-Phasen-Oberbrücken-Feldeffekttransistors (Q2) verbunden ist;

die Gitterelektrode des W-Phasen-Trennfeldeffekttransistors (Q9) elektrisch mit der Kathode der W-Phasen-Diode (D3) verbunden ist, die Source-Elektrode des W-Phasen-Trennfeldeffekttransistors (Q9) elektrisch mit dem W-Phasenende (1803) verbunden ist und die Drain-Elektrode des W-Phasen-Trennfeldeffekttransistors (Q9) elektrisch mit der Source-Elektrode des W-Phasen-Oberbrücken-Feldeffekttransistors (Q3) verbunden ist.

2. Steuerschaltung der elektrischen Servolenkung nach Anspruch 1, die **dadurch gekennzeichnet ist, dass** die Spannung an dem Spannungsteilungsausgangsende entsprechend dem U-Phasenende (1801) eine U-Phasen-Rückkopplungsspannung ist;

die Mikrosteuerung (1) verwendet wird, um sowohl den U-Phasen-Oberbrücken-Feldeffekttransistor (Q1) als auch den U-Phasen-Unterbrücken-Feldeffekttransistor (Q4) zu steuern, um sich auszuschalten, dann die U-Phasen-Rückkopplungsspannung zu erhalten und sie als eine erste U-Phasen-Rückkopplungsspannung zu verwenden, wenn die erste U-Phasen-Rückkopplungsspannung gleich einem ersten U-Phasenstandardwert ist, zu bestimmen, dass der U-Phasen-Oberbrücken-Feldeffekttransistor (Q1) einen Kurzschlussfehler aufweist, und wenn die erste U-Phasen-Rückkopplungsspannung gleich 0 ist, zu bestimmen, dass der U-Phasen-Unterbrücken-Feldeffekttransistor (Q4) einen Kurzschlussfehler aufweist, wenn die erste U-Phasen-Rückkopplungsspannung nicht gleich dem ersten U-Phasenstandardwert und nicht gleich 0 und nicht gleich einem zweiten U-Phasenstandardwert ist, zu bestimmen, dass der U-Phasen-Oberbrücken-Feldeffekttransistor (Q1) und der U-Phasen-Abwärtsphasenbrücken-Feldeffekttransistor (Q4) in einem unerwarteten Status sind;

wenn die erste U-Phasen-Rückkopplungsspannung gleich dem zweiten U-Phasenstandardwert ist, die Mikrosteuerung (1) auch verwendet wird, um den U-Phasen-Oberbrücken-Feldeffekttransistor (Q1) zu steuern, um sich einzuschalten, und gleichzeitig den U-Phasen-Unterbrücken-Feldeffekttransistor (Q4) zu steuern, um sich auszuschalten, dann die U-Phasen-Rückkopplungsspannung zu erhalten und sie als eine zweite U-Phasen-Rückkopplungsspannung zu verwenden, und wenn die zweite U-Phasen-Rückkopplungsspannung nicht gleich dem ersten U-Phasenstandardwert ist, zu bestimmen, dass der U-Phasen-Oberbrücken-Feldeffekttransistor (Q1) einen unterbrochenen Schaltungsfehler aufweist;

wenn die zweite U-Phasen-Rückkopplungsspannung gleich dem ersten U-Phasenstandardwert ist, die Mikrosteuerung (1) auch verwendet wird, um den U-Phasen-Oberbrücken-Feldeffekttransistor (Q1) zu steuern, um sich auszuschalten, und gleichzeitig den U-Phasen-Unterbrücken-Feldeffekttransistor (Q4) zu steuern, um sich einzuschalten, dann die U-Phasen-Rückkopplungsspannung zu erhalten und sie als eine dritte U-Phasen-Rückkopplungsspannung zu verwenden, und wenn die dritte U-Phasen-Rückkopplungsspannung gleich 0 ist, zu bestimmen, dass sowohl der U-Phasen-Oberbrücken-Feldeffekttransistor (Q1) als auch der U-Phasen-Unterbrücken-Feldeffekttransistor (Q4) normal arbeiten, wenn die dritte U-Phasen-Rückkopplungsspannung nicht gleich 0 ist, zu bestimmen, dass der U-Phasen-Unterbrücken-Feldeffekttransistor (Q4) einen unterbrochenen Schaltungsfehler aufweist;

die Spannung an dem Spannungsteilungsausgangsende entsprechend dem V-Phasenende (1802) eine V-Phasen-Rückkopplungsspannung ist;

die Mikrosteuerung (1) auch verwendet wird, um sowohl den V-Phasen-Oberbrücken-Feldeffekttransistor (Q2) als auch den V-Phasen-Unterbrücken-Feldeffekttransistor (Q5) zu steuern, um sich auszuschalten, dann die V-Phasen-Rückkopplungsspannung zu erhalten und sie als eine erste V-Phasen-Rückkopplungsspannung zu verwenden, wenn die erste V-Phasen-Rückkopplungsspannung gleich einem ersten V-Phasenstandardwert ist, zu bestimmen, dass der V-Phasen-Oberbrücken-Feldeffekttransistor (Q2) einen Kurzschlussfehler aufweist, und wenn die erste V-Phasen-Rückkopplungsspannung gleich 0 ist, zu bestimmen, dass der V-Phasen-Unterbrücken-Feldeffekttransistor (Q5) einen Kurzschlussfehler aufweist, wenn die erste V-Phasen-Rückkopplungsspannung nicht gleich dem ersten V-Phasenstandardwert und nicht gleich 0 und nicht gleich einem zweiten V-Phasenstandardwert ist, zu bestimmen, dass der V-Phasen-Oberbrücken-Feldeffekttransistor (Q2) und der V-Phasen-Unterbrücken-Feldeffekttransistor (Q5) in einem unerwarteten Status sind;

wenn die erste V-Phasen-Rückkopplungsspannung gleich dem zweiten V-Phasenstandardwert ist, die Mikrosteuerung (1) auch verwendet wird, um den V-Phasen-Oberbrücken-Feldeffekttransistor (Q2) zu steuern, um sich einzuschalten, und gleichzeitig den V-Phasen-Unterbrücken-Feldeffekttransistor (Q5) zu steuern, um sich auszuschalten, dann die V-Phasen-Rückkopplungsspannung zu erhalten und sie als eine zweite V-Phasen-Rückkopplungsspannung zu verwenden, und wenn die zweite V-Phasen-Rückkopplungsspannung nicht gleich dem ersten V-Phasenstandardwert ist, zu bestimmen, dass der V-Phasen-Oberbrücken-Feldeffekttransistor (Q2) einen unterbrochenen Schaltungsfehler aufweist;

wenn die zweite V-Phasen-Rückkopplungsspannung gleich dem ersten V-Phasenstandardwert ist, die Mikrosteuerung (1) auch verwendet wird, um den V-Phasen-Oberbrücken-Feldeffekttransistor (Q2) zu steuern, um sich auszuschalten, und gleichzeitig den V-Phasen-Unterbrücken-Feldeffekttransistor (Q5) zu steuern, um sich einzuschalten, dann die V-Phasen-Rückkopplungsspannung zu erhalten und sie als eine dritte V-Phasen-Rückkopplungsspannung zu verwenden, und wenn die dritte V-Phasen-Rückkopplungsspannung gleich 0 ist, zu bestimmen, dass sowohl der V-Phasen-Oberbrücken-Feldeffekttransistor (Q2) als auch der V-Phasen-Unterbrücken-Feldeffekttransistor (Q5) normal arbeiten, wenn die dritte V-Phasen-Rückkopplungsspannung nicht gleich 0 ist, zu bestimmen, dass der V-Phasen-Unterbrücken-Feldeffekttransistor (Q5) einen unterbrochenen Schaltungsfehler aufweist;

die Spannung an dem Spannungsteilungsausgangsende entsprechend dem W-Phasenende (1803) eine W-Phasen-Rückkopplungsspannung ist;

die Mikrosteuerung (1) auch verwendet wird, um sowohl den W-Phasen-Oberbrücken-Feldeffekttransistor (Q3) als auch den W-Phasen-Unterbrücken-Feldeffekttransistor (Q6) zu steuern, um sich auszuschalten, dann die W-Phasen-Rückkopplungsspannung zu erhalten und sie als eine erste W-Phasen-Rückkopplungsspannung zu verwenden, wenn die erste W-Phasen-Rückkopplungsspannung gleich einem ersten W-Phasenstandardwert ist, zu bestimmen, dass der W-Phasen-Oberbrücken-Feldeffekttransistor (Q3) einen Kurzschlussfehler aufweist, und wenn die erste W-Phasen-Rückkopplungsspannung gleich 0 ist, zu bestimmen, dass der W-Phasen-Unterbrücken-Feldeffekttransistor (Q6) einen Kurzschlussfehler aufweist, wenn die erste W-Phasen-Rückkopplungsspannung nicht gleich dem ersten W-Phasenstandardwert und nicht gleich 0 und nicht gleich einem zweiten W-Phasenstandardwert ist, zu bestimmen, dass der W-Phasen-Oberbrücken-Feldeffekttransistor (Q3) und der W-Phasen-Unterbrücken-Feldeffekttransistor (Q6) in einem unerwarteten Status sind;

wenn die erste W-Phasen-Rückkopplungsspannung gleich dem zweiten W-Phasenstandardwert ist, die Mikrosteuerung (1) auch verwendet wird, um den W-Phasen-Oberbrücken-Feldeffekttransistor (Q3) zu steuern, um sich einzuschalten, und gleichzeitig den W-Phasen-Unterbrücken-Feldeffekttransistor (Q6) zu steuern, um sich auszuschalten, dann die W-Phasen-Rückkopplungsspannung zu erhalten und sie als eine zweite W-Phasen-Rückkopplungsspannung zu verwenden, und wenn die zweite W-Phasen-Rückkopplungsspannung nicht gleich dem ersten W-Phasenstandardwert ist, zu bestimmen, dass der W-Phasen-Oberbrücken-Feldeffekttransistor (Q3) einen unterbrochenen Schaltungsfehler aufweist;

wenn die zweite W-Phasen-Rückkopplungsspannung gleich dem ersten W-Phasenstandardwert ist, die Mikrosteuerung (1) auch verwendet wird, um den W-Phasen-Oberbrücken-Feldeffekttransistor (Q3) zu steuern, um sich auszuschalten, und gleichzeitig den W-Phasen-Unterbrücken-Feldeffekttransistor (Q6) zu steuern, um sich einzuschalten, dann die W-Phasen-Rückkopplungsspannung zu erhalten und sie als eine dritte W-Phasen-Rückkopplungsspannung zu verwenden, und wenn die dritte W-Phasen-Rückkopplungsspannung gleich 0 ist, zu bestimmen, dass sowohl der W-Phasen-Oberbrücken-Feldeffekttransistor (Q3) als auch der W-Phasen-Unterbrücken-Feldeffekttransistor (Q6) normal arbeiten, wenn die dritte W-Phasen-Rückkopplungsspannung nicht gleich 0 ist, zu bestimmen, dass der W-Phasen-Unterbrücken-Feldeffekttransistor (Q6) einen unterbrochenen Schaltungsfehler aufweist.

3. Steuerschaltung der elektrischen Servolenkung nach Anspruch 1, die **dadurch gekennzeichnet ist, dass** die Hochziehschaltung (1401, 1402, 1403) entsprechend dem U-Phasenende (1801) einen ersten Widerstand (R1) beinhaltet, die Spannungsteilungsschaltung (1404, 1405, 1406) entsprechend dem U-Phasenende (1801) einen zweiten Widerstand (R2) und einen dritten Widerstand (R3) beinhaltet und ein Ende des ersten Widerstands (R1) elektrisch mit der Fahrzeugleistungsversorgung verbunden ist und beide von dem anderen Ende des ersten Widerstands (R1) und einem Ende des zweiten Widerstands (R2) elektrisch mit dem ursprünglichen Spannungsende der Spannungsteilungsschaltung (1404, 1405, 1406) entsprechend dem U-Phasenende (1801) verbunden sind und beide von dem anderen Ende des zweiten Widerstands (R2) und einem Ende des dritten Widerstands (R3) elektrisch mit dem Spannungsteilungsausgangsende der Spannungsteilungsschaltung (1404, 1405, 1406) entsprechend dem U-Phasenende (1801) verbunden sind und das andere Ende des dritten Widerstands (R13) geerdet ist;

die Hochziehschaltung (1401, 1402, 1403) entsprechend dem V-Phasenende (1802) einen vierten Widerstand (R4) beinhaltet und die Spannungsteilungsschaltung entsprechend dem V-Phasenende einen fünften Widerstand (R5) und einen sechsten Widerstand (R6) beinhaltet und ein Ende des vierten Widerstands (R4) elektrisch

EP 4 043 318 B1

mit der Fahrzeugleistungsversorgung verbunden ist und beide von dem anderen Ende des vierten Widerstands (R4) und einem Ende des fünften Widerstands (R5) elektrisch mit dem ursprünglichen Spannungsende der Spannungsteilungsschaltung (1404, 1405, 1406) entsprechend dem V-Phasenende (1802) verbunden sind und beide von dem anderen Ende des fünften Widerstands (R5) und einem Ende des sechsten Widerstands (R6) elektrisch mit dem Spannungsteilungsausgangsende der Spannungsteilungsschaltung (1404, 1405, 1406) entsprechend dem V-Phasenende (1802) verbunden sind und das andere Ende des sechsten Widerstands (R6) geerdet ist;

die Hochziehschaltung (1401, 1402, 1403) entsprechend dem W-Phasenende (1803) einen siebten Widerstand (R7) beinhaltet, die Spannungsteilungsschaltung (1404, 1405, 1406) entsprechend dem W-Phasenende (1803) einen achten Widerstand (R8) und einen neunten Widerstand (R9) beinhaltet und ein Ende des siebten Widerstands (R7) elektrisch mit der Fahrzeugleistungsversorgung verbunden ist und beide von dem anderen Ende des siebten Widerstands (R7) und einem Ende des achten Widerstands (R8) elektrisch mit dem ursprünglichen Spannungsende der Spannungsteilungsschaltung (1404, 1405, 1406) entsprechend dem W-Phasenende (1803) verbunden sind, und beide von dem anderen Ende des achten Widerstands (R8) und einem Ende des neunten Widerstands (R9) elektrisch mit dem Spannungsteilungsausgangsende der Spannungsteilungsschaltung (1404, 1405, 1406) entsprechend dem W-Phasenende (1803) verbunden sind, und das andere Ende des neunten Widerstands (R9) geerdet ist.

4. Abtastverfahren für den Dreiphasenphasenstrom der Steuerschaltung einer elektrischen Servolenkung, das **dadurch gekennzeichnet ist, dass**

das Abtastverfahren durch die Steuerschaltung nach einem der Ansprüche 1 bis 3 realisiert wird;
die Steuerschaltung einen Dreiphasenelektromotor (18), eine Mikrosteuerung (1), ein Dreiphasenbrückenmodul (5), ein Dreiphasenstromabtastschaltungsmodul (8) und einen Dreiphasenbrückenantriebschip (9) beinhaltet;
die Mikrosteuerung (1) verwendet wird, um ein PWM-Steuersignal zu erzeugen und es an den Dreiphasenbrückenantriebschip (9) zu übertragen;
der Dreiphasenbrückenantriebschip (9) verwendet wird, um das Ein- oder Ausschalten jedes Feldeffekttransistors in dem Dreiphasenbrückenmodul (5) gemäß dem PWM-Steuersignal zu steuern;
das Abtastverfahren die folgenden Schritte beinhaltet:

das Dreiphasenstromabtastschaltungsmodul (8) sammelt die Phasenspannungssignale der Unterbrückenarme von zumindest zwei Phasen in dem Dreiphasenbrückenmodul (5) und überträgt die Phasenspannungssignale an den Dreiphasenbrückenantriebschip (9);
ein Differentialoperationsverstärker innerhalb des Dreiphasenbrückenantriebschips (9) verstärkt das Phasenspannungssignal, um das verstärkte Phasenspannungssignal zu erhalten und es an die Mikrosteuerung (1) zu übertragen;
der Analog-Digital-Wandler in der Mikrosteuerung (1) wandelt das verstärkte Phasenspannungssignal in eine digitale Spannung um;
die Mikrosteuerung (1) führt Phasenstromabtastberechnung basierend auf der digitalen Spannung durch, um den tatsächlichen Wert des Phasenstroms zu erhalten, und die Mikrosteuerung (1) verwendet den tatsächlichen Wert des Phasenstroms als ein Rückkopplungssignal der Motorstromsteuerung;
wobei die Mikrosteuerung (1) den Verstärkungswert und den Vorspannungswert des Differentialoperationsverstärkers in dem Stromzyklus gemäß dem tatsächlichen Wert des Phasenstroms in dem vorherigen Zyklus des Stromzyklus und/oder dem Tastverhältnis des PWM-Steuersignals in dem vorherigen Zyklus des Stromzyklus einstellt, um die Abtastgenauigkeit des Phasenstroms des Dreiphasenelektromotors (18) zu steuern.

5. Abtastverfahren für den Dreiphasenphasenstrom der Steuerschaltung einer elektrischen Servolenkung nach Anspruch 4, das **dadurch gekennzeichnet ist, dass**

das Dreiphasenstromabtastschaltungsmodul (8) einen Stromabtastwiderstand zum Sammeln der Phasenspannungssignale der Unterbrückenarme der zwei Phasen in dem Dreiphasenbrückenmodul (5) beinhaltet und die gesammelten Phasenspannungssignale jeweils ein erstes Phasenspannungssignal und ein zweites Phasenspannungssignal sind, der tatsächliche Wert des Phasenstroms entsprechend dem ersten Phasenspannungssignal der tatsächliche Wert des ersten Phasenstroms ist und der tatsächliche Wert des Phasenstroms entsprechend dem zweiten Phasenspannungssignal der tatsächliche Wert des zweiten Phasenstroms ist;
das Abtastverfahren ferner die folgenden Schritte beinhaltet:

32

Berechnen des Wertes der Phasenstromvektorlänge Is gemäß der folgenden Formel

$$I_s = \sqrt{\frac{4}{3}\left(I_{P1}{}^2 + I_{P2}{}^2 + I_{P1} \times I_{P2}\right)};$$

wobei $I_{P1}$ den tatsächlichen Wert des ersten Phasenstroms darstellt und $I_{P2}$ den tatsächlichen Wert des zweiten Phasenstroms darstellt;

der Schritt des Einstellens des Verstärkungswertes und des Vorspannungswertes des Differentialoperationsverstärkers in dem Stromzyklus gemäß dem tatsächlichen Wert des Phasenstroms in dem vorherigen Zyklus des Stromzyklus und/oder dem Tastverhältnis des PWM-Steuersignals in dem vorherigen Zyklus des Stromzyklus die folgenden Schritte beinhaltet:

Aufteilen des gemessenen Stroms gemäß der Phasenstromvektorlänge Is des vorherigen Zyklus des Stromzyklus und/oder dem Tastverhältnis des PWM-Steuersignals des vorherigen Zyklus des Stromzyklus;

Einstellen des Verstärkungswertes und des Vorspannungswertes des Differentialoperationsverstärkers des Stromzyklus gemäß der Aufteilung, in der sich der gemessene Strom befindet;

optional die Schritte des Einstellens des Verstärkungswertes und des Vorspannungswertes des Differentialoperationsverstärkers des Stromzyklus gemäß der Aufteilung, in der sich der gemessene Strom befindet, Folgendes beinhalten:

die Mikrosteuerung (1) stellt den Verstärkungswert und den Vorspannungswert des Differentialoperationsverstärkers des Stromzyklus durch den SPI-Befehl gemäß der Aufteilung ein, in der sich der gemessene Strom befindet.

6. Steuerschaltung einer elektrischen Servolenkung, beinhaltend eine Mikrosteuerung (1), einen Leistungsverwaltungschip (2), ein Leistungsschnittstellenfilterschaltungsmodul (3), ein Gleichspannungsstabilisierungsmodul (4), einen Dreiphasenbrückenantriebschip (9), einen Dreiphasentrennschaltungsantriebschip (10), einen CAN-Sendeempfänger (11) und einen Permanentmagnetsynchronmotor M,

wobei ein Ende der Batterie (12) geerdet ist, das andere Ende der Batterie (12) mit einer Sicherung (13) in Reihe verbunden, dann in zwei Kanäle geteilt ist, die jeweils mit dem Leistungseingangsanschluss des Leistungsverwaltungschips (2) und dem Leistungseingangsanschluss des Leistungsschnittstellenfilterschaltungsmoduls (3) verbunden sind; der Leistungsausganganschluss des Leistungsschnittstellenfilterschaltungsmoduls (3) in zwei Kanäle geteilt ist, die jeweils mit dem Leistungseingangsanschluss des Dreiphasenbrückenantriebschips (9) und dem Stromeingangsanschluss des Gleichspannungsstabilisierungsmoduls (4) verbunden sind, der Stromausgangsanschluss des Gleichspannungsstabilisierungsmoduls (4) mit dem Stromeingangsanschluss des Dreiphasenbrückenmoduls (5) verbunden ist, und der $V_{MCU}$-Anschluss des Leistungsverwaltungschips (2) mit der Mikrosteuerung (1) verbunden ist, der SPI-Anschluss des Leistungsverwaltungschips (2) mit dem SPI-Anschluss der Mikrosteuerung (1) verbunden ist, der SPI-Anschluss der Mikrosteuerung (1) auch mit dem SPI-Anschluss des Dreiphasenbrückenantriebschips (9) und dem SPI-Anschluss des Motoreckpositionssensors (7) verbunden ist, der CAN-Anschluss der Mikrosteuerung (1) mit dem CAN-Sendeempfänger (11) verbunden ist und der Steuersignalausgangsanschluss des Leistungsverwaltungschips (2) und der Steuersignalausgangsanschluss der Mikrosteuerung (1) beide mit dem Signaleingangsanschluss des Dreiphasentrennschaltungsantriebschips (10) verbunden sind, der Signalausgangsanschluss des Dreiphasentrennschaltungsantriebschips (10) mit dem Steuersignalempfangsanschluss des Dreiphasentrennmoduls (6) verbunden ist und der Leistungseingangsanschluss des Dreiphasenbrückenmoduls (5) mit dem Leistungseingangsanschluss des Dreiphasenstromabtastschaltungsmoduls (8) und dem Leistungseingangsanschluss des Dreiphasenbrückenantriebschips (9) verbunden ist, der Signalausgangsanschluss des Dreiphasenbrückenmoduls (5) mit dem Signaleingangsanschluss des Dreiphasentrennmoduls (6) verbunden ist, der Signalausgangsanschluss des Dreiphasentrennmoduls (6) mit dem Signaleingangsanschluss des Permanentmagnetsynchronmotors M verbunden ist und der Signalausgangsanschluss des Permanentmagnetsynchronmotors M mit dem Motoreckpositionssensor (7) verbunden ist; das Dreiphasenstromabtastschaltungsmodul (8) auch mit dem Dreiphasenstromsignaleingangsanschluss des Dreiphasenbrückenantriebschips (9) verbunden ist;

die Steuerschaltung **dadurch gekennzeichnet ist, dass** das Dreiphasentrennmodul (6) auch mit Niedrigleistungsdioden D1 - D3 verbunden ist, sodass eine Motorfreilaufschaltung (15) zwischen dem Dreiphasenbrückenmodul (5), dem Dreiphasentrennmodul (6) und den Niedrigleistungsdioden D1 - D3 gebildet ist;

wobei die Motorfreilaufschaltung (15) wie folgt verbunden ist: der Stromeingangsanschluss des Dreiphasenbrückenmoduls (5) ist in drei Kanäle geteilt, die jeweils mit der Drain-Elektrode des Feldeffekttransistors Q1, der Drain-Elektrode des Feldeffekttransistors Q2 und der Drain-Elektrode des Feldeffekttransistors Q3 verbunden sind, und die Source-Elektrode des Feldeffekttransistors Q1 ist in zwei Kanäle geteilt, die jeweils mit der Drain-Elektrode des Feldeffekttransistors Q4 und der Drain-Elektrode des Feldeffekttransistors Q7 verbunden sind, die Source-Elektrode des Feldeffekttransistors Q7 ist mit der U-Phase des Dreiphasenelektromotors verbunden und die Gate-Elektrode des Feldeffekttransistors Q7 ist mit der Kathode der Diode D1 verbunden, die Source-Elektrode des Feldeffekttransistors Q2 ist in zwei Kanäle geteilt, die jeweils mit der Drain-Elektrode des Feldeffekttransistors Q8 und der Drain-Elektrode des Feldeffekttransistors Q5 verbunden sind, und die Gate-Elektrode des Feldeffekttransistors Q8 ist mit der Diode D2 verbunden, die Source-Elektrode des Feldeffekttransistors Q8 ist mit der V-Phase des Dreiphasenelektromotors verbunden und die Source-Elektrode des Feldeffekttransistors Q3 ist in zwei Kanäle geteilt, die jeweils mit der Drain-Elektrode des Feldeffekttransistors Q6 und der Drain-Elektrode des Feldeffekttransistors Q9 verbunden sind, die Gate-Elektrode des Feldeffekttransistors Q9 ist mit der Diode D3 verbunden, die Source-Elektrode des Feldeffekttransistors Q9 ist mit der V-Phase des Dreiphasenelektromotors verbunden, die Source-Elektrode des Feldeffekttransistors Q4, die Source-Elektrode des Feldeffekttransistors Q5 und die Source-Elektrode des Feldeffekttransistors Q6 sind zusammengefügt, dann geerdet, die Anode der Diode D1, die Anode der Diode D2 und die Anode der Diode D3 sind zusammengefügt, dann geerdet;
die Gate-Elektroden der Feldeffekttransistoren Q1 bis Q6 sind zusammengefügt, dann mit dem Dreiphasenbrückenantriebschip (9) verbunden.

7. Steuerschaltung einer elektrischen Servolenkung nach Anspruch 6, die **dadurch gekennzeichnet ist, dass** eine Dreiphasenelektromotorphasenspannungszustandsrückkopplungsschaltung (14) auch zwischen dem Dreiphasenbrückenmodul (5), dem Dreiphasenbrückenantriebschip (9) und der Mikrosteuerung (1) angeordnet und damit verbunden ist.

8. Steuerschaltung einer elektrischen Servolenkung nach Anspruch 6, die **dadurch gekennzeichnet ist, dass** die spezifischen Verbindungsverfahren der Filterschaltung in dem Leistungsschnittstellenfilterschaltungsmodul wie folgt sind: der VBAT-Anschluss ist in neun Kanäle geteilt, die jeweils mit einem Ende des Kondensators C1, einem Ende des Kondensators C2, einem Ende des Kondensators C3, einem Ende des Kondensators C4 und einem Ende des Kondensators C5, einem Ende des Kondensators C6, einem Ende des Kondensators C7, einem Ende des Kondensators C8, einem Ende des Induktors L1 verbunden sind, das andere Ende des Kondensators C1 ist in vier Kanäle geteilt, die jeweils mit HGND, einem Ende des Kondensators C14, dem anderen Ende des Kondensators C2 und einem Ende des Kondensators C15 verbunden sind, das andere Ende des Kondensators C14 ist mit dem anderen Ende des Kondensators C15 zusammengefügt, dann geerdet, das andere Ende des Kondensators C3 ist in elf Kanäle geteilt, die jeweils mit der Erde, dem anderen Ende des Kondensators C4, dem anderen Ende des Kondensators C5 und dem anderen Ende des Kondensators C6, dem anderen Ende des Kondensators C7, dem anderen Ende des Kondensators C8, einem Ende des Kondensators C9, einem Ende des Kondensators C10, einem Ende des Kondensators C16, einem Ende des Kondensators C17 und einem Ende des Kondensators C18 verbunden sind, das andere Ende des Kondensators C9 ist in sechs Kanäle geteilt, die jeweils mit dem anderen Ende des Induktors L1, dem anderen Ende des Kondensators C10, einem Ende des Kondensators C11, einem Ende des Kondensators C12, einem Ende des Kondensators C13 und dem VBAT1-Anschluss verbunden sind, das andere Ende des Kondensators C16 ist mit HGND1 verbunden, das andere Ende des Kondensators C17 ist mit HGND2 verbunden und das andere Ende des Kondensators C18 ist mit HGND3 verbunden und das andere Ende des Kondensators C11, das andere Ende des Kondensators C12 und das andere Ende des Kondensators C13 sind zusammengefügt, dann geerdet;
alternativ sind die HGND, HGND1, HGND2 und HGND3 die Schraubenlöcher an der Metallhülle.

9. Steuerschaltung einer elektrischen Servolenkung nach Anspruch 7, die **dadurch gekennzeichnet ist, dass** die spezifischen Verbindungsverfahren der Dreiphasenelektromotorphasenspannungszustandsrückkopplungsschaltung (14) wie folgt sind: die U-Phase des Dreiphasenelektromotors ist mit der Source-Elektrode des Feldeffekttransistors Q1, der Drain-Elektrode des Feldeffekttransistors Q4, einem Ende des Widerstands R1, einem Ende des Widerstands R2 verbunden, die V-Phase des Dreiphasenelektromotors ist in vier Kanäle geteilt, die jeweils mit der Source-Elektrode des Feldeffekttransistors Q2, der Drain-Elektrode des Feldeffekttransistors Q5, einem Ende des Widerstands R4 und einem Ende des Widerstands R5 verbunden sind, die W-Phase des Dreiphasenelektromotors ist in vier Kanäle geteilt, die jeweils mit der Source-Elektrode des Feldeffekttransistors Q3, der Drain-Elektrode des Feldeffekttransistors Q6, einem Ende des Widerstands R7, einem Ende des Widerstands R8 verbunden sind, die Drain-Elektrode des Feldeffekttransistors Q1, die Drain-Elektrode des Feldeffekttransistors Q2, die Drain-Elektrode des Feldeffekttransistors Q3 sind zusammengefügt, dann mit VBAT verbunden, die Source-Elektrode des Feldeffekttransistors Q4, die Source-Elektrode des Feldeffekttransistors Q5 und die Source-Elektrode des Feldeffekttransistors Q6 sind zusammengefügt, dann geerdet, das andere Ende des Widerstands R1, das andere Ende des Widerstands R4, das andere Ende des Widerstands R7 sind mit VBAT verbunden, das andere Ende des Widerstands R2 ist in drei Kanäle geteilt, die jeweils mit einem Ende des Widerstands R3, einem Ende des Kondensators C21 und dem AD1-Anschluss von MCU verbunden sind, das andere Ende des Widerstands R5 ist in drei Kanäle geteilt, die jeweils mit einem Ende des Widerstands R6, einem Ende des Kondensators C22 und dem AD2-Anschluss von MCU verbunden sind, das andere Ende des Widerstands R8 ist in drei Kanäle geteilt, die jeweils mit einem Ende des Widerstands R9, einem Ende des Kondensators C23 und dem AD3-Anschluss von MCU verbunden sind, das andere Ende des Widerstands R3 und das andere Ende des Kondensators C21 sind zusammengefügt, dann geerdet, das andere Ende des Widerstands R6 und das andere Ende des Kondensators C22 sind zusammengefügt, dann geerdet, das andere Ende des Widerstands R9 und das andere Ende des Kondensators C23 sind zusammengefügt, dann geerdet;

die Gate-Elektroden der Feldeffekttransistoren Q1 bis Q6 sind zusammengefügt, dann mit dem Dreiphasenbrückenantriebschip (9) verbunden;
optional kann die Dreiphasenelektromotorphasenspannungszustandsrückkopplungsschaltung (14) die Einschaltfehlerdiagnose der Dreiphasenbrücke durchführen.

10. Steuerverfahren der Steuerschaltung einer elektrischen Servolenkung nach Anspruch 6, das **dadurch gekennzeichnet ist, dass** es gemäß den folgenden Schritten durchgeführt wird:

S1. Voreinstellen einer Boost-Kurve oder eines Boost-Modells in der Mikrosteuerung (1);
S2. die Mikrosteuerung (1) sammelt ein Automobilzündsignal, ein Fahrzeuggeschwindigkeitssignal, ein Lenkraddrehmomentsignal und ein Lenkraddrehwinkelsignal;
S3'. basierend auf der Boost-Kurve oder dem Boost-Modell und gemäß den relevanten Daten, die in S2 gesammelt werden, Erhalten einer Stromsignaleinstellung und einer Drehgeschwindigkeitssignaleinstellung;
S3. das Dreiphasenstromabtastmodul (8) führt hochpräzise Abtastung für die drei Phasenströme durch, um die tatsächlichen Dreiphasenstromsignale des Motors zu erhalten, und überträgt das Signal an die Mikrosteuerung (1); die Aktion synchron dazu: der Motordrehwinkelpositionssensor (7) überträgt das synchron gesammelte tatsächliche Drehgeschwindigkeitssignal des Motors an die Mikrosteuerung (1);
S4. die Mikrosteuerung (1) überträgt synchron die tatsächlichen Dreiphasenstromsignale des Motors, das tatsächliche Drehgeschwindigkeitssignal des Motors und die entsprechende Stromsignaleinstellung, die Drehgeschwindigkeitssignaleinstellung jeweils an die Motorstromsteuerung mit geschlossenem Regelkreis und die Motordrehgeschwindigkeitssteuerung mit geschlossenem Regelkreis innerhalb der Mikrosteuerung (1) und führt eine Verarbeitung mit geschlossenem Regelkreis durch, um ein Stromsteuersignal und ein Drehgeschwindigkeitssteuersignal zu erhalten;
S5. Übertragen des Stromsteuersignals und des Drehgeschwindigkeitssteuersignals an den PWM-Modulator in der Mikrosteuerung (1), um ein Dreiphasenbrückensteuersignal zu erzeugen;
S6. Übertragen des Dreiphasenbrückensteuersignals an den Dreiphasenbrückenantriebschip (9), um das Ein-/Ausschalten der sechs Feldeffekttransistoren Q1 - Q6 in dem Dreiphasenbrückenmodul (5) anzutreiben, um den Motor zu steuern, um entsprechende motorverstärkte Leistung zu erzeugen;
optional sind die spezifischen Schritte des Dreiphasenstromhochpräzisionsabtastverfahrens, das in Schritt S3 beschrieben ist, wie folgt:

Schritt 1: Erhalten der Größe des Phasenstroms in dem vorherigen Zyklus und des Dreiphasen-PWM-Tastverhältnisses;
Schritt 2: Berechnen des tatsächlichen Wertes $I_{PX}$ des Phasenstroms;
Schritt 3: Berechnen des Wertes der Phasenstromvektorlänge $I_s$;
Schritt 4: Berechnen des Wertes der Phasenstromabtastgenauigkeit $I_{cs}$;
Schritt 5: Aufteilen des gemessenen Stroms I gemäß den zwei Bedingungen des Dreiphasen-PWM-Tastverhältnisses oder der Stromvektorlänge Is;
Schritt 6: Modifizieren des Verstärkungswertes AV und der Vorspannung $V_{oos}$ des Verstärkers durch die SPI-Anweisungen in jedem Steuerzyklus des Analog-Digital-Wandlers für verschiedene Regionen, um die Abtastgenauigkeit des Phasenstroms des Dreiphasenelektromotors zu steuern;
X in den obigen Schritten stellt U-Phase, V-Phase und W-Phase in dem Dreiphasenstrom dar;
optional ist das spezifische Berechnungsverfahren von Schritt 2 wie folgt:

(1) Bestimmen der Abtastauflösung 2n des Analog-Digital-Wandlers, jeweils Messen des Abtastwertes $P_{ADCX}$ des Analog-Digital-Wandlers entsprechend den drei Phasen von U, V und W, Einstellen des Referenzspannungswertes $V_{REF}$, und Berechnen der Abtastspannung $V_{CSXO}$ des Analog-Digital-Wandlers,

$$V_{CSXO} = \frac{P_{ADCX}}{2^{2n}} \times V_{REF};$$

(2) Einstellen der Vorspannung $V_{oos}$, Bestimmen des Verstärkungswertes AV des Verstärkers, und Berechnen der Spannung $\Delta V_{IOS}$ über den Abtastwiderstand, $\Delta V_{IOS} = \frac{V_{CSXO} - V_{OOS}}{AV}$ ;

(3) Berechnen des Abtaststroms IX durch den Abtastwiderstand gemäß dem Widerstandswert R des Abtastwiderstands, $I_X = \frac{\Delta V_{IOS}}{R}$ ;

(4) Messen des Nullstroms $I_{x0}$ des Abtastwiderstands und der Abtastspannung $V_{X0}$ des Analog-Digital-Wandlers unter dem Nullstromzustand und Berechnen des Phasenstromabtastwertes gemäß dem gemessenen Wert, $I_{ps} = I_X - I_{X0}$;

(5) Berechnen des tatsächlichen Wertes $I_{PX}$ des Phasenstroms gemäß dem Stromvorspannungswert $I_{OFF}$ verursacht durch den Verbindungsfehler in der Schaltungsverbindung und der Koeffizientenänderung K verursacht durch die äußeren Umgebungsfaktoren, $I_{PX} = K\, I_{ps} + I_{OFF}$.

11. Steuerverfahren der Steuerschaltung der elektrischen Servolenkung nach Anspruch 10, das **dadurch gekennzeichnet ist, dass** das Berechnungsverfahren in Schritt 3 dazu dient, die Stromvektorlänge Is,

$$I_s = \sqrt{\frac{4}{3}\left(I_{PU}^2 + I_{PW}^2 + I_{PU} \times I_{PW}\right)}$$

gemäß dem berechneten tatsächlichen U-Phasenstromwert IPu und dem tatsächlichen W-Phasenstromwert IPW zu berechnen.

12. Steuerverfahren der Steuerschaltung der elektrischen Servolenkung nach Anspruch 10, das **dadurch gekennzeichnet ist, dass** das spezifische Berechnungsverfahren von Schritt 4 wie folgt ist: zuerst Berechnen der Abtastgenauigkeit des Einphasenstroms $I_{CX} = \frac{I_X \text{Auflösung}}{I_{ps}} = \frac{V_{REF}}{I_{ps}*R*AV*2^{2n}}$ , , wobei Ips der Phasenstromabtastwert ist, und IX-Auflösung der IX-Einheitswert ist, der in der minimalen Einheit gesammelt wird; zweitens Berechnen der Abtastgenauigkeit ICS der Stromvektorlänge IS, $I_{CS} = \frac{I_s \text{ Auflösung}}{I} = \frac{2V_{REF}}{I*R*AV*2^{2n}}$ , wobei I der gemessene Strombereich ist und Is-Auflösung der Is-Einheitswert ist, der in der minimalen Einheit gesammelt wird.

## Revendications

1. Circuit de contrôleur d'un système de direction assistée électrique, comprenant un moteur électrique triphasé (18), un microcontrôleur (1), un module de pont triphasé (5) et un circuit à rétroaction d'état de tension de phase de moteur électrique triphasé (14) ;

   le microcontrôleur (1) comprend au moins trois extrémités de collecte de tension de conversion analogique-numérique ;
   le moteur électrique triphasé (18) comprend une extrémité de phase U (1801), une extrémité de phase V (1802) et une extrémité de phase W (1803) ;
   le module de pont triphasé (5) comprend un transistor à effet de champ à pont supérieur de phase U (Q1), un transistor à effet de champ à pont inférieur de phase U (Q4), un transistor à effet de champ à pont supérieur de phase V (Q2), un transistor à effet de champ à pont inférieur de phase V (Q5), un transistor à effet de champ à pont supérieur de phase W (Q3) et un transistor à effet de champ à pont inférieur de phase W (Q6) ;
   le circuit à rétroaction d'état de tension de phase de moteur électrique triphasé (14) comprend trois circuits de division de tension (1404, 1405, 1406), chacun des circuits de division de tension (1404, 1405, 1406) comprend une extrémité de tension d'origine, une extrémité de sortie de division de tension et une extrémité de masse, et les trois extrémités de tension d'origine sont connectées une par une de manière correspondante à l'extrémité de phase U (1801), l'extrémité de phase V (1802) et l'extrémité de phase W (1803) ;
   les trois extrémités de sortie de division de tension sont électriquement connectées aux trois extrémités de collecte de tension de conversion analogique-numérique dans une correspondance une à une ;

le circuit de division de tension (1404, 1405, 1406) est utilisé pour diviser la tension de phase du moteur électrique triphasé (18) pour qu'elle se situe dans la plage de tension prise en charge par l'extrémité de collecte de tension de conversion analogique-numérique ;

l'extrémité de phase U (1801) est électriquement connectée à l'électrode de source du transistor à effet de champ à pont supérieur de phase U (Q1), à l'électrode de drain du transistor à effet de champ à pont inférieur de phase U (Q4) et à l'extrémité de tension d'origine du circuit de division de tension correspondant (1404, 1405, 1406) ;

l'extrémité de phase V (1802) est électriquement connectée à l'électrode de source du transistor à effet de champ à pont supérieur de phase V (Q2), l'électrode de drain du transistor à effet de champ à pont inférieur de phase V (Q5) et l'extrémité de tension d'origine du circuit de division de tension correspondant (1404, 1405, 1406) ;

l'extrémité de phase W (1803) est électriquement connectée à l'électrode de source du transistor à effet de champ à pont supérieur de phase W (Q3), l'électrode de drain du transistor à effet de champ à pont inférieur de phase W (Q6) et l'extrémité de tension d'origine du circuit de division de tension correspondant (1404, 1405, 1406) ;

dans lequel le circuit à rétroaction d'état de tension de phase de moteur électrique triphasé (14) comprend en outre trois circuits de tirage vers le haut (1401, 1402, 1403), et les trois circuits de tirage vers le haut (1401, 1402, 1403) sont utilisés pour le tirage vers le haut de l'extrémité de phase U (1801), l'extrémité de phase V (1802) et l'extrémité de phase W (1803) dans une correspondance une-à-une ;

le microcontrôleur (1) est utilisé pour effectuer un diagnostic de panne de mise sous tension pour le transistor à effet de champ à pont supérieur de phase U (Q1) et/ou le transistor à effet de champ à pont inférieur de phase U (Q4), en commandant la mise sous ou hors tension du transistor à effet de champ à pont supérieur de phase U (Q1) et du transistor à effet de champ à pont inférieur de phase U (Q4) respectivement, et sur la base de la tension collectée par l'extrémité de collecte de tension de conversion analogique-numérique correspondante ; le microcontrôleur (1) est également utilisé pour effectuer un diagnostic de panne de mise sous tension pour le transistor à effet de champ à pont supérieur de phase V (Q2) et/ou le transistor à effet de champ à pont inférieur de phase V (Q5), en commandant la mise sous ou hors tension du transistor à effet de champ à pont supérieur de phase V (Q2) et du transistor à effet de champ à pont inférieur de phase V (Q5) respectivement, et sur la base de la tension collectée par l'extrémité de collecte de tension de conversion analogique-numérique correspondante ; le microcontrôleur (1) est également utilisé pour effectuer un diagnostic de panne de mise sous tension pour le transistor à effet de champ à pont supérieur de phase W (Q3) et/ou le transistor à effet de champ à pont inférieur de phase W (Q6), en commandant la mise sous ou hors tension du transistor à effet de champ à pont supérieur de phase W (Q3) et du transistor à effet de champ à pont inférieur de phase W (Q6) respectivement, et sur la base de la tension collectée par l'extrémité de collecte de tension de conversion analogique-numérique correspondante ;

le circuit de contrôleur est **caractérisé en ce que** le circuit de contrôleur comprend en outre un module de séparation triphasé (6), le module de séparation triphasé (6) est connecté en série entre le moteur électrique triphasé (18) et le module de pont triphasé (5), et le module de séparation triphasé (6) est utilisé pour couper la connexion entre le moteur électrique triphasé (18) et le module de pont triphasé (5) lorsque le contrôleur du système de direction tombe en panne ;

dans lequel le module de séparation triphasé (6) comprend un transistor à effet de champ à séparation de phase U (Q7), un transistor à effet de champ à séparation de phase V (Q8) et un transistor à effet de champ à séparation de phase W (Q9) ; le circuit de contrôleur comprend également un circuit de roue libre de moteur (15) ; le circuit de roue libre de moteur (15) comprend une diode de phase U (D1), une diode de phase V (D2) et une diode de phase W (D3) ; et l'anode de la diode de phase U (D1), l'anode de la diode de phase V (D2) et l'anode de la diode de phase W (D3) sont toutes mises à la terre ;

l'électrode de grille du transistor à effet de champ à séparation de phase U (Q7) est électriquement connectée à la cathode de la diode de phase U (D1), l'électrode de source du transistor à effet de champ à séparation de phase U (Q7) est électriquement connectée à la borne de phase U (1801) et l'électrode de drain du transistor à effet de champ à séparation de phase U (Q7) est électriquement connectée à l'électrode de source du transistor à effet de champ à pont supérieur de phase U (Q1) ;

l'électrode de grille du transistor à effet de champ à séparation de phase V (Q8) est électriquement connectée à la cathode de la diode de phase V (D2), l'électrode de source du transistor à effet de champ à séparation de phase V (Q8) est électriquement connectée à l'extrémité de phase V (1802) et l'électrode de drain du transistor à effet de champ à séparation de phase V (Q8) est électriquement connectée à l'électrode de source du transistor à effet de champ à pont supérieur de phase V (Q2) ;

l'électrode de grille du transistor à effet de champ à séparation de phase W (Q9) est électriquement connectée à la cathode de la diode de phase W (D3), l'électrode de source du transistor à effet de champ à séparation de phase W (Q9) est électriquement connectée à l'extrémité de phase W (1803) et l'électrode de drain du transistor à effet de champ à séparation de phase W (Q9) est électriquement connectée à l'électrode de source du transistor à effet de champ à pont supérieur de phase W (Q3).

**2.** Circuit de contrôleur du système de direction assistée électrique selon la revendication 1, qui est **caractérisé en ce que** la tension à l'extrémité de sortie de division de tension correspondant à l'extrémité de phase U (1801) est une tension de rétroaction de phase U ;

le microcontrôleur (1) est utilisé pour commander la mise hors tension à la fois du transistor à effet de champ à pont supérieur de phase U (Q1) et du transistor à effet de champ à pont inférieur de phase U (Q4), puis obtenir la tension de rétroaction de phase U et l'utiliser comme première tension de rétroaction de phase U, lorsque la première tension de rétroaction de phase U est égale à une première valeur par défaut de phase U, déterminer que le transistor à effet de champ à pont supérieur de phase U (Q1) comporte un défaut de court-circuit, et lorsque la première tension de rétroaction de phase U est égale à 0, déterminer que le transistor à effet de champ à pont inférieur de phase U (Q4) comporte un défaut de court-circuit, lorsque la première tension de rétroaction de phase U n'est pas égale à la première valeur par défaut de phase U et n'est pas égale à 0 et n'est pas égale à une deuxième valeur par défaut de phase U, déterminer que le transistor à effet de champ à pont supérieur de phase U (Q1) et le transistor à effet de champ à pont inférieur de phase de phase U (Q4) sont dans un statut inattendu ;

lorsque la première tension de rétroaction de phase U est égale à la deuxième valeur par défaut de phase U, le microcontrôleur (1) est également utilisé pour commander la mise sous tension du transistor à effet de champ à pont supérieur de phase U (Q1) et, en même temps, commander la mise hors tension du transistor à effet de champ à pont inférieur de phase U (Q4), puis obtenir la tension de rétroaction de phase U et l'utiliser comme deuxième tension de rétroaction de phase U, et lorsque la deuxième tension de rétroaction de phase U n'est pas égale à la première valeur par défaut de phase U, déterminer que le transistor à effet de champ à pont supérieur de phase U (Q1) comporte un défaut de circuit rompu ;

lorsque la deuxième tension de rétroaction de phase U est égale à la première valeur par défaut de phase U, le microcontrôleur (1) est également utilisé pour commander la mise hors tension du transistor à effet de champ à pont supérieur de phase U (Q1) et, en même temps, commander la mise sous tension du transistor à effet de champ à pont inférieur de phase U (Q4), puis obtenir la tension de rétroaction de phase U et l'utiliser comme troisième tension de rétroaction de phase U, et lorsque la troisième tension de rétroaction de phase U est égale à 0, déterminer que le transistor à effet de champ à pont supérieur de phase U (Q1) et le transistor à effet de champ à pont inférieur de phase U (Q4) fonctionnent tous les deux normalement, lorsque la troisième tension de rétroaction de phase U n'est pas égale à 0, déterminer que le transistor à effet de champ à pont inférieur de phase U (Q4) comporte un défaut de circuit rompu ;

la tension à l'extrémité de sortie de division de tension correspondant à l'extrémité de phase V (1802) est une tension de rétroaction de phase V ;

le microcontrôleur (1) est également utilisé pour commander la mise hors tension à la fois du transistor à effet de champ à pont supérieur de phase V (Q2) et du transistor à effet de champ à pont inférieur de phase V (Q5), puis obtenir la tension de rétroaction de phase V et l'utiliser comme première tension de rétroaction de phase V, lorsque la première tension de rétroaction de phase V est égale à une première valeur par défaut de phase V, déterminer que le transistor à effet de champ à pont supérieur de phase V (Q2) comporte un défaut de court-circuit, et lorsque la première tension de rétroaction de phase V est égale à 0, déterminer que le transistor à effet de champ à pont inférieur de phase V (Q5) comporte un défaut de court-circuit, lorsque la première tension de rétroaction de phase V n'est pas égale à la première valeur par défaut de phase V et n'est pas égale à 0 et n'est pas égale à une deuxième valeur par défaut de phase V, déterminer que le transistor à effet de champ à pont supérieur de phase V (Q2) et le transistor à effet de champ à pont inférieur de phase V (Q5) sont dans un statut inattendu ;

lorsque la première tension de rétroaction de phase V est égale à la deuxième valeur par défaut de phase V, le microcontrôleur (1) est également utilisé pour commander la mise sous tension du transistor à effet de champ à pont supérieur de phase V (Q2) et, en même temps, commander la mise hors tension du transistor à effet de champ à pont inférieur de phase V (Q5), puis obtenir la tension de rétroaction de phase V et l'utiliser comme deuxième tension de rétroaction de phase V, et lorsque la deuxième tension de rétroaction de phase V n'est pas égale à la première valeur par défaut de phase V, déterminer que le transistor à effet de champ à pont supérieur de phase V (Q2) comporte un défaut de circuit rompu ;

lorsque la deuxième tension de rétroaction de phase V est égale à la première valeur par défaut de phase V, le microcontrôleur (1) est également utilisé pour commander la mise hors tension du transistor à effet de champ à pont supérieur de phase V (Q2) et, en même temps, commander la mise sous tension du transistor à effet de champ à pont inférieur de phase V (Q5), puis obtenir la tension de rétroaction de phase V et l'utiliser comme troisième tension de rétroaction de phase V, et lorsque la troisième tension de rétroaction de phase U est égale à 0, déterminer que le transistor à effet de champ à pont supérieur de phase V (Q2) et le transistor à effet de champ à pont inférieur de phase V (Q5) fonctionnent tous les deux normalement, lorsque la troisième tension de rétroaction de phase V n'est pas égale à 0, déterminer que le transistor à effet de champ à pont inférieur de phase V (Q5) comporte un défaut de circuit rompu ;

la tension à l'extrémité de sortie de division de tension correspondant à l'extrémité de phase W (1803) est une tension de rétroaction de phase W ;

le microcontrôleur (1) est également utilisé pour commander la mise hors tension à la fois du transistor à effet de champ à pont supérieur de phase W (Q3) et du transistor à effet de champ à pont inférieur de phase W (Q6), puis obtenir la tension de rétroaction de phase W et l'utiliser comme première tension de rétroaction de phase W, lorsque la première tension de rétroaction de phase W est égale à une première valeur par défaut de phase W, déterminer que le transistor à effet de champ à pont supérieur de phase W (Q3) comporte un défaut de court-circuit, et lorsque la première tension de rétroaction de phase W est égale à 0, déterminer que le transistor à effet de champ à pont inférieur de phase W (Q6) comporte un défaut de court-circuit, lorsque la première tension de rétroaction de phase W n'est pas égale à la première valeur par défaut de phase W et n'est pas égale à 0 et n'est pas égale à une deuxième valeur par défaut de phase W, déterminer que le transistor à effet de champ à pont supérieur de phase W (Q3) et le transistor à effet de champ à pont inférieur de phase W (Q6) sont dans un statut inattendu ;

lorsque la première tension de rétroaction de phase W est égale à la deuxième valeur par défaut de phase W, le microcontrôleur (1) est également utilisé pour commander la mise sous tension du transistor à effet de champ à pont supérieur de phase W (Q3) et, en même temps, commander la mise hors tension du transistor à effet de champ à pont inférieur de phase W (Q6), puis obtenir la tension de rétroaction de phase W et l'utiliser comme deuxième tension de rétroaction de phase W, et lorsque la deuxième tension de rétroaction de phase W n'est pas égale à la première valeur par défaut de phase W, déterminer que le transistor à effet de champ à pont supérieur de phase W (Q3) comporte un défaut de circuit rompu ;

lorsque la deuxième tension de rétroaction de phase W est égale à la première valeur par défaut de phase W, le microcontrôleur (1) est également utilisé pour commander la mise hors tension du transistor à effet de champ à pont supérieur de phase W (Q3) et, en même temps, commander la mise sous tension du transistor à effet de champ à pont inférieur de phase W (Q6), puis obtenir la tension de rétroaction de phase W et l'utiliser comme troisième tension de rétroaction de phase W, et lorsque la troisième tension de rétroaction de phase W est égale à 0, déterminer que le transistor à effet de champ à pont supérieur de phase W (Q3) et le transistor à effet de champ à pont inférieur de phase W (Q6) fonctionnent tous les deux normalement, lorsque la troisième tension de rétroaction de phase W n'est pas égale à 0, déterminer que le transistor à effet de champ à pont inférieur de phase W (Q6) comporte un défaut de circuit rompu.

3. Circuit de contrôleur du système de direction assistée électrique selon la revendication 1, qui est **caractérisé en ce que** le circuit de tirage vers le haut (1401, 1402, 1403) correspondant à l'extrémité de phase U (1801) comprend une première résistance (R1), le circuit de division de tension (1404, 1405, 1406) correspondant à l'extrémité de phase U (1801) comprend une deuxième résistance (R2) et une troisième résistance (R3), et une extrémité de la première résistance (R1) est électriquement connectée à l'alimentation électrique du véhicule, et l'autre extrémité de la première résistance (R1) et une extrémité de la deuxième résistance (R2) sont toutes deux électriquement connectées à l'extrémité de tension d'origine du circuit de division de tension (1404, 1405, 1406) correspondant à l'extrémité de phase U (1801), et l'autre extrémité de la deuxième résistance (R2) et une extrémité de la troisième résistance (R3) sont toutes deux électriquement connectées à l'extrémité de sortie de division de tension du circuit de division de tension (1404, 1405, 1406) correspondant à l'extrémité de phase U (1801), et l'autre extrémité de la troisième résistance (R13) est mise à la terre ;

le circuit de tirage vers le haut (1401, 1402, 1403) correspondant à l'extrémité de phase V (1802) comprend une quatrième résistance (R4), et le circuit de division de tension correspondant à l'extrémité de phase V comprend une cinquième résistance (R5) et une sixième résistance (R6), et une extrémité de la quatrième résistance (R4) est électriquement connectée à l'alimentation du véhicule, et l'autre extrémité de la quatrième résistance (R4) et une extrémité de la cinquième résistance (R5) sont toutes deux électriquement connectées à l'extrémité de tension d'origine du circuit de division de tension (1404, 1405, 1406) correspondant à l'extrémité de phase V (1802), et l'autre extrémité de la cinquième résistance (R5) et une extrémité de la sixième résistance (R6) sont toutes deux électriquement connectées à l'extrémité de sortie de division de tension du circuit de division de tension (1404, 1405, 1406) correspondant à l'extrémité de phase V (1802), et l'autre extrémité de la sixième résistance (R6) est mise à la terre ;

le circuit de tirage vers le haut (1401, 1402, 1403) correspondant à l'extrémité de phase W (1803) comprend une septième résistance (R7), le circuit de division de tension (1404, 1405, 1406) correspondant à l'extrémité de phase W (1803) comprend une huitième résistance (R8) et une neuvième résistance (R9), et une extrémité de la septième résistance (R7) est électriquement connectée à l'alimentation électrique du véhicule, et l'autre extrémité de la septième résistance (R7) et une extrémité de la huitième résistance (R8) sont toutes deux connectées électriquement à l'extrémité de tension d'origine du circuit de division de tension (1404, 1405, 1406) correspondant à l'extrémité de phase W (1803), et l'autre extrémité de la huitième résistance (R8) et une extrémité de la neuvième résistance (R9) sont toutes deux électriquement connectées à l'extrémité de sortie de division de tension du circuit de division de tension (1404, 1405, 1406) correspondant à l'extrémité de phase W (1803), et l'autre extrémité de la neuvième résistance (R9) est mise à la terre.

**4.** Procédé d'échantillonnage pour le courant de phase triphasé du circuit de contrôleur d'un système de direction assistée électrique, qui est **caractérisé en ce que**,

le procédé d'échantillonnage est réalisé par le circuit contrôleur selon l'une quelconque des revendications 1 à 3 ;
le circuit de contrôleur comprend un moteur électrique triphasé (18), un microcontrôleur (1), un module de pont triphasé (5), un module de circuit d'échantillonnage de courant de phase triphasé (8) et une puce d'attaque de pont triphasé (9) ;
le microcontrôleur (1) est utilisé pour générer un signal de commande PWM et le transmettre à la puce d'attaque de pont triphasé (9) ;
la puce d'attaque de pont triphasé (9) est utilisée pour commander la marche ou l'arrêt de chaque transistor à effet de champ dans le module de pont triphasé (5) en fonction du signal de commande PWM ;
le procédé d'échantillonnage comprend les étapes suivantes :

le module de circuit d'échantillonnage de courant de phase triphasé (8) collecte les signaux de tension de phase des bras de pont inférieur d'au moins deux phases dans le module de pont triphasé (5), et transmet les signaux de tension de phase à la puce d'attaque de pont triphasé (9) ;
un amplificateur opérationnel différentiel à l'intérieur de la puce d'attaque de pont triphasé (9) amplifie le signal de tension de phase pour obtenir le signal de tension de phase amplifié et le transmettre au microcontrôleur (1) ;
le convertisseur analogique-numérique dans le microcontrôleur (1) convertit le signal de tension de phase amplifié en une tension numérique ;
le microcontrôleur (1) effectue un calcul d'échantillonnage de courant de phase sur la base de la tension numérique pour obtenir la valeur réelle du courant de phase, et le microcontrôleur (1) utilise la valeur réelle du courant de phase comme signal de rétroaction de la commande de courant de moteur ;
dans lequel, le microcontrôleur (1) règle la valeur de gain et la valeur de tension de polarisation de l'amplificateur opérationnel différentiel dans le cycle de courant en fonction de la valeur réelle du courant de phase dans le cycle précédent du cycle de courant et/ou du rapport cyclique du signal de commande PWM dans le cycle précédent du cycle de courant, pour commander la précision d'échantillonnage du courant de phase du moteur électrique triphasé (18).

**5.** Procédé d'échantillonnage pour le courant de phase triphasé du circuit de contrôleur d'un système de direction assistée électrique, selon la revendication 4, qui est **caractérisé en ce que**,

le module de circuit d'échantillonnage de courant de phase triphasé (8) comprend une résistance d'échantillonnage de courant pour collecter les signaux de tension de phase des bras de pont inférieur des deux phases dans le module de pont triphasé (5), et les signaux de tension de phase collectés sont un premier signal de tension de phase et un deuxième signal de tension de phase respectivement, la valeur réelle du courant de phase correspondant au premier signal de tension de phase est la valeur réelle du premier courant de phase, et la valeur réelle du courant de phase correspondant au deuxième signal de tension de phase est la valeur réelle du deuxième courant de phase ;
le procédé d'échantillonnage comprend en outre les étapes suivantes :

calcul de la valeur de la longueur de vecteur de courant de phase Is selon la formule suivante,

$$I_s = \sqrt{\frac{4}{3}\left(I_{P1}{}^2 + I_{P2}{}^2 + I_{P1} \times I_{P2}\right)};$$

dans laquelle, $I_{P1}$ représente la valeur réelle du premier courant de phase et $I_{P2}$ représente la valeur réelle du deuxième courant de phase ;
l'étape de réglage de la valeur de gain et la valeur de tension de polarisation de l'amplificateur opérationnel différentiel dans le cycle de courant en fonction de la valeur réelle du courant de phase dans le cycle précédent du cycle de courant et/ou du rapport cyclique du signal de commande PWM dans le cycle précédent du cycle de courant comprend les étapes suivantes :

répartition du courant mesuré en fonction de la longueur de vecteur de courant de phase Is du cycle précédent du cycle de courant et/ou du rapport cyclique du signal de commande PWM du cycle précédent du cycle de courant ;

réglage de la valeur de gain et de la valeur de tension de polarisation de l'amplificateur opérationnel différentiel du cycle de courant en fonction de la répartition où se trouve le courant mesuré ;

éventuellement, les étapes de réglage de la valeur de gain et la valeur de tension de polarisation de l'amplificateur opérationnel différentiel du cycle de courant en fonction de la répartition où se trouve le courant mesuré comprend :

le microcontrôleur (1) règle la valeur de gain et la valeur de tension de polarisation de l'amplificateur opérationnel différentiel du cycle de courant par la commande SPI en fonction de la répartition où se trouve le courant mesuré.

6. Circuit de contrôleur d'un système de direction assistée électrique, comprenant un microcontrôleur (1), une puce de gestion d'alimentation (2), un module de circuit de filtre d'interface d'alimentation (3), un module de stabilisation de tension CC (4), une puce d'attaque de pont triphasé (9), une puce d'attaque de circuit de séparation triphasé (10), un émetteur-récepteur CAN (11) et un moteur synchrone à aimant permanent M, dans lequel une extrémité de la batterie (12) est mise à la terre, l'autre extrémité de la batterie (12) est connectée à un fusible (13) en série puis divisée en deux canaux, qui sont respectivement connectés au port d'entrée d'alimentation de la puce de gestion d'alimentation (2) et au port d'entrée d'alimentation du module de circuit de filtre d'interface d'alimentation (3) ; le port de sortie d'alimentation du module de circuit de filtre d'interface d'alimentation (3) est divisé en deux canaux, qui sont respectivement connectés au port d'entrée d'alimentation de la puce d'attaque de pont triphasé (9) et au port d'entrée de courant du module de stabilisation de tension CC (4), le port de sortie de courant du module de stabilisation de tension CC (4) est connecté au port d'entrée de courant du module de pont triphasé (5), et le port V$_{MCU}$ de la puce de gestion d'alimentation (2) est connecté au microcontrôleur (1), le port SPI de la puce de gestion d'alimentation (2) est connecté au port SPI du microcontrôleur (1), le port SPI du microcontrôleur (1) est également connecté au port SPI de la puce d'attaque de pont triphasé (9) et au port SPI du capteur de position d'angle de moteur (7), le port CAN du microcontrôleur (1) est connecté à l'émetteur-récepteur CAN (11), et le port de sortie de signal de commande de la puce de gestion d'alimentation (2) et le port de sortie de signal de commande du microcontrôleur (1) sont tous deux connectés au port d'entrée de signal de la puce d'attaque de circuit de séparation triphasé (10), le port de sortie de signal de la puce d'attaque de circuit de séparation triphasé (10) est connecté au port de réception de signal de commande du module de séparation triphasé (6), et le port d'entrée d'alimentation du module de pont triphasé (5) est connecté au port d'entrée d'alimentation du module de circuit d'échantillonnage de courant triphasé (8) et au port d'entrée d'alimentation de la puce d'attaque de pont triphasé (9), le port de sortie de signal du module de pont triphasé (5) est connecté au port d'entrée de signal du module de séparation triphasé (6), le port de sortie de signal du module de séparation triphasé (6) est connecté au port d'entrée de signal du moteur synchrone à aimant permanent M, et le port de sortie de signal du moteur synchrone à aimant permanent M est connecté au capteur de position d'angle de moteur (7) ; le module de circuit d'échantillonnage de courant de phase triphasé (8) est également connecté au port d'entrée de signal de courant triphasé de la puce d'attaque de pont triphasé (9) ;

le circuit de contrôleur est **caractérisé en ce que** le module de séparation triphasé (6) est également connecté à des diodes de faible puissance D1 - D3, de sorte qu'un circuit de roue libre de moteur (15) soit formé entre le module de pont triphasé (5), le module de séparation triphasé (6) et les diodes de faible puissance D1 - D3 ; dans lequel le circuit de roue libre de moteur (15) est connecté comme suit : le port d'entrée de courant du module de pont triphasé (5) est divisé en trois canaux, qui sont respectivement connectés à l'électrode de drain du transistor à effet de champ Q1, à l'électrode de drain du transistor à effet de champ Q2 et à l'électrode de drain du transistor à effet de champ Q3, et l'électrode de source du transistor à effet de champ Q1 est divisée en deux canaux, qui sont respectivement connectés à l'électrode de drain du transistor à effet de champ Q4 et à l'électrode de drain du transistor à effet de champ Q7, l'électrode de source du transistor à effet de champ Q7 est connectée à la phase U du moteur électrique triphasé, et l'électrode de grille du transistor à effet de champ Q7 est connectée à la cathode de la diode D1, l'électrode de source du transistor à effet de champ Q2 est divisée en deux canaux, qui sont respectivement connectés à l'électrode de drain du transistor à effet de champ Q8 et à l'électrode de drain du transistor à effet de champ Q5, et l'électrode de grille du transistor à effet de champ Q8 est connectée à la diode D2, l'électrode de source du transistor à effet de champ Q8 est connectée à la phase V du moteur électrique triphasé, et l'électrode de source du transistor à effet de champ Q3 est divisée en deux canaux, qui sont respectivement connectés à l'électrode de drain du transistor à effet de champ Q6 et à l'électrode de drain du transistor à effet de champ Q9, l'électrode de grille du transistor à effet de champ Q9 est connectée à la diode D3, l'électrode de source du transistor à effet de champ Q9 est connectée à la phase V du moteur électrique triphasé, l'électrode de source du transistor à effet de champ Q4, l'électrode de source du transistor à effet de champ Q5 et l'électrode de source du transistor à effet de champ Q6 sont reliées les unes aux autres puis mises à la terre, l'anode de la diode D1, l'anode de la diode D2 et l'anode de la diode D3 sont reliées les unes aux autres puis mises à la terre ;

les électrodes de grille des transistors à effet de champ Q1 à Q6 sont reliées les unes aux autres puis connectées à la puce d'attaque de pont triphasé (9).

7. Circuit de contrôleur d'un système de direction assistée électrique, selon la revendication 6, qui est **caractérisé en ce qu'**un circuit à rétroaction d'état de tension de phase de moteur électrique triphasé (14) est également agencé et connecté entre le module de pont triphasé (5), la puce d'attaque de pont triphasé (9) et le microcontrôleur (1).

8. Circuit de contrôleur d'un système de direction assistée électrique selon la revendication 6, qui est **caractérisé en ce que** les procédés de connexion spécifiques du circuit de filtre dans le module de circuit de filtre d'interface d'alimentation sont les suivants : le port VBAT est divisé en neuf canaux, qui sont respectivement connectés à une extrémité du condensateur C1, une extrémité du condensateur C2, une extrémité du condensateur C3, une extrémité du condensateur C4, et une extrémité du condensateur C5, une extrémité du condensateur C6, une extrémité du condensateur C7, une extrémité du condensateur C8, une extrémité de l'inductance L1, l'autre extrémité du condensateur C1 est divisée en quatre canaux, qui sont respectivement connectés à HGND, une extrémité du condensateur C14, l'autre extrémité du condensateur C2 et une extrémité du condensateur C15, l'autre extrémité du condensateur C14 est reliée à l'autre extrémité du condensateur C15 ensemble puis mises à la terre, l'autre extrémité du condensateur C3 est divisée en onze canaux, qui sont respectivement connectés à la terre, l'autre extrémité du condensateur C4, l'autre extrémité du condensateur C5, et l'autre extrémité du condensateur C6, l'autre extrémité du condensateur C7, l'autre extrémité du condensateur C8, une extrémité du condensateur C9, une extrémité du condensateur C10, une extrémité du condensateur C16, une extrémité du condensateur C17, et une extrémité du condensateur C18, l'autre extrémité du condensateur C9 est divisée en six canaux, qui sont respectivement connectés à l'autre extrémité de l'inductance L1, l'autre extrémité du condensateur C10, une extrémité du condensateur C11, une extrémité du condensateur C12, une extrémité du condensateur C13 et le port VBAT1, l'autre extrémité du condensateur C16 est connectée à HGND1, l'autre extrémité du condensateur C17 est connectée à HGND2, et l'autre extrémité du condensateur C18 est connectée à HGND3, et l'autre extrémité du condensateur C11, l'autre extrémité du condensateur C12 et l'autre extrémité du condensateur C13 sont reliées les unes aux autres puis mises à la terre ;

en variante, HGND, HGND1, HGND2 et HGND3 sont les trous de vis sur la coque métallique.

9. Circuit de contrôleur d'un système de direction assistée électrique, selon la revendication 7, qui est **caractérisé en ce que** les procédés de connexion spécifiques du circuit à rétroaction d'état de tension de phase de moteur électrique triphasé (14) sont les suivants : la phase U du moteur électrique triphasé est connectée à l'électrode de source du transistor à effet de champ Q1, l'électrode de drain du transistor à effet de champ Q4, une extrémité de la résistance R1, une extrémité de la résistance R2, la phase V du moteur électrique triphasé est divisée en quatre canaux, qui sont respectivement connectés à l'électrode de source du transistor à effet de champ Q2, l'électrode de drain du transistor à effet de champ Q5, une extrémité de la résistance R4 et une extrémité de la résistance R5, la phase W du moteur électrique triphasé est divisée en quatre canaux, qui sont respectivement connectés à l'électrode de source du transistor à effet de champ Q3, l'électrode de drain du transistor à effet de champ Q6, une extrémité de la résistance R7, une extrémité de la résistance R8, l'électrode de drain du transistor à effet de champ Q1, l'électrode de drain du transistor à effet de champ Q2, l'électrode de drain du transistor à effet de champ Q3 sont reliées les unes aux autres puis connectées à VBAT, l'électrode de source du transistor à effet de champ Q4, l'électrode de source du transistor à effet de champ Q5 et l'électrode de source du transistor à effet de champ Q6 sont reliées les unes aux autres puis mises à la terre, l'autre extrémité de la résistance R1, l'autre extrémité de la résistance R4, l'autre extrémité de la résistance R7 sont connectées à VBAT, l'autre extrémité de la résistance R2 est divisée en trois canaux, qui sont respectivement connectés à une extrémité de la résistance R3, à une extrémité du condensateur C21 et au port AD1 de MCU, l'autre extrémité de la résistance R5 est divisée en trois canaux, qui sont respectivement connectés à une extrémité de la résistance R6, à une extrémité du condensateur C22 et au port AD2 de MCU, l'autre extrémité de la résistance R8 est divisée en trois canaux, qui sont respectivement connectés à une extrémité de la résistance R9, à une extrémité du condensateur C23 et au port AD3 de MCU, l'autre extrémité de la résistance R3 et l'autre extrémité du condensateur C21 sont reliées les unes aux autres puis mises à la terre, l'autre extrémité de la résistance R6 et l'autre extrémité du condensateur C22 sont reliées l'une à l'autre puis mises à la terre, l'autre extrémité de la résistance R9 et l'autre extrémité du condensateur C23 sont reliées l'une à l'autre puis mises à la terre ;

les électrodes de grille des transistors à effet de champ Q1 à Q6 sont reliées les unes aux autres puis connectées à la puce d'attaque de pont triphasé (9) ;

éventuellement, le circuit à rétroaction d'état de tension de phase de moteur électrique triphasé (14) peut effectuer le diagnostic de défaut de mise sous tension du pont triphasé.

**10.** Procédé de commande du circuit de contrôleur d'un système de direction assistée électrique, selon la revendication 6, qui est **caractérisé en ce qu'**il est réalisé selon les étapes suivantes :

S1. préréglage d'une courbe de suralimentation ou d'un modèle de suralimentation dans le microcontrôleur (1) ;
S2. le microcontrôleur (1) collecte un signal d'allumage d'automobile, un signal de vitesse de véhicule, un signal de couple de volant et un signal d'angle de rotation de volant ;
S3'. sur la base de la courbe d'amplification ou du modèle d'amplification, et selon les données pertinentes collectées à S2, obtention d'un réglage de signal de courant et d'un réglage de signal de vitesse de rotation ;
S3. le module d'échantillonnage de courant de phase triphasé (8) effectue un échantillonnage de haute précision pour les courants triphasés afin d'obtenir les signaux de courant triphasé réels du moteur, et de transmettre le signal au microcontrôleur (1) ; l'action est synchronisée avec ceci : le capteur de position d'angle de rotation du moteur (7) transmet le signal de vitesse de rotation réel du moteur collecté de manière synchrone au microcontrôleur (1) ;
S4. le microcontrôleur (1) transmet de manière synchrone les signaux de courant triphasé réels du moteur, le signal de vitesse de rotation réelle du moteur et le réglage de signal de courant correspondant, le réglage de signal de vitesse de rotation respectivement au contrôleur en boucle fermée de courant de moteur et au contrôleur en boucle fermée de vitesse de rotation de moteur à l'intérieur du microcontrôleur (1), et effectue un traitement de commande en boucle fermée pour obtenir un signal de commande de courant et un signal de commande de vitesse de rotation ;
S5. transmission du signal de commande de courant et du signal de commande de vitesse de rotation au modulateur PWM dans le microcontrôleur (1) pour générer un signal de commande de pont triphasé ;
S6. transmission du signal de commande de pont triphasé à la puce d'attaque de pont triphasé (9) pour commander la marche/arrêt des six transistors à effet de champ Q1 - Q6 dans le module de pont triphasé (5), de manière à commander au moteur de générer une puissance amplifiée de moteur correspondante ;
éventuellement, les étapes spécifiques du procédé d'échantillonnage de haute précision de courant triphasé décrit à l'étape S3 sont les suivantes :

Etape 1 : obtention de l'amplitude du courant de phase dans le cycle précédent et le rapport cyclique PWM triphasé ;
Étape 2 : calcul de la valeur réelle $I_{PX}$ du courant de phase ;
Etape 3 : calcul de la valeur de la longueur de vecteur de courant de phase $I_s$ ;
Etape 4 : calcul de la valeur de la précision d'échantillonnage de courant de phase $I_{cs}$ ;
Etape 5 : répartition du courant mesuré I en fonction des deux conditions du rapport cyclique PWM triphasé ou de la longueur de vecteur de courant Is ;
Etape 6 : modification de la valeur de gain AV et de la tension de polarisation $V_{oos}$ de l'amplificateur à travers les instructions SPI dans chaque cycle de commande du convertisseur analogique-numérique pour différentes régions, de manière à commander la précision d'échantillonnage du courant de phase du moteur électrique triphasé ;
X dans les étapes ci-dessus représente la phase U, la phase V et la phase W dans le courant triphasé ;
éventuellement, la méthode de calcul spécifique de l'étape 2 est la suivante :

(1) détermination de la résolution d'échantillonnage 2n du convertisseur analogique-numérique, mesure respective de la valeur d'échantillonnage $P_{ADCX}$ du convertisseur analogique-numérique correspondant aux trois phases de U, V et W, réglage de la valeur de tension de référence $V_{REF}$, et calcul de la tension d'échantillonnage $V_{CSXO}$ du convertisseur analogique-numérique, $V_{CSXO} = \frac{P_{ADCX}}{2^{2n}} \times V_{REF}$ ;

(2) réglage de la tension de polarisation $V_{oos}$, détermination de la valeur de gain AV de l'amplificateur et calcul de la tension $\Delta V_{IOS}$ aux bornes de la résistance d'échantillonnage, $\Delta V_{IOS} = \frac{V_{CSXO} - V_{oos}}{AV}$ ;

(3) calcul du courant d'échantillonnage IX aux bornes de la résistance d'échantillonnage selon la valeur de résistance R de la résistance d'échantillonnage, $I_X = \frac{\Delta V_{IOS}}{R}$ ;

(4) mesure du courant nul $I_{X0}$ de la résistance d'échantillonnage et la tension d'échantillonnage $V_{X0}$ du convertisseur analogique-numérique sous le statut de courant nul, et calcul de la valeur d'échantillonnage du courant de phase $I_{ps}$ en fonction de la valeur mesurée,

$$I_{ps} = I_X - I_{X0} \; ;$$

(5) calcul de la valeur réelle $I_{PX}$ du courant de phase en fonction de la valeur de polarisation de courant $I_{OFF}$ causée par l'erreur de connexion dans la connexion du circuit et le changement de coefficient K causé par les facteurs environnementaux externes, $I_{PX} = K \, I_{ps} + I_{OFF}$.

**11.** Procédé de commande du circuit de contrôleur du système de direction assistée électrique selon la revendication 10, qui est **caractérisé en ce que** le procédé de calcul à l'étape 3 consiste à calculer la longueur de vecteur de courant Is,

$$I_s = \sqrt{\frac{4}{3}\left(I_{PU}^2 + I_{PW}^2 + I_{PU} \times I_{PW}\right)}$$ en fonction de la valeur de courant réelle de phase U calculée IPu et de la valeur de courant réelle de phase W IPW.

**12.** Procédé de commande du circuit de contrôleur d'un système de direction assistée électrique selon la revendication 10, qui est **caractérisé en ce que** le procédé de calcul spécifique de l'étape 4 est : premièrement, le calcul de la précision d'échantillonnage du courant monophasé

$$I_{CX} = \frac{I_X \; \text{résolution}}{I_{ps}} = \frac{V_{REF}}{I_{ps} * R * AV * 2^{2n}}$$ , dans lequel Ips est la valeur d'échantillonnage du courant de phase, et la résolution IX est la valeur d'unité IX collectée dans l'unité minimale ; deuxièmement, le calcul de la précision d'échantillonnage ICS de la longueur du vecteur de courant IS,

$$I_{CS} = \frac{I_S \; \text{résolution}}{I} = \frac{2 V_{REF}}{I * R * AV * 2^{2n}}$$ , dans laquelle I est la plage de courant mesurée et la résolution Is est la valeur unitaire Is recueillie dans l'unité minimale.

FIG. 1

FIG. 2

FIG. 3

FIG. 4

FIG. 5

FIG. 6

FIG. 7

48

FIG. 8

Turn off U-phase upper and lower bridge MOS transistors at the same time

At the time, if the feedback phase voltage by U-phase is equal to VBAT*(R3)/(R1+R2+R3) — No → At the time, if the feedback phase voltage by U-phase is equal to VBAT*R3/(R2+R3) — No → At the moment, if the feedback phase voltage by U-phase is equal to 0V — No

Yes ↓ Turn on the U-phase upper bridge MOS transistor and turn off the U-phase lower-bridge MOS transistor

Yes ↓ U-phase upper bridge MOS has short circuit fault

Yes ↓ U-phase lower bridge MOS has short circuit fault

U-phase upper and lower bridge MOS's are under abnormal work status, upper and lower bridge MOS's work abnormally

Q1 and Q4 are unexpected status, at this time, the system cannot work normally

At this time, if the feedback phase voltage by U-phase is equal to VBAT*R3/(R2+R3) — No → At the moment, if the feedback phase voltage by U-phase is equal to VBAT*R3/(R1+R2+R3) — No

Yes ↓ Turn on the U-phase upper bridge MOS transistor and turn off the U-phase lower-bridge MOS

Yes ↓ U-phase upper bridge MOS has short circuit fault

U-phase upper bridge MOS work abnormally

At the time, if the feedback phase voltage by U-phase is equal to 0V — No → At the time, if the feedback phase voltage by U-phase is equal to VBAT*(R3)/(R1+R2+R3) — No

Yes ↓ U-phase upper and lower bridge MOS work normally

Yes ↓ U-phase lower bridge MOS has short circuit fault

U-phase lower bridge MOS work abnormally

FIG. 9

ignition signal → MCU boost curve / boost model
vehicle speed signal →
steering wheel torque signal →
steering wheel rotation angle signal →

current signal setting → motor current closed-loop controller
motor actual three phase current signal ↑

rotational speed signal setting → motor rotation speed closed-loop controller
motor actual rotation speed signal ↑

motor current closed-loop controller → current control signal → PWM modulator

motor rotation speed closed-loop controller → rotation speed signal setting → PWM modulator

PWM modulator ⇒ three-phase bridge driving chip ⇒ three-phase bridge module → motor generate motor boosted power

FIG. 10

50

**REFERENCES CITED IN THE DESCRIPTION**

**Patent documents cited in the description**

- CN 105629122 A

- EP 2731257 A1